# EUROPÄISCHE PATENTSCHRIFT

(11) **EP 2 291 277 B1**
(45) Veröffentlichungstag und Bekanntmachung des Hinweises auf die Patenterteilung: **27.06.2012**
(21) Anmeldenummer: 09765490.9
(22) Anmeldetag: 19.05.2009
(51) Int. Cl.: B29C 47/40, B29C 47/60

(54) **Verfahren zur Konstruktion gleichsinnig rotierender sich berührender Körper und Computerprogrammprodukt um das Verfahren durchzuführen**
Method for constructing co-rotating contiguous bodies and computer program product for carrying out said method
Procédé pour la construction de corps corotatifs entrant en contact les uns avec les autres, progiciel pour la mise en oeuvre de ce procédé

(30) Priorität: 20.06.2008 DE 102008029304
(43) Veröffentlichungstag der Anmeldung: 09.03.2011
(73) Patentinhaber: Bayer Technology Services GmbH, 51368 Leverkusen (DE)
(72) Erfinder: BIERDEL, Michael, 51373 Leverkusen (DE); KÖNIG, Thomas, 51375 Leverkusen (DE); LIESENFELDER, Ulrich, 51469 Bergisch Gladbach (DE)
(86) Internationale Anmeldenummer: PCT/EP2009/003549
(87) Internationale Veröffentlichungsnummer: WO 2009/152910

(56) Entgegenhaltungen:
- EP-A2- 1 093 905
- WO-A1-2004/009326
- WO-A2-02/09919
- US-A- 3 195 868
- US-A- 3 900 187
- US-A- 4 063 717
- ISHIKAWA T ET AL: "NUMERICAL SIMULATION AND EXPERIMENTAL VERIFICATION OF NONISOTHERMAL FLOW IN COUNTER-ROTATING NONINTERMESHING CONTINUOUS MIXERS" POLYMER ENGINEERING & SCIENCE, Bd. 40, Nr. 2, 1. Februar 2000 (2000-02-01), Seiten 365-375, XP000926884 WILEY, HOBOKEN, NJ, US ISSN: 0032-3888

## Beschreibung

Die Erfindung betrifft ein Verfahren zur Erzeugung dicht kämmender, selbstreinigender, gleichsinnig drehender Schneckenprofile, ein Computerprogrammprodukt zur Ausführung des Verfahrens auf einem Computersystem, neuartige Schneckenprofile, die durch das Verfahren erzeugt wurden und die Verwendung der Schneckenprofile in Schnecken- und Übergangselementen.

Gleichläufige Zwei- und Mehrwellenextruder sind dem Fachmann aus der Patent- und Fachliteratur bekannt. Beispielhaft sei hier die folgende Veröffentlichung [1] erwähnt: K. Kohlgrüber: "Der gleichläufige Doppelschneckenextruder", Hanser Verlag, 2007. In dieser Veröffentlichung werden der Aufbau, die Funktion und der Betrieb von Zwei- und Mehrwellenextrudern ausführlich erläutert. Ein eigenes Kapitel (Seiten 227 - 248) ist den Schneckenelementen und ihrer Wirkungsweise gewidmet. Hier werden der Aufbau und die Funktion von Förder-, Knet- und Mischelementen detailliert erläutert. Um den Übergang zwischen Schneckenelementen unterschiedlicher Gangzahl zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt. Wenn im Folgenden Schneckenelemente und Schneckenprofile genannt und beschrieben werden, sollen darunter auch Übergangselemente und deren Profile verstanden werden. Die zu den Übergangselementen gehörigen Profile werden auch als Übergangsprofile bezeichnet.

Wie der Fachmann weiß und wie es zum Beispiel in [1] auf den Seiten 96 bis 98 nachzulesen ist, ist das bekannte selbstreinigende Erdmenger-Schneckenprofil durch die Angabe der drei Größen Gangzahl z, Schneckenaußenradius ra und Achsabstand a eindeutig definiert. Die Gangzahl z ist eine ganze Zahl, die größer oder gleich 1 ist. Eine weitere wichtige Kenngröße eines Schneckenprofils ist der Kernradius ri. Eine weitere wichtige Kenngröße eines Schneckenprofils ist die Gangtiefe h.

Wie der Fachmann weiß und wie es zum Beispiel in [1] auf den Seiten 96 bis 98 nachzulesen ist, ist das bekannte selbstreinigende Erdmenger-Schneckenprofil aus Kreisbögen aufgebaut. Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens ist durch die Position seines Mittelpunkts und durch die Position seines Anfangs- oder Endpunkts gegeben, wobei es nicht festgelegt ist, welches der Anfangs- und welches der Endpunkt ist, da ein Kreisbogen ausgehend vom Anfangspunkt und endend im Endpunkt im Uhrzeigersinn oder gegen den Uhrzeigersinn konstruiert werden kann. Anfangs- und Endpunkt sind vertauschbar.

Ein weiter Verfahren zur Ereugung von Schneckenprofile ist aus US 3 900 187 bekannt.

Die bisher bekannten Verfahren zur Erzeugung von dicht kämmenden, selbstreinigenden, gleichsinnig drehenden Schneckenprofilen besitzen den Nachteil, dass sie mathematisch aufwändig sind und immer an spezielle Schneckenprofile wie zum Beispiel dem Erdmenger-Schneckenprofil gebunden sind. Bekannte Verfahren zur Erzeugung von Erdmenger-Schneckenprofilen finden sich z. B. in [1] oder der Veröffentlichung von Booy [2]: *"*Geometry of fully wiped twin-screw equipment", Polymer Engineering and Science 18 (1978) 12, Seiten 973 - 984. In den genannten Veröffentlichungen wird zur Erzeugung von Schneckenprofilen die kinematische Besonderheit ausgenutzt, dass die gleichsinnige Rotation zweier Wellen um ihre ortsfesten Achsen kinematisch gleichwertig mit der "Schiebung ohne Rotation" einer Welle um die andere, dann feststehende Welle ist. Diese Besonderheit kann dazu verwendet werden, schrittweise Schneckenprofile zu erzeugen. Die erste Schnecke (die "erzeugte") steht bei der Betrachtung still und die zweite Schnecke (die "erzeugende") wird um die erste translatorisch auf einem Kreisbogen verschoben. Man kann nun einen Teil des Profils auf der zweiten Schnecke vorgeben und untersuchen, welches Profil auf der ersten Schnecke dadurch erzeugt wird. Die erzeugte Schnecke wird durch die erzeugende gewissermaßen "herausgeschnitten". In [1] ist jedoch kein Verfahren angegeben, wie der Teil auf der zweiten Schnecke, der vorgegeben wird, selbst zu erzeugen ist. In [2] ist ein möglicher Ansatz beschrieben, wie der Profilabschnitt, von dem man ausgehen kann und aus dem das restliche Profil erzeugt wird, generiert werden kann. Dieser Ansatz ist jedoch mathematisch sehr aufwändig und vor allem nicht allgemeingültig, das heißt es lassen sich keine beliebigen Profile für Schnecken- und Übergangselemente erzeugen.

Es stellt sich daher, ausgehend vom Stand der Technik, die Aufgabe, ein Verfahren zur Erzeugung von Schneckenprofilen bereitzustellen, mit dem Schneckenprofile ohne Vorgabe bereits existierender Profile und / oder Profilabschnitte erzeugt werden können. Es stellt sich ferner die Aufgabe, ein Verfahren bereitzustellen, mit dem beliebige Profile für dicht kämmende Schnecken- und Übergangselemente erzeugt werden können. Es stellt sich weiterhin die Aufgabe, ein Verfahren bereitzustellen, mit dem Profile für dicht kämmende Schnecken- und Übergangselemente auf einfache Weise erzeugt werden können. Das Verfahren soll mit Zirkel und Winkellineal durchführbar sein, ohne dass komplizierte Berechnungen nötig sind.

Überraschend wurde gefunden, dass die Aufgabe durch ein Verfahren gelöst werden kann, bei dem die Profile von Schneckenelementen vollständig aus Kreisbögen gebildet werden, die tangential ineinander übergehen, wobei ein Kreisbogen auch einen Radius der Größe Null haben kann.

Gegenstand der Erfindung ist daher ein Verfahren zur Erzeugung von ebenen, dicht kämmenden, selbstreinigenden, gleichsinnig drehenden Schneckenprofilen mit einem wählbaren Achsabstand a zwischen den Drehachsen eines erzeugenden und eines erzeugten Schneckenprofils, dadurch gekennzeichnet, dass das erzeugende Schneckenprofil aus n Kreisbögen und das erzeugte Schneckenprofil aus n' Kreisbögen gebildet wird.

Das erfindungsgemäße Verfahren ist nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Einerseits lässt das erfindungsgemäße Verfahren dem Anwender dieses Verfahrens gewisse Freiheitsgrade. Derartige Freiheitsgrade sind daran zu erkennen, dass gewisse Größen frei gewählt werden können. Um gültige Schneckenprofile zu erhalten, sind andererseits gewisse Bedingungen zu erfüllen. Derartige Bedingungen sind daran zu erkennen, dass gewisse Größen einen bestimmten Wert haben oder innerhalb eines Wertebereichs liegen müssen. Als gültige Schneckenprofile werden hier Schneckenprofile verstanden, die die geforderten Eigenschaften erfüllen, das heißt eben, dicht kämmend, selbstreinigend und gleichsinnig drehend sind. Derartige Schneckenprofile können zur Fertigung von Schnecken- und Übergangselementen in Mehrwellenextrudern verwendet werden.

Das erfindungsgemäße Verfahren V0 ist dadurch gekennzeichnet, dass
- das erzeugende Schneckenprofil und das erzeugte Schneckenprofil in einer Ebene liegen,
- die Drehachse des erzeugenden Schneckenprofils und die Drehachse des erzeugten Schneckenprofils jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen n des erzeugenden Schneckenprofils gewählt wird, wobei n eine ganze Zahl ist, die größer oder gleich 1 ist,
- ein Außenradius ra des erzeugenden Schneckenprofils gewählt wird, wobei ra einen Wert annehmen kann, der größer als 0 (ra>0) und kleiner oder gleich dem Achsabstand (ra≤a) ist,
- ein Kernradius ri des erzeugenden Schneckenprofils gewählt wird, wobei ri einen Wert annehmen kann, der größer oder gleich 0 (ri≥0) und kleiner oder gleich ra (ri≤ra) ist,
- die Kreisbögen des erzeugenden Schneckenprofils im oder gegen den Uhrzeigersinn um die Drehachse des erzeugenden Schneckenprofils entsprechend den nachfolgenden Anordnungsregeln derart angeordnet werden, dass:
   o alle Kreisbögen des erzeugenden Schneckenprofils derart tangential ineinander übergehen, dass sich ein geschlossenes, konvexes Schneckenprofil ergibt, wobei ein Kreisbogen, dessen Radius gleich 0 ist, wie ein Kreisbogen behandelt wird, dessen Radius gleich eps ist, wobei eps eine sehr kleine positive reelle Zahl ist, die gegen 0 strebt (eps<<1,eps→0),
   o jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
   o mindestens einer der Kreisbögen des erzeugenden Schneckenprofils den Außenradius ra des erzeugenden Schneckenprofils berührt,
   o mindestens einer der Kreisbögen des erzeugenden Schneckenprofils den Kernradius ri des erzeugenden Schneckenprofils berührt,
- die Größe eines ersten Kreisbogens des erzeugenden Schneckenprofils, die durch einen Winkel α_1 und einen Radius r_1 festgelegt ist, derart gewählt wird, dass der Winkel α_1 im Bogenmaß größer oder gleich 0 und kleiner oder gleich 2π ist, wobei unter π die Kreiszahl zu verstehen ist (π≈3,14159), und der Radius r_1 größer oder gleich 0 und kleiner oder gleich dem Achsabstand a ist, und die Position dieses ersten Kreisbogens des erzeugenden Schneckenprofils, die sich durch das Positionieren von zwei verschiedenen Punkten dieses ersten Kreisbogens ergibt, entsprechend den besagten Anordnungsregeln festgelegt wird, wobei ein erster zu positionierender Punkt dieses ersten Kreisbogens bevorzugt ein zu diesem ersten Kreisbogen zugehörender Anfangspunkt ist und wobei ein zweiter zu positionierender Punkt dieses ersten Kreisbogens bevorzugt der zu diesem ersten Kreisbogen zugehörende Mittelpunkt ist,
- die Größen von weiteren n-2 Kreisbögen des erzeugenden Schneckenprofils, die durch die Winkel α_2, ..., α_(n-1) und die Radien r_2, ..., r_(n-1) festgelegt sind, derart gewählt werden, dass die Winkel α_2, ..., α_(n-1) im Bogenmaß größer oder gleich 0 und kleiner oder gleich 2π sind und die Radien r_2, ..., r_(n-1) größer oder gleich 0 und kleiner oder gleich dem Achsabstand a sind, und die Positionen dieser weiteren n-2 Kreisbögen des erzeugenden Schneckenprofils entsprechend den besagten Anordnungsregeln festgelegt sind,
- die Größe eines letzten Kreisbogens des erzeugenden Schneckenprofils, die durch einen Winkel α_n und einen Radius r_n festgelegt ist, dadurch gegeben ist, dass die Summe der n Winkel der n Kreisbögen des erzeugenden Schneckenprofils im Bogenmaß gleich 2π ist, wobei der Winkel α_n im Bogenmaß größer oder gleich 0 und kleiner oder gleich 2π ist, und der Radius r_n das erzeugende Schneckenprofil schließt, wobei der Radius r_n größer oder gleich 0 und kleiner oder gleich dem Achsabstand a ist, und die Position dieses letzten Kreisbogens des erzeugenden Schneckenprofils entsprechend den besagten Anordnungsregeln festgelegt ist,
- sich die n' Kreisbögen des erzeugten Schneckenprofils aus den n Kreisbögen des erzeugenden Schneckenprofils dadurch ergeben, dass
   o die Anzahl der Kreisbögen n' des erzeugten Schneckenprofils gleich der Anzahl der Kreisbögen n des erzeugenden Schneckenprofils ist, wobei n' eine ganze Zahl ist,
   o der Außenradius ra' des erzeugten Schneckenprofils gleich der Differenz des Achsabstandes minus des Kernradius ri des erzeugenden Schneckenprofils ist (ra'=a-ri),
   o der Kernradius ri' des erzeugten Schneckenprofils gleich der Differenz des Achsabstandes minus des Außenradius ra des erzeugenden Schneckenprofils ist (ri'=a-ra),
   o der Winkel α_i' des i'-ten Kreisbogens des erzeugten Schneckenprofils gleich dem Winkel α_i des i-ten Kreisbogens des erzeugenden Schneckenprofils ist, wobei i und i' ganze Zahlen sind, die gemeinsam alle Werte im Bereich von 1 bis zur Anzahl der Kreisbögen n beziehungsweise n' durchlaufen (α_1'=α_1, ..., α_n'=α_n),
   o die Summe des Radius r_i' des i'-ten Kreisbogens des erzeugten Schneckenprofils und des Radius r_i des i-ten Kreisbogens des erzeugenden Schneckenprofils gleich dem Achsabstand a ist, wobei i und i' ganze Zahlen sind, die gemeinsam alle Werte im Bereich 1 bis zur Anzahl der Kreisbögen n beziehungsweise n' durchlaufen (r_1'+ r_1=a, ..., r_n'+ r_n=a),
   o der Mittelpunkt des i'-ten Kreisbogens des erzeugten Schneckenprofils einen Abstand von dem Mittelpunkt des i-ten Kreisbogens des erzeugenden Schneckenprofils besitzt, der gleich dem Achsabstand a ist, und der Mittelpunkt des i'-ten Kreisbogens des erzeugten Schneckenprofils einen Abstand von dem Drehpunkt des erzeugten Schneckenprofils besitzt, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'-ten Kreisbogens des erzeugten Schneckenprofils und dem Mittelpunkt des i-ten Kreisbogens des erzeugenden Schneckenprofils eine Parallele zu einer Verbindungslinie zwischen dem Drehpunkt des erzeugen Schneckenprofils und dem Drehpunkt des erzeugenden Schneckenprofils ist, wobei i und i' ganze Zahlen sind, die gemeinsam alle Werte im Bereich 1 bis zur Anzahl der Kreisbögen n beziehungsweise n' durchlaufen (i'=i),
   o ein Anfangspunkt des i'-ten Kreisbogens des erzeugten Schneckenprofils in einer Richtung bezogen auf den Mittelpunkt des i'-ten Kreisbogens des erzeugten Schneckenprofils liegt, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i).

Aus dem erfindungsgemäßen Verfahren V0 zur Erzeugung von ebenen, dicht kämmenden, selbstreinigenden, gleichsinnig drehenden Schneckenprofilen folgt für das erzeugte Schneckenprofil, dass
- das erzeugte Schneckenprofil geschlossen ist,
- das erzeugte Schneckenprofil konvex ist,
- jeder der Kreisbögen des erzeugten Schneckenprofils tangential in den nachfolgenden Kreisbogen des erzeugten Schneckenprofils übergeht, wobei ein Kreisbogen, dessen Radius gleich 0 ist, wie ein Kreisbogen behandelt wird, dessen Radius gleich eps ist, wobei eps eine sehr kleine positive reelle Zahl ist, die gegen 0 strebt (eps<<1, eps →0),
- jeder der Kreisbögen des erzeugten Schneckenprofils innerhalb oder auf den Grenzen eines Kreisrings mit dem Außenradius ra' und dem Kernradius ri' liegt, dessen Mittelpunkt auf dem Drehpunkt des erzeugten Schneckenprofils liegt,
- mindestens einer der Kreisbögen des erzeugten Schneckenprofils den Außenradius ra' des erzeugten Schneckenprofils berührt,
- mindestens einer der Kreisbögen des erzeugten Schneckenprofils den Kernradius ri' des erzeugten Schneckenprofils berührt.

Aus dem Verfahren V0 zur Erzeugung von ebenen, dicht kämmenden, selbstreinigenden, gleichsinnig drehenden Schneckenprofilen folgt ferner, dass nur in dem Fall, in dem der Kernradius ri des erzeugenden Schneckenprofils gleich der Differenz des Achsabstandes a minus dem Außenradius ra des erzeugenden Schneckenprofils ist (ri=a-ra), der Außenradius ra' des erzeugten Schneckenprofils gleich dem Außenradius ra des erzeugenden Schneckenprofils und der Kernradius ri' des erzeugten Schneckenprofils gleich dem Kernradius ri des erzeugenden Schneckenprofils ist.

Besitzt das erzeugende Schneckenprofil einen Kreisbogen mit dem Radius r_i=0, so weist das Schneckenprofil an der Stelle des Kreisbogens einen Knick auf, dessen Größe durch den Winkel α_i gekennzeichnet ist. Besitzt das erzeugte Schneckenprofil einen Kreisbogen mit dem Radius r_i'=0, so weist das Schneckenprofil an der Stelle des Kreisbogens einen Knick auf, dessen Größe durch den Winkel a_i' gekennzeichnet ist.

Das Verfahren V0 zur Erzeugung von ebenen, dicht kämmenden, selbstreinigenden, gleichsinnig drehenden Schneckenprofilen ist ferner dadurch charakterisiert, dass es sich allein mit Winkellineal und Zirkel ausführen lässt. So wird der tangentiale Übergang zwischen dem i-ten und dem (i+1)-ten Kreisbogen des erzeugenden Schneckenprofils konstruiert, indem um den Endpunkt des i-ten Kreisbogens ein Kreis mit dem Radius r_(i+1) geschlagen wird und der näher zum Drehpunkt des erzeugenden Schneckenprofils gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle von Winkellineal und Zirkel ein Computerprogramm zur Konstruktion der Schneckenprofile verwenden.

Die nach dem erfindungsgemäßen Verfahren V0 erzeugten Schneckenprofile sind unabhängig von einer Gangzahl z.

Das erzeugte Schneckenprofil kann ungleich dem erzeugenden Schneckenprofil sein. Wie der Fachmann anhand der Ausführungen leicht versteht, ist dieses Verfahren V0 insbesondere dazu geeignet, Übergangselemente zwischen Schneckenelementen unterschiedlicher Gangzahl zu erzeugen. Ausgehend von einem z-gängigen Schneckenprofil ist es möglich, das erzeugende und das erzeugte Schneckenprofile Schritt für Schritt so zu ändern, dass man schließlich ein Schneckenprofil mit einer Gangzahl z' ungleich z erhält. Es ist hierbei zulässig, die Anzahl der Kreisbögen während des Übergangs zu verringern oder zu vergrößern.

Typische, in der Praxis verwendete Schneckenprofile zeichnen sich dadurch aus, dass das erzeugende und das erzeugte Schneckenprofil für eine ungerade Gangzahl identisch sind und für eine gerade Gangzahl das erzeugte Schneckenprofil nach einer Rotation des erzeugenden oder des erzeugten Schneckenprofils um einen Winkel von n/z mit dem erzeugenden Schneckenprofil zur Deckung gebracht werden kann. Solche nach dem Stand der Technik bekannten Schneckenprofile mit der Gangzahl z sind dadurch gekennzeichnet, dass sie genau z Symmetrieebenen aufweisen, die senkrecht auf der Ebene des erzeugenden Schneckenprofils stehen und durch die Drehachse des erzeugenden Schneckenprofils führen. Analoges gilt für das erzeugte Schneckenprofil. Die Schneckenprofile bestehen jeweils aus 2*z Abschnitten mit einem Abschnittswinkel von π/z bezogen auf den jeweiligen Drehpunkt des dazugehörigen Schneckenprofils, die durch Rotation oder durch Spiegeln an den Symmetrieebenen untereinander zur Deckung gebracht werden können. Derartige Schneckenprofile werden als symmetrisch bezeichnet. In einer besonderen Ausführungsform des erfindungsgemäßen Verfahrens zur Erzeugung ebener, dicht kämmender, selbstreinigender, gleichsinnig drehender Schneckenprofile - im Folgenden als VA1 bezeichnet - gibt es eine Gangzahl z, die Schneckenprofile in 2*z Abschnitte unterteilt. Mit der besonderen Ausführungsform VA1 des erfindungsgemäßen Verfahrens lassen sich jedoch nicht nur symmetrische Schneckenprofile erzeugen, bei denen sich die 2*z Abschnitte durch Rotation und / oder durch Spiegeln an den Symmetrieebenen untereinander zur Deckung bringen lassen, sondern auch asymmetrische.

Diese besondere Ausführungsform VA1 des erfindungsgemäßen Verfahrens ist dadurch gekennzeichnet, dass
- eine Gangzahl z gewählt wird, wobei z eine ganze Zahl ist, die größer oder gleich 1 ist,
- die Anzahl der Kreisbögen n des erzeugenden Schneckenprofils so gewählt wird, dass sie ein ganzes Vielfaches p von 4*z ist,
- das erzeugende Schneckenprofil in 2*z Abschnitte eingeteilt wird, die dadurch gekennzeichnet sind, dass
   o jeder Abschnitt durch zwei Geraden begrenzt ist, die zueinander einen Winkel im Bogenmaß von π/z bilden und die sich im Drehpunkt des erzeugenden Schneckenprofils schneiden, wobei diese beiden Geraden als Abschnittsgrenzen bezeichnet werden, wobei unter π die Kreiszahl zu verstehen ist (π≈3,14159),
   o jeder dieser 2*z Abschnitte in einen ersten und einen zweiten Teil untergliedert wird,
   o der erste Teil eines Abschnitts aus p Kreisbögen gebildet wird, die in aufsteigender oder absteigender Reihenfolge nummeriert sind,
   o zu den p Kreisbögen zugehörige Winkel α_1, ..., α_p so gewählt werden, dass die Summe dieser Winkel gleich π/(2*z) ist, wobei die Winkel α_1, ..., α_p im Bogenmaß größer oder gleich 0 und kleiner oder gleich π/(2*z) sind,
   o der zweite Teil eines Abschnitts aus p' Kreisbögen gebildet wird, die in umgekehrter Reihenfolge nummeriert sind, wie die Kreisbögen des ersten Teils eines Abschnitts, wobei p' eine ganze Zahl ist, die gleich p ist,
   o zu den p' Kreisbögen zugehörige Winkel α_p', ..., α_1' dadurch bestimmt sind, dass der Winkel α_j' des j'-ten Kreisbogens des zweiten Teils eines Abschnitts gleich dem Winkel α_j des j-ten Kreisbogens des ersten Teils eines Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p),
   o die Summe des Radius r_j' des j'-ten Kreisbogens des zweiten Teils eines Abschnitts und des Radius r_j des j-ten Kreisbogens des ersten Teils eines Abschnitts gleich dem Achsabstand a ist, wobei j und j' ganze Zahlen sind, die gemeinsam alle Werte im Bereich 1 bis zur Anzahl der Kreisbögen p beziehungsweise p' durchlaufen (r_1'+r_1=a, ..., r_p'+r_p=a),
   o ein zu dem Kreisbogen, mit dem das Schneckenprofil im ersten Teil eines Abschnitts beginnt, zugehöriger Mittelpunkt und zugehöriger Anfangspunkt in Abhängigkeit von der Anordnung der Kreisbögen im oder gegen den Uhrzeigersinn auf eine der Abschnittsgrenzen dieses Abschnitts gelegt wird,
   o ein zu dem Kreisbogen, mit dem das Schneckenprofil im ersten Teil eines Abschnitts endet, zugehöriger Endpunkt eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des erzeugenden Schneckenprofils in Richtung dieses Abschnitts besitzt, der gleich dem halben Achsabstand ist, wobei die Winkelhalbierende wie die Abschnittsgrenzen durch den Drehpunkt des erzeugenden Schneckenprofils führt.

Aus dem Verfahren VA1 zur Erzeugung von ebenen, dicht kämmenden, selbstreinigenden, gleichsinnig drehenden Schneckenprofilen mit einer Gangzahl z folgt für das erzeugte Schneckenprofil, dass jeder der Abschnitte des erzeugten Schneckenprofils derart aufgebaut ist, das die Radien der Kreisbögen des erzeugten Schneckenprofils in umgekehrter Reihenfolge gleich den Radien der Kreisbögen des erzeugenden Schneckenprofils sind.

Schneckenprofile, die gemäß dem obigen Verfahren VA1 erzeugt werden, bestehen aus 2*z Abschnitten, die voneinander verschieden sein können. Sind die Abschnitte voneinander verschieden, so erhält man asymmetrische Schneckenprofile.

Bei achsensymmetrischen Schneckenprofilen lassen sich alle 2*z Abschnitte durch Rotation und / oder durch Spiegelung an den Abschnittsgrenzen zur Deckung bringen. Die Abschnittsgrenzen liegen dann auf den Schnittgeraden der Symmetrieebenen des jeweiligen Profils mit der Ebene, in der das Profil liegt. Es ergibt sich eine besondere Ausführungsform VA2 des erfindungsgemäßen Verfahrens zur Erzeugung ebener, achsensymmetrischer, dicht kämmender, selbstreinigender, gleichsinnig drehender Schneckenprofile mit einer Gangzahl z. Diese besondere Ausführungsform VA2 des erfindungsgemäßen Verfahrens ist dadurch gekennzeichnet, dass
- nur ein erster Abschnitt des erzeugenden Schneckenprofils festgelegt wird und
- die weiteren Abschnitte durch fortlaufende Spiegelung an den Abschnittsgrenzen erzeugt werden.

Ferner ist es möglich, mit dem erfindungsgemäßen Verfahren Schneckenprofile zu erzeugen, die punktsymmetrisch zum Drehpunkt sind (VA3). In diesem Fall wird jeweils ein Abschnitt festgelegt, während sich der auf dem Profil gegenüber liegende Abschnitt durch Punktspiegelung des festgelegten Abschnitts am Drehpunkt ergibt. Auf diese Weise lassen sich punktsymmetrische Schneckenprofile abschnittsweise erzeugen, wobei die oben genannten Anordnungsregeln befolgt werden müssen, um ein geschlossenes, konvexes Profil zu erhalten.

Alle geschilderten Verfahren sind dadurch charakterisiert, dass sie sich allein mit Winkellineal und Zirkel ausführen lassen. So wird der tangentiale Übergang zwischen dem j-ten und dem (j+1)-ten Kreisbogen des ersten Teils eines Abschnitts des erzeugenden Schneckenprofils konstruiert, indem um den Endpunkt des j-ten Kreisbogens ein Kreis mit dem Radius r_(j+1) geschlagen wird und der näher zum Drehpunkt des erzeugenden Schneckenprofils gelegene Schnittpunkt dieses Kreises mit der Gerade, die durch den Mittelpunkt und den Endpunkt des j-ten Kreisbogens definiert ist, der Mittelpunkt des (j+1)-ten Kreisbogens ist. Ferner wird bei aufsteigender Nummerierung der Kreisbögen der p-te Kreisbogen des ersten Teils eines Abschnitts des erzeugenden Schneckenprofils konstruiert, indem am Endpunkt des (p-1)-ten Kreisbogens eine Tangente an den (p-1)-ten Kreisbogen gelegt wird, der Schnittpunkt der Tangente mit der Gerade FP der Mittelpunkt eines Kreises ist, dessen Radius gleich der Länge der Strecke zwischen dem Endpunkt des (p-1)-ten Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des p-ten Kreisbogens mit der Gerade FP ist. Praktischerweise wird man anstelle von Winkellineal und Zirkel ein Computerprogramm zur Konstruktion der Schneckenprofile verwenden.

Wie der Fachmann anhand der Ausführungen leicht versteht, sind die Verfahren insbesondere dazu geeignet, Übergangselemente zwischen Schneckenelementen gleicher Gangzahl zu erzeugen. Ausgehend von einem z-gängigen Schneckenprofil ist es möglich, ein anderes z-gängiges Schneckenprofil zu erhalten, indem das Schneckenprofile im Übergang Schritt für Schritt geändert wird. Es ist hierbei zulässig, die Anzahl der Kreisbögen während des Übergangs zu verringern oder zu vergrößern.

In der Praxis wird ein Schneckenprofil zweckmäßigerweise in ein Koordinatensystem gelegt, um es durch Angabe der Koordinaten charakteristischer Größen eindeutig und in einer für die weitere Verwendung zweckmäßigen Form beschreiben zu können. Sinnvollerweise arbeitet man mit dimensionslosen Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für den dimensionslosen Achsabstand folgt A=a/a=1. Für den dimensionslosen Schneckenaußenradius eines Schneckenprofils folgt RA=ra/a. Der dimensionslose Kernradius eines Schneckenprofils berechnet sich zu RI=ri/a. Die dimensionslose Gangtiefe eines Schneckenprofils berechnet sich zu H=h/a=RA-RI.

Es ist zweckmäßig, den Drehpunkt des erzeugenden Schneckenprofils in den Ursprung eines kartesischen Koordinatensystem zu legen (x=0, y=0) und den Drehpunkt des erzeugten Schneckenprofils in den Punkt x=A=1, y=0 zu legen.

Bei Verwendung dimensionsloser Größen und bei Verwendung eines kartesischen Koordinatensystems, bei dem der Drehpunkt des erzeugenden Schneckenprofils im Ursprung (x=0, y=0) und der Drehpunkt des erzeugten Schneckenprofils im Punkt mit den Koordinaten x=A=1, y=0 liegt, ergibt sich eine konkrete Ausführungsform VK1 des erfindungsgemäßen Verfahrens. Diese konkrete Ausführungsform VK1 ist dadurch gekennzeichnet, dass
- das erzeugende Schneckenprofil aus 1, 2, ..., (i-1), i, (i+1), ..., (n-1), n Kreisbögen gebildet wird, die entgegen oder im Uhrzeigersinn angeordnet werden, wobei n eine ganze Zahl größer oder gleich 1 ist und wobei i eine ganze Zahl ist, die größer oder gleich 1 und kleiner oder gleich n ist
- der Außenradius RA größer 0 (RA>0) und kleiner oder gleich dem Achsabstand (RA≤1) gewählt wird,
- der Kernradius RI größer oder gleich 0 (RI>0) und kleiner oder gleich RA (RI≤RA) gewählt wird,
- die Summe der Winkel α_1, ..., α_n der Kreisbögen 1, ..., n des erzeugenden Schneckenprofils gleich 2π ist, wobei unter π die Kreiszahl (π≈ 3,14159) zu verstehen ist,
- die Radien R_1, ..., R_n der Kreisbögen 1, ..., n des erzeugenden Schneckenprofils größer oder gleich 0 und kleiner oder gleich 1 sind,
- der Anfangs- und Mittelpunkt eines ersten Kreisbogens des erzeugenden Schneckenprofils auf die x-Achse gelegt werden, wobei der Anfangspunkt in den Bereich x=RI bis x=RA gelegt wird und die x-Koordinate des Mittelpunkts kleiner oder gleich der x-Koordinate des Anfangspunkts ist,
- für i<n der Endpunkt des i-ten Kreisbogens des erzeugenden Schneckenprofils gleich dem Anfangspunkt des (i+1)-ten Kreisbogens des erzeugenden Schneckenprofils ist,
- für i=n der Endpunkt des i-ten Kreisbogens des erzeugenden Schneckenprofils gleich dem Anfangspunkt des ersten Kreisbogens des erzeugenden Schneckenprofils ist,
- jeder der Kreisbögen des erzeugenden Schneckenprofils tangential in den nächsten Kreisbogen übergeht, wobei ein Kreisbogen mit R_i=0 wie ein Kreisbogen mit R_i=eps behandelt wird, wobei eps eine sehr kleine positive reelle Zahl ist, die gegen 0 strebt (eps<<1, eps→0),
- das erzeugende Schneckenprofil an keiner Stelle einen Abstand vom Drehpunkt größer als den Außenradius RA besitzt,
- das erzeugende Schneckenprofil an mindestens einer Stelle einen Abstand vom Drehpunkt besitzt, der gleich dem Außenradius RA ist,
- das erzeugende Schneckenprofil an keiner Stelle einen Abstand vom Drehpunkt kleiner als den Kernradius RI besitzt,
- das erzeugende Schneckenprofil an mindestens einer Stelle einen Abstand vom Drehpunkt besitzt, der gleich dem Kernradius RI ist,
- das erzeugende Schneckenprofil konvex ist,
- das erzeugte Schneckenprofil aus 1', 2', ..., (i-1)', i', (i+1)', ..., (n-1)', n' Kreisbögen besteht, die im selben Uhrzeigersinn angeordnet werden wie die Kreisbögen des erzeugenden Schneckenprofils, wobei die Anzahl der Kreisbögen n' des erzeugten Schneckenprofils gleich der Anzahl der Kreisbögen n des erzeugenden Schneckenprofils ist und wobei i' eine ganze Zahl ist, die größer oder gleich 1 und kleiner oder gleich n' ist,
- der Winkel α_i' des i'-ten Kreisbogens des erzeugten Schneckenprofils gleich dem Winkel α_i des i-ten Kreisbogens des erzeugenden Schneckenprofils ist,
- die Summe des Radius R_i' des i'-ten Kreisbogens des erzeugten Schneckenprofils und des Radius R_i des i-ten Kreisbogens des erzeugenden Schneckenprofils gleich 1 ist,
- der Anfangspunkt des ersten Kreisbogens des erzeugten Schneckenprofils gleich dem Anfangspunkt des ersten Kreisbogens des erzeugenden Schneckenprofils ist und der Mittelpunkt des ersten Kreisbogens des erzeugten Schneckenprofils auf der x-Achse liegt, wobei die x-Koordinate des Mittelpunkts größer oder gleich der x-Koordinate des Anfangspunkts ist,
- für i'<n' der Endpunkt des i'-ten Kreisbogens des erzeugten Schneckenprofils gleich dem Anfangspunkt des (i+1)'-ten Kreisbogens des erzeugten Schneckenprofils ist,
- für i'=n' der Endpunkt des i'-ten Kreisbogens des erzeugten Schneckenprofils gleich dem Anfangspunkt des 1'-ten Kreisbogens des erzeugten Schneckenprofils ist,
- jeder der Kreisbögen des erzeugten Schneckenprofils tangential in den nächsten Kreisbogen übergeht, wobei ein Kreisbogen mit R_i'=0 wie ein Kreisbogen mit R_i'=eps behandelt wird, wobei eps eine sehr kleine positive reelle Zahl ist, die gegen 0 strebt (eps<<1, eps→0),
- das erzeugte Schneckenprofil konvex ist.

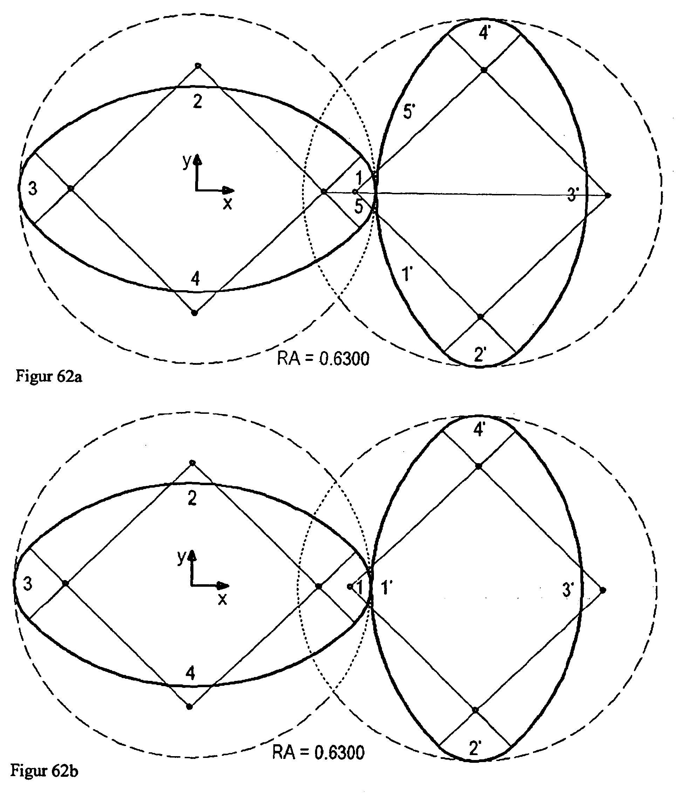

Einige mit dieser konkreten Ausführungsform VK1 erzeugten Schneckenprofile weisen eine Besonderheit auf: es gibt benachbarte profilerzeugende Kreisbögen mit dem gleichen Radius und dem gleichen Mittelpunkt, die sich zu einem Kreisbogen mit einem größeren Winkel zusammenfassen lassen (siehe z.B. Figuren 62a und 62b und die dazugehörige Beschreibung).

Für Schneckenprofile mit einer Gangzahl z zeichnet sich eine konkrete Ausführungsform VK2 des erfindungsgemäßen Verfahrens dadurch aus, dass
- die Gangzahl z eine ganze Zahl ist, die größer oder gleich 1 gewählt wird,
- die Anzahl der Kreisbögen n des erzeugenden Schneckenprofils so gewählt wird, dass sie ein ganzes Vielfaches p von 4*z ist,
- das erzeugende Schneckenprofil, bevorzugt beginnend vom ersten Kreisbogen des erzeugenden Schneckenprofils, in 2*z Teile eingeteilt wird, die dadurch gekennzeichnet sind, dass jedes dieser 2*z Teile des erzeugenden Schneckenprofils aus 1, ..., j, ..., p, p', ..., j', ..., 1' Kreisbögen gebildet wird, wobei p' eine ganze Zahl ist, die gleich p ist, und wobei unter j und j' ganze Zahlen zu verstehen sind, die größer oder gleich 1 und kleiner oder gleich p bzw. p' sind,
- die Winkel β_1, ..., β_p der Kreisbögen 1, ..., p des ersten Teils des erzeugenden Schneckenprofils so gewählt werden, dass deren Summe gleich π/(2*z) ist, wobei unter π die Kreiszahl zu verstehen ist (π≈3,14159),
- der Winkel β_j' des j'-ten Kreisbogens des ersten Teils des erzeugenden Schneckenprofils gleich dem Winkel β_j des j-ten Kreisbogens des ersten Teils des erzeugenden Schneckenprofils ist (β_1'=β_1, ..., β_p'=β_p),
- die Radien R_1, ..., R_p der Kreisbögen 1, ..., p des ersten Teils des erzeugenden Schneckenprofils größer oder gleich 0 und kleiner oder gleich 1 gewählt werden
- die Summe des Radius R_j' des j'-ten Kreisbogens des ersten Teils des erzeugenden Schneckenprofils und des Radius R_j des j-ten Kreisbogens des ersten Teils des erzeugenden Schneckenprofils gleich 1 ist (R_1'+ R_1=1, ..., R_p'+ R_p=1),
- der Anfangs- und Mittelpunkt des ersten Kreisbogens des ersten Teils des erzeugenden Schneckenprofils auf die x-Achse gelegt werden, wobei der Anfangspunkt in den Bereich x=RI bis x=RA gelegt wird und die x-Koordinate des Mittelpunkts kleiner oder gleich der x-Koordinate des Anfangspunkts ist,
- die Kreisbögen entgegen dem Uhrzeigersinn angeordnet werden,
- der Endpunkt des p-ten Kreisbogens des ersten Teils des erzeugenden Schneckenprofils eine Gerade FP in einem Punkt tangiert, wobei die Gerade FP einen Abstand vom Drehpunkt besitzt, der dem halben Achsabstand entspricht, und eine Steigung, die für z=1 gleich 0 und für z>1 gleich -1/tan(π/(2*z)) ist,
- für achsensymmetrische Schneckenprofile, die weiteren Teile des erzeugenden Schneckenprofils dadurch gekennzeichnet sind, dass
   o die Winkel der Kreisbögen des ersten Teils des erzeugenden Schneckenprofils unter Beibehaltung der Reihenfolge auf die Winkel der Kreisbögen der weiteren Teile des erzeugenden Schneckenprofils kopiert werden,
   o die Radien der Kreisbögen des ersten Teils des erzeugenden Schneckenprofils in umgekehrter Reihenfolge auf die Radien der Kreisbögen des zweiten Teils des erzeugenden Schneckenprofils kopiert werden,
   o die Radien der Kreisbögen des ersten und des zweiten Teils des erzeugenden Schneckenprofils unter Beibehaltung der Reihenfolge auf die Radien der Kreisbögen der weiteren Teile des erzeugenden Schneckenprofils kopiert werden,
- für punktsymmetrische Schneckenprofile, die weiteren Teile des erzeugenden Schneckenprofils dadurch gekennzeichnet sind, dass
   o aus dem ersten Teil durch Punktspiegelung am Drehpunkt ein zweites Teil erzeugt wird, das dem ersten Teil gegenüberliegt,
   o weitere Teile des erzeugenden Schneckenprofils sinngemäß nach dem Verfahren für das erste Teil des erzeugenden Schneckenprofils erzeugt werden und ihre gegenüberliegenden Teile durch Punktspiegelung an dem Drehpunkt erzeugt werden,
- für asymmetrische Schneckenprofile, die weiteren Teile des erzeugenden Schneckenprofils unabhängig voneinander und sinngemäß nach dem Verfahren für das erste Teil des erzeugenden Schneckenprofils erzeugt werden.

Einige mit dieser konkreten Ausführungsform VK2 erzeugten Schneckenprofile weisen eine Besonderheit auf: es gibt benachbarte profilerzeugende Kreisbögen mit dem gleichen Radius und dem gleichen Mittelpunkt, die sich zu einem Kreisbogen mit einem größeren Winkel zusammenfassen lassen (siehe z.B. Figuren 62a und 62b und die dazugehörige Beschreibung).

Gegenstand der vorliegenden Erfindung sind weiterhin Profile von Schnecken- und Übergangselementen, die mittels des erfindungsgemäßen Verfahrens erzeugt wurden. Überraschend wurden mit dem erfindungsgemäßen Verfahren völlig neuartige Profile für Schnecken- und Übergangselemente gefunden. Erfindungsgemäße Profile von Schnecken- und Übergangselementen sind in den Beispielen näher spezifiziert.

Die Schneckenprofile, die nach dem erfindungsgemäßen Verfahren zur Erzeugung dicht kämmender, selbstreinigender, gleichsinnig drehender Schneckenprofile erhalten werden, können in Schnecken- und Übergangselementen eingesetzt werden. Insbesondere können derartige Schneckenprofile in Förder-, Knet- und Mischelementen verwendet werden. Gegenstand der vorliegenden Erfindung sind daher auch Förder-, Knet- und Mischelemente mit einem erfindungsgemäßen Profil bzw. mit einem Profil, das mittels des erfindungsgemäßen Verfahrens erzeugt worden ist, sowie Verfahren zu deren Herstellung.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-flachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Übergangselemente können rechts- oder linksgängig sein. Ihre Steigung liegt bevorzugt im Bereich des 0,1-fachen bis 10-fachen des Achsabstands und ihre axiale Länge liegt bevorzugt im Bereich des 0,1-fachen bis 10-fachen des Achsabstandes.

Gegenstand der vorliegenden Erfindung ist auch ein gleichsinnig drehender Mehrwellenextruder mit mindestens einem Schneckenelement, dessen Profil nach dem erfindungsgemäßen Verfahren erzeugt worden ist, wobei der Mehrwellenextruder zwei oder mehr Wellen besitzt.

Gegenstand der vorliegenden Erfindung ist weiterhin ein Computerprogrammprodukt zur Durchführung des Verfahrens zur Erzeugung dicht kämmender, selbstreinigender, gleichsinnig drehender Schneckenprofile auf einem Computersystem.

Die Durchführung des erfindungsgemäßen Verfahrens auf einem Computersystem ist vorteilhaft, da die Koordinaten und Abmessungen der Profile in einer Form vorliegen, die von einem Computer weiter verarbeitet werden können. Insbesondere ist die Durchführung von Strömungssimulationen auf einfache Weise möglich. Hierbei wird das nach dem erfindungsgemäßen Verfahren generierte Profil in Achsrichtung fortgesetzt, um ein dreidimensionales Modell eines Schnecken- oder Übergangselement im Computer zu erzeugen. Ein Modell eines Förderelements wird beispielsweise dadurch erzeugt, dass das Profil schraubenförmig in Achsrichtung verdreht wird. Ein Modell eines Knetelements wird beispielsweise erzeugt, indem das Profil abschnittsweise in Achsrichtung fortgesetzt wird, wobei die Abschnitte gegeneinander versetzt werden, so dass gegeneinander versetzte Scheiben entstehen. Die Modellierung eines Schnecken- oder Übergangselements im Computer erfolgt in Form eines so genannten Rechengitters. Hierbei wird das Volumen zwischen der Innenoberfläche des Gehäuses und den Oberflächen eines Schnecken- oder Übergangelements mit einem Rechengitter vernetzt, welches aus Polyedern wie zum Beispiel Tetraedern oder Hexaedern besteht. Das Rechengitter sowie die Stoffdaten des viskosen Fluids und die Betriebsdaten der Schneckenmaschine, in der die Schneckenelemente und das viskose Fluid eingesetzt werden, werden in einem Programm zur Strömungssimulation eingegeben und die Strömungsverhältnisse simuliert. Anschließend erfolgt eine Analyse der berechneten Strömungsfelder, aus der unter anderem die Güte des Schneckenprofils hinsichtlich charakteristischer Eigenschaften wie zum Beispiel das Mischverhalten oder das Leistungsverhalten bezogen auf die verwendeten Stoffdaten und die verwendeten Betriebsparameter ermittelt werden kann.

Das erfindungsgemäße Computerprogrammprodukt ist dadurch gekennzeichnet, dass das erfindungsgemäße Verfahren in Form von Programmcodes auf einem Datenträger gespeichert ist. Der Datenträger ist computerlesbar, sodass das erfindungsgemäße Verfahren mittels eines Computers ausgeführt werden kann, wenn das Computerprogrammprodukt auf dem Computer ausgeführt wird. Ein geeigneter Datenträger ist zum Beispiel eine Diskette, ein optischer Datenträger wie zum Beispiel eine CD, DVD, oder Blu-ray Disc, eine Festplatte, ein Flash-Speicher, ein Memory-Stick und andere. Bevorzugt weist das Computerprogrammprodukt, wenn es auf einem Computer ausgeführt wird, eine grafische Benutzeroberfläche (GUI) auf, die es einem Benutzer auf einfache Weise erlaubt, die frei wählbaren Größen zur Erzeugung von Schneckenprofilen über Eingabegeräte, wie z.B. Maus und / oder Tastatur einzugeben. Weiterhin weist das Computerprogrammprodukt bevorzugt eine grafische Ausgabe auf, mittels derer die berechneten Schneckenprofile auf einem grafischen Ausgabegerät wie z.B. Bildschirm und / oder Drucker visualisiert werden können. Bevorzugt weist das Computerprogrammprodukt die Möglichkeit auf, berechnete Schneckenprofile zu exportieren, d.h. in Form von speicherbaren Datensätzen, welche die geometrischen Maße der berechneten Schnecken umfassen, für weitere Verwendungszwecke entweder auf einem Datenträger zu speichern oder an ein angeschlossenes Gerät zu übertragen. Insbesondere ist das Computerprogrammprodukt so gestaltet, dass es, wenn es auf einem Computer ausgeführt wird, sowohl Schneckenprofile als auch aus den Schneckenprofilen generierte Schnecken- und Übergangselemente berechnen und die berechneten Geometrien in einem Format ausgeben kann, die von einer Maschine zur Herstellung von Schnecken- und Übergangselementen z.B. einer Fräsmaschinen verwendet werden kann, um reale Schneckenelemente herzustellen. Solche Formate sind dem Fachmann bekannt.

Die vorliegende Erfindung erlaubt die Erzeugung von Schneckenprofilen, Schneckenelementen und Übergangselementen *ab initio.* Im Gegensatz zum Stand der Technik geht das erfindungsgemäße Verfahren nicht von bestehenden Schneckenprofilen aus, sondern erlaubt die Erzeugung beliebiger Profile, indem die Werte charakteristischer Größen wie z.B. Achsabstand und Zahl der Kreisbögen, aus denen die Schneckenprofile aufgebaut werden sollen, gewählt werden und die Schneckenprofile Schritt für Schritt unter Beachtung einfacher Regeln generiert werden. Das erfindungsgemäße Verfahren ist einfach anwendbar und lässt sich sogar mit Zirkel und Winkellineal ausführen, ohne dass komplizierte Berechnungen nötig sind. Das erfindungsgemäße Verfahren ist allgemeingültig, d.h. es ist zum Beispiel nicht auf eine konkrete Gangzahl beschränkt, sondern es ist sogar möglich, durch Variation von Werten Profile zu erzeugen, die von einer Gangzahl in einer andere übergehen. Ferner erlaubt die Erfindung die Erzeugung von symmetrischen und asymmetrischen Schneckenprofilen, Schneckenelementen und Übergangselementen. Es ist auch möglich, Schneckenprofile zu erzeugen, bei denen das erzeugende und das erzeugte Profil verschieden sind, d.h. nicht zur Deckung gebracht werden können.

Die Erfindung wird nachstehend anhand der Figuren beispielhaft näher erläutert, ohne sie jedoch auf diese zu beschränken. Alle Figuren wurden mit Hilfe eines Computerprogramms erzeugt.

Sinnvollerweise arbeitet man mit dimensionslosen Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für den dimensionslosen Achsabstand folgt A=a/a=1. Für den dimensionslosen Schneckenaußenradius eines Schneckenprofils folgt RA=ra/a. Der dimensionslose Kernradius eines Schneckenprofils berechnet sich zu RI=ri/a. Die dimensionslose Gangtiefe eines Schneckenprofils berechnet sich zu H=h/a=RA-RI.

In den Figuren werden alle geometrischen Größen in ihrer dimensionslosen Form verwendet. Alle Winkelangaben erfolgen im Bogenmaß.

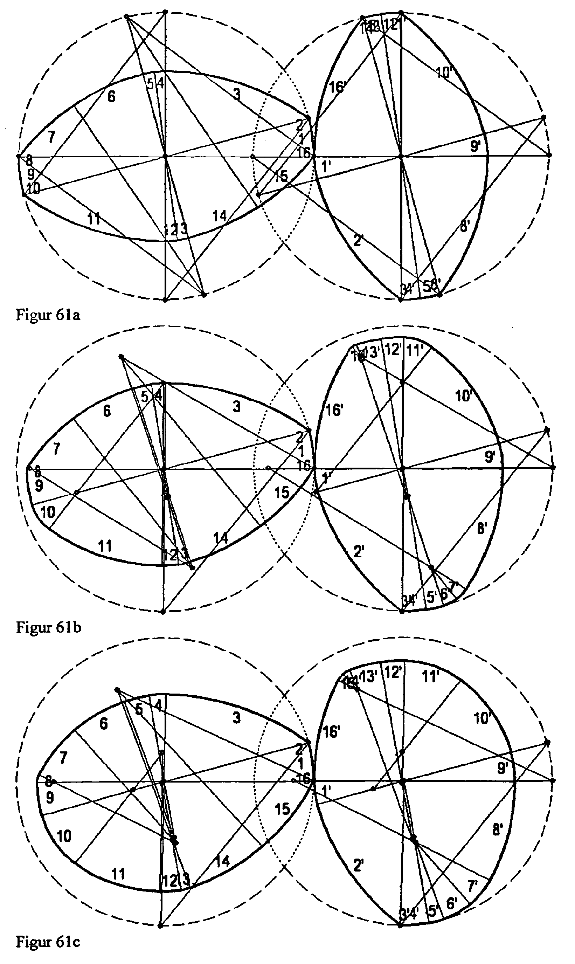

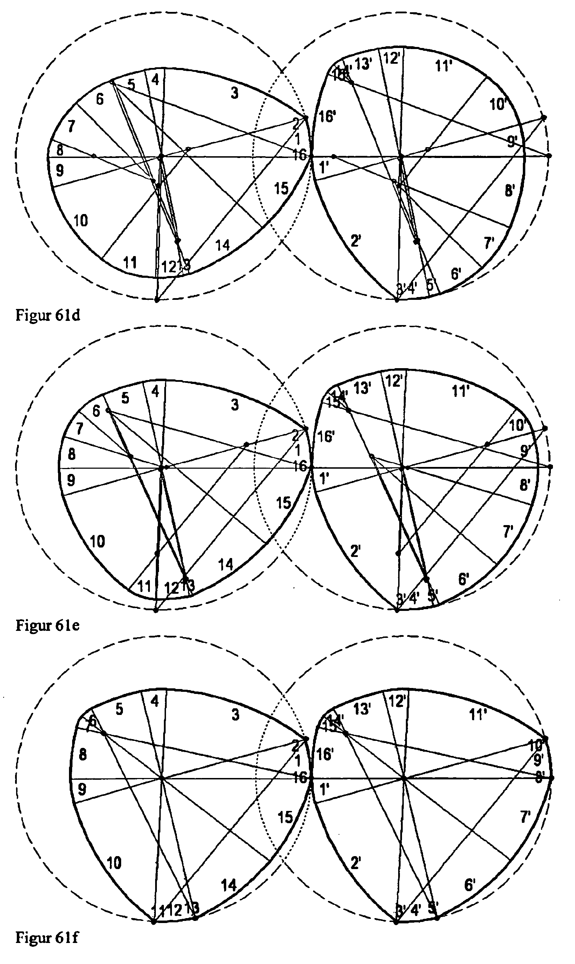

Das Verfahren zur Erzeugung ebener, dicht kämmender, selbstreinigender, gleichsinnig drehender Schneckenprofile wird anhand der Figur 61 näher erläutert, ohne das Verfahren jedoch auf diese Figur zu beschränken.

Die **Figuren 61a** bis **61f** zeigen den Übergang von einem Paar zweigängiger Schneckenprofile auf ein Paar eingängiger Schneckenprofile. Alle diese Figuren weisen den gleichen Aufbau auf, der nachfolgend im Detail beschrieben wird. Das erzeugende Schneckenprofil wird durch das linke Schneckenprofil dargestellt. Das erzeugte Schneckenprofil wird durch das rechte Schneckenprofil dargestellt. Beide Schneckenprofile bestehen aus 16 Kreisbögen. Die Kreisbögen des erzeugenden und des erzeugten Schneckenprofils sind durch dicke, durchgezogene Linien gekennzeichnet, die mit den jeweiligen Nummern der Kreisbögen versehen sind. Bedingt durch die Vielzahl der Kreisbögen und bedingt durch die Erzeugung der Figuren mittels eines Computerprogramms kann es vorkommen, dass sich die Nummern einzelner Kreisbögen überlappen und daher schlecht lesbar sind, siehe zum Beispiel die Kreisbögen 3', 4' und die Kreisbögen 5', 6', 7' in Figur 61a. Trotz der teilweisen schlechten Lesbarkeit einzelner Nummern, wird der Aufbau der Profile aus dem Zusammenhang in Verbindung mit dieser Beschreibung dennoch deutlich.

Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der Schneckenaußenradius ist jeweils für das erzeugende und das erzeugte Schneckenprofil annähernd gleich groß. Im Bereich des Schneckengehäuses ist der Schneckenaußenradius durch eine dünne, gestrichelte Linie gekennzeichnet, im Zwickelbereich durch eine dünne, gepunktete Linie.

Die Figur 61 a zeigt ein Paar von zweigängigen Schneckenprofilen, mit denen der Übergang gestartet wird. Das erzeugende und das erzeugte Schneckenprofil sind zueinander symmetrisch. Die Kreisbögen 1 und 9 des erzeugenden Schneckenprofils berühren auf ihrer gesamten Länge den Schneckenaußenradius. Die Kreisbögen 4, 5 und 12, 13 des erzeugenden Schneckenprofils berühren auf ihrer gesamten Länge den Kernradius. Die Kreisbögen 4', 5' und 12', 13' des erzeugten Schneckenprofils berühren auf ihrer gesamten Länge den Schneckenaußenradius. Die Kreisbögen 1' und 9' des erzeugten Schneckenprofils berühren auf ihrer gesamten Länge den Kernradius.

Die Figur 61f zeigt ein Paar von eingängige Schneckenprofilen, mit denen der Übergang endet. Das erzeugende und das erzeugte Schneckenprofil sind zueinander symmetrisch. Die Kreisbögen 1 und 12 des erzeugenden Schneckenprofils berühren auf ihrer gesamten Länge den Schneckenaußenradius. Die Kreisbögen 4 und 9 des erzeugenden Schneckenprofils berühren auf ihrer gesamten Länge den Kernradius. Die Kreisbögen 4' und 9' des erzeugten Schneckenprofils berühren auf ihrer gesamten Länge den Schneckenaußenradius. Die Kreisbögen 1' und 12' des erzeugten Schneckenprofils berühren auf ihrer gesamten Länge den Kernradius.

Die Figur 61b zeigt ein Paar von Übergangsprofilen, bei denen der Übergang von den zweigängigen Schneckenprofilen zu den eingängigen Schneckenprofilen zu 20% vollzogen ist. Die Figur 61c zeigt ein Paar von Übergangsprofilen, bei denen der Übergang zu 40% vollzogen ist. Die Figur 61 d zeigt ein Paar von Übergangsprofilen, bei denen der Übergang zu 60% vollzogen ist. Die Figur 61e zeigt ein Paar von Übergangsprofilen, bei denen der Übergang zu 80% vollzogen ist.

Der Übergang erfolgt dergestalt, dass immer der Kreisbogen 1 des erzeugenden Schneckenprofils auf seiner gesamten Länge den dimensionslosen Schneckenaußenradius RA berührt, wodurch der zugehörige Kreisbogen 1' des erzeugten Schneckenprofils auf seiner gesamten Länge den dimensionslosen Kernradius RI' berührt. Der Übergang erfolgt dergestalt, dass immer der Kreisbogen 4' des erzeugten Schneckenprofils den dimensionslosen Schneckenaußenradius RA' berührt, wodurch der zugehörige Kreisbogen 4 des erzeugenden Schneckenprofils den dimensionslosen Kernradius RI berührt. Dadurch, dass immer ein Kreisbogen des erzeugenden und des erzeugten Schneckenprofils auf dem Schneckenaußenradius liegt oder ihn berührt, wird während des gesamten Übergangs die Abreinigung der Gehäuseinnenoberfläche gewährleistet. Ferner ist aus den Figuren 61b bis 61e ersichtlich, dass das erzeugende und das erzeugte Schneckenprofil asymmetrisch sind. Ein Paar von Übergangselementen besteht immer aus einem ersten Übergangselement, welches auf den erzeugenden Übergangsprofilen beruht, und aus einem zweiten Übergangselement, welches auf den erzeugten Übergangsprofilen beruht.

Die Figur 61 zeigt Übergangsprofile, in denen der dimensionslose Schneckenaußenradius des erzeugenden Schneckenprofils und der dimensionslose Schneckenaußenradius des erzeugten Schneckenprofils im Bereich von RA=RA'=0,6146 bis RA=RA'=0,6288 liegen. Das erfindungsgemäße Verfahren zur Erzeugung von ebenen, dicht kämmenden, selbstreinigenden, gleichsinnig drehenden Schneckenprofilen ist nicht auf diesen Bereich des dimensionslosen Schneckenaußenradius limitiert. Unter Anwendung des erfindungsgemäßen Verfahrens können Schneckenprofile mit einem dimensionslosen Schneckenaußenradius des erzeugenden Schneckenprofils zwischen RA größer 0 und RA kleiner oder gleich 1, bevorzugt im Bereich von RA=0,52 bis RA=0,707 erzeugt werden. Unter Anwendung des erfindungsgemäßen Verfahrens können Schneckenprofile mit einem dimensionslosen Schneckenaußenradius des erzeugten Schneckenprofils zwischen RA' größer 0 und RA' kleiner oder gleich 1, bevorzugt im Bereich von RA'=0,52 bis RA'=0,707 erzeugt werden.

Das erfindungsgemäße Verfahren zur Erzeugung ebener, dicht kämmender, selbstreinigender und gleichsinnig drehender Schneckenprofile soll beispielhaft an dem Paar von Schneckenprofilen in Figur 61 d erläutert werden.

Das erzeugende und erzeugte Schneckenprofil liegen erfindungsgemäß in einer Ebene. Der Einfachheit halber wird diese Ebene in die xy-Ebene eines kartesischen Koordinatensystems gelegt. Ebenfalls der Einfachheit halber wird der Drehpunkt des erzeugenden Schneckenprofils in den Ursprung des kartesischen Koordinatensystems gelegt (x=0, y=0). Der dimensionslose Achsabstand zwischen den beiden Drehpunkten des erzeugenden und des erzeugten Schneckenprofils beträgt A=1. Der Einfachheit halber wird der Drehpunkt des erzeugten Schneckenprofils auf die Koordinate x=A=1, y=0 gelegt.

Die Anzahl der Kreisbögen n des erzeugenden Schneckenprofils wird erfindungsgemäß so gewählt, dass n größer oder gleich 1 ist. In dem vorliegendem Beispiel wird die Anzahl der Kreisbögen zu n=16 gewählt. Der dimensionslose Schneckenaußenradius RA des erzeugenden Schneckenprofils wird erfindungsgemäß so gewählt, dass er größer 0 und kleiner oder gleich dem dimensionslosen Achsabstand A ist. In dem vorliegenden Beispiel wird der dimensionslose Schneckenaußenradius des erzeugenden Schneckenprofils zu RA=0,6203 gewählt. Der dimensionslose Kernradius RI des erzeugenden Schneckenprofils wird erfindungsgemäß so gewählt, dass er größer oder gleich 0 und kleiner oder gleich dem dimensionslosen Schneckenaußenradius RA ist. In dem vorliegenden Beispiel wird der dimensionslose Kernradius des erzeugenden Schneckenprofils zu RI'=0,3798 gewählt.

Die Kreisbögen des erzeugenden Schneckenprofils können im oder gegen den Uhrzeigersinn um die Drehachse des erzeugenden Schneckenprofils angeordnet werden. In dem vorliegenden Beispiel werden die Kreisbögen gegen den Uhrzeigersinn um die Drehachse des erzeugenden Schneckenprofils angeordnet.

Der Winkel α_1 des 1. Kreisbogens des erzeugenden Schneckenprofils wird erfindungsgemäß so gewählt, dass er im Bogenmaß größer oder gleich 0 und kleiner oder gleich 2π ist. In dem vorliegenden Beispiel wird der Winkel des 1. Kreisbogens zu α_1=0,2744 gewählt. Der dimensionslose Radius R_1 des 1. Kreisbogens des erzeugenden Schneckenprofils wird erfindungsgemäß so gewählt, dass er größer oder gleich 0 und kleiner oder gleich dem dimensionslosen Achsabstand A ist. In dem vorliegenden Beispiel wird der dimensionslose Radius des 1. Kreisbogens zu R_1=RA=0,6203 gewählt. Die Position des 1. Kreisbogens des erzeugenden Schneckenprofils wird erfindungsgemäß so gewählt, dass der 1. Kreisbogen innerhalb oder auf den Grenzen eines Kreisrings mit dem dimensionslosen Außenradius RA und dem dimensionslosen Innenradius RI liegt, dessen Mittelpunkt auf dem Drehpunkt des erzeugenden Schneckenprofils liegt. Die Position wird bevorzugt durch die Positionierung des Anfangspunkts und des Mittelpunkts des 1. Kreisbogens festgelegt. In dem vorliegenden Beispiel wird der Anfangspunkt des 1. Kreisbogens auf die Koordinate x=RA=0,6203, y=0,0000 und der Mittelpunkt des 1. Kreisbogens auf die Koordinate Mx_1=0,0000, My_1=0,0000 gelegt. Damit liegt der 1. Kreisbogen auf dem Schneckenaußenradius RA und die Anordnungsregel, dass mindestens ein Kreisbogen den Schneckenaußenradius RA berührt, ist erfüllt.

Die Winkel α_2, ..., α_(n-1) von n-2 weiteren Kreisbögen, also 14 weiteren Kreisbögen des erzeugenden Schneckenprofils werden erfindungsgemäß so gewählt, dass sie im Bogenmaß größer oder gleich 0 und kleiner oder gleich 2π sind. In dem vorliegenden Beispiel werden die Winkel dieser 14 weiteren Kreisbögen zu α_2=0,6330, α_3=0,6330, α_4=0,2208, α_5=0,1864, α_6=0,4003, α_7=0,4003, α_8=0,3934, α_9=0,2744, α_10=0,6330, α_11=0,6330, α_12=0,2208, α_13=0,1864, α_14=0,4143 und α_15=0,4143 gewählt. Die dimensionslosen Radien R_2, ..., R_(n-1) dieser 14 weiteren Kreisbögen des erzeugenden Schneckenprofils werden erfindungsgemäß so gewählt, dass sie größer oder gleich 0 und kleiner oder gleich dem dimensionslosen Achsabstand A sind. In dem vorliegenden Beispiel werden die dimensionslosen Radien dieser weiteren 14 Kreisbögen zu R_2=0,0000, R_3=1,0000, R_4=0,3797, R_5=0,7485, R_6=0,4726, R_7=0,4726, R_8=0,1977, R_9=0,4827, R_10=0,6000, R_11=0,4000, R_12=0,5173, R_13=0,1485, R_14=0,8887 und R_15=0,8887 gewählt. Gemäß den Anordnungsregeln werden die Kreisbögen so angeordnet, dass die Kreisbögen derart tangential ineinander übergehen, dass sich ein geschlossenes, konvexes Schneckenprofil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps<<1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Schneckenprofil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 14 weiteren Kreisbögen: Mx_2=0,5971, My_2=0,1681, Mx_3=-0,0187, My_3=-0,6198, Mx_4=0,0001, My_4=0,0002, Mx_5=0,0699, My_5=-0,3619, Mx_6=-0,0316, My_6=-0,1054, Mx_7=-0,0316, My_7=-0,1054, Mx_8=-0,2855, My_8=0,0000, Mx_9=-0,0005, My_9=0,0000, Mx_10=0,1124, My_10=0,0318, Mx_11=-0,0107, My_11=-0,1258, Mx_12=-0,0072, My_12=-0,0086, Mx_13=0,0626, My_13=-0,3707, Mx_14=-0,2097, My_14=0,3176, Mx_15=-0,2097, My_15=0,3176. Der Endpunkt des 4. Kreisbogens bzw. der Anfangspunkt des 5. Kreisbogens liegt auf dem dimensionslosen Kernradius RI des erzeugenden Schneckenprofils und die Anordnungsregel, dass mindestens ein Kreisbogen den dimensionslosen Kernradius RI berührt, ist erfüllt.

Der Winkel α_16 des letzten Kreisbogens des erzeugenden Schneckenprofils ergibt sich erfindungsgemäß daraus, dass die Summe der Winkel der 16 Kreisbögen des erzeugenden Schneckenprofils im Bogenmaß gleich 2π ist, wobei der Winkel α_16 im Bogenmaß größer oder gleich 0 und kleiner oder gleich 2π ist. In dem vorliegenden Beispiel ergibt sich der Winkel dieses letzten Kreisbogens zu α_16=0,3654. Der dimensionslose Radius R_16 des letzten Kreisbogens des erzeugenden Schneckenprofils ergibt sich erfindungsgemäß daraus, dass dieser letzte Kreisbogen das erzeugende Schneckenprofil schließt. Da der Endpunkt des 15. Kreisbogens gleich dem Anfangspunkt des ersten Kreisbogens ist, ergibt sich der Radius des 16. Kreisbogens zu R_16=0,0000. Der Mittelpunkt des 16. Kreisbogen liegt damit in den Koordinaten Mx_16=0,6203, My_16=0,0000.

Die Anordnungsregel, dass alle Kreisbögen des erzeugenden Schneckenprofils innerhalb oder auf den Grenzen eines Kreisrings mit dem dimensionslosen Außenradius RA und dem dimensionslosen Kernradius RI liegen, dessen Mittelpunkt auf dem Drehpunkt des erzeugenden Schneckenprofils liegt, ist durch die im vorliegenden Beispiel getroffene Wahl der Winkel und Radien der 16 Kreisbögen und deren Positionierung ebenfalls erfüllt

Das erzeugte Schneckenprofil ergibt sich aus dem erzeugenden Schneckenprofil. Die Anzahl der Kreisbögen n' des erzeugten Schneckenprofils ist erfindungsgemäß gleich der Anzahl der Kreisbögen n des erzeugenden Schneckenprofils. In dem vorliegendem Beispiel ergibt sich die Anzahl der Kreisbögen des erzeugten Schneckenprofils zu n'=16. Der dimensionslose Schneckenaußenradius RA' des erzeugten Schneckenprofils ist erfindungsgemäß gleich der Differenz des dimensionslosen Achsabstandes A minus des dimensionslosen Kernradius RI des erzeugenden Schneckenprofils. In dem vorliegenden Beispiel ergibt sich der dimensionslose Schneckenaußenradius des erzeugten Schneckenprofils zu RA'=A-RI=0,6202. Der dimensionslose Kernradius RI' des erzeugten Schneckenprofils ist erfindungsgemäß gleich der Differenz des dimensionslosen Achsabstandes A minus des dimensionslosen Schneckenaußenradius RA des erzeugenden Schneckenprofils. In dem vorliegenden Beispiel ergibt sich der dimensionslose Kernradius des erzeugten Schneckenprofils zu RI'=A-RA=0,3797.

Der Winkel α_i' des i'-ten Kreisbogens des erzeugten Schneckenprofils ist erfindungsgemäß gleich dem Winkel α_i des i-ten Kreisbogens des erzeugenden Schneckenprofils, wobei i und i' ganze Zahlen sind, die gemeinsam alle Werte im Bereich von 1 bis zur Anzahl der Kreisbögen n beziehungsweise n' durchlaufen. In dem vorliegenden Beispiel ergeben sich die Winkel der 16 Kreisbögen des erzeugten Schneckenprofils zu α_1'=α_1=0,2744, α_2'=α_2=0,6330, α_3'=α_3=0,6330, α_4'=α_4=0,2208, α_5'=α_5=0,1864, α_6'=α_6=0,4003, α_7'=α_7=0,4003, α_8'=α_8=0,3934, α_9'=α_9=0,2744, α_10'=α_10=0,6330, α_11'=α_11=0,6330, α_12'=α_12=0,2208, α_13'=α_13=0,1864, α_14'=α_14=0,4143, α_15'=α_15=0,4143 und α_16'=α_16=0,3654.

Die Summe des dimensionslosen Radius R=1' des i'-ten Kreisbogens des erzeugten Schneckenprofils und des dimensionslosen Radius R_i des i-ten Kreisbogens des erzeugenden Schneckenprofils ist erfindungsgemäß gleich dem dimensionslosen Achsabstand A, wobei i und i' ganze Zahlen sind, die gemeinsam alle Werte im Bereich 1 bis zur Anzahl der Kreisbögen n beziehungsweise n' durchlaufen (R_1'+ R_1=A=1, ..., R_n'+ R_n=A=1). In dem vorliegenden Beispiel ergeben sich die Radien der 16 Kreisbögen des erzeugten Schneckenprofils zu R_1'=A-R_1=1-0,6203=0,3797, R_2'=AR_2=1-0,0000=1,0000, R_3'=A-R_3=1-1,0000=0,0000, R_4'=A-R_4=1-0,3797=0,6203, R_5'=A-R_5=1-0,7485=0,2515, R_6'=A-R_6=1-0,4726=0,5274, R_7'=A-R_7=1-0,4726=0,5274, R_8'=A_R_8=1-0,1977=0,8023, R_9'=A-R_9=1-0,4827=0.5173, R_10'=AR 10=1-0,6000=0,4000, R_11'=A-R_11=1-0,4000=0,6000, R_12'=A-R_12=1-0,5173=0,4827, R_13'=A-R_13=1-0,1485=0,8515, R_14'=A-R_14=1-0,8887=0,1113 R_15'=A-R_15=1-0,8887=0,1113 und R_16'=A-R_16=1-0,0000=1,0000.

Der Mittelpunkt des i'-ten Kreisbogens des erzeugten Schneckenprofils besitzt erfindungsgemäß einen Abstand von dem Mittelpunkt des i-ten Kreisbogens des erzeugenden Schneckenprofils, der gleich dem dimensionslosen Achsabstand A ist, und der Mittelpunkt des i'-ten Kreisbogens des erzeugten Schneckenprofils besitzt erfindungsgemäß einen Abstand von dem Drehpunkt des erzeugten Schneckenprofils, der gleich dem Abstand des Mittelpunkts des i-ten Kreisbogens des erzeugenden Schneckenprofils von dem Drehpunkt des erzeugenden Schneckenprofils ist, und die Verbindungslinie zwischen dem Mittelpunkt des i'ten Kreisbogens des erzeugten Schneckenprofils und dem Mittelpunkt des i-ten Kreisbogens des erzeugenden Schneckenprofils ist erfindungsgemäß eine Parallele zu einer Verbindungslinie zwischen dem Drehpunkt des erzeugten Schneckenprofils und dem Drehpunkt des erzeugenden Schneckenprofils, wobei i und i' ganze Zahlen sind, die gemeinsam alle Werte im Bereich 1 bis zur Anzahl der Kreisbögen n beziehungsweise n' durchlaufen (i'=i). Durch die Positionierung des Drehpunktes des erzeugenden Schneckenprofils in den Punkt x=0, y=0 und durch die Positionierung des Drehpunktes des erzeugten Schneckenprofils in den Punkt x=A=1, y=0 ergibt sich die x-Koordinate eines Kreismittelpunkts Mx_i' des erzeugten Schneckenprofils aus der Addition der x-Koordinate des Kreismittelpunkts Mx_i des erzeugenden Schneckenprofils plus des dimensionslosen Achsabstandes A und die y-Koordinate des Kreismittelpunkts My_i' des erzeugten Schneckenprofils ist gleich der y-Koordinate des Kreismittelpunkts My_i des erzeugenden Schneckenprofils. In dem vorliegenden Beispiel ergeben sich die Positionen der Mittelpunkte der 16 Kreisbögen des erzeugten Schneckenprofils zu Mx_1'=1,0000, My_1'=0,0000, Mx_2'=1,5971, My_2'=0,1681, Mx_3'=0,9813, My_3'=-0,6198, Mx_4'=1,0001, My_4'=0,0002, Mx_5'=1,0699, My_5'=-0,3619, Mx_6'=0,9684, My_6'=-0,1054, Mx_7'=0,9684, My_7'=-0,1054, Mx_8'=0,7145, My_8'=0,0000, Mx_9'=0,9995, My_9'=0,0000, Mx_10'=1,1124, My_10'=0,0318, Mx_11'=0,9893, My_11'=0,1258, Mx_12'=0,9928, My_12'=-0,0086, Mx_13'=1,0626, My_13'=-0,3707, Mx_14'=0,7903, My_14'=0,3176, Mx_15'=0,7903, My_15'=0,3176 und Mx_16'=1,6203, My_16'=0,0000.

Ein Anfangspunkt des i'-ten Kreisbogens des erzeugten Schneckenprofils liegt erfindungsgemäß in einer Richtung bezogen auf den Mittelpunkt des i'-ten Kreisbogens des erzeugten Schneckenprofils, die entgegengesetzt derjenigen Richtung ist, die ein Anfangspunkt des i-ten Kreisbogens des erzeugenden Schneckenprofils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i). In dem vorliegenden Beispiel liegt daher beispielsweise der Anfangspunkt des 1. Kreisbogens des erzeugten Schneckenprofils auf der Koordinate x=0,6203, y=0.

Aus dem erfindungsgemäßen Verfahren zur Erzeugung von ebenen, dicht kämmenden, selbstreinigenden, gleichsinnig drehenden Schneckenprofilen folgt in dem vorliegenden Beispiel für das erzeugte Schneckenprofil, dass alle 16 Kreisbögen des erzeugen Schneckenprofils tangential ineinander übergehen und ein geschlossenes, konvexes Schneckenprofil bilden. Auch liegen alle 16 Kreisbögen des erzeugten Schneckenprofils innerhalb oder auf den Grenzen eines Kreisrings mit dem dimensionslosen Außenradius RA' und dem dimensionslosen Kernradius RI', dessen Mittelpunkt auf dem Drehpunkt des erzeugten Schneckenprofils liegt. Ferner liegt der 1. Kreisbogen des erzeugten Schneckenprofils auf dem dimensionslosen Kernradius RI' und die Anordnungsregel, dass mindestens ein Kreisbogen den dimensionslosen Kernradius RI' berührt, ist erfüllt. Ferner liegt der Endpunkt des 4. Kreisbogens bzw. der Anfangspunkt des 5. Kreisbogens des erzeugten Schneckenprofils auf dem dimensionslosen Schneckenaußenradius RA' des erzeugten Schneckenprofils und die Anordnungsregel, dass mindestens ein Kreisbogen den dimensionslosen Schneckenaußenradius RA' berührt, ist erfüllt.

Aus dem Verfahren zur Erzeugung von ebenen, dicht kämmenden, selbstreinigenden, gleichsinnig drehenden Schneckenprofilen mit einer Gangzahl z folgt für das erzeugte Schneckenprofil, dass jeder der Abschnitte des erzeugten Schneckenprofils derart aufgebaut ist, das die Radien der Kreisbögen des erzeugten Schneckenprofils in umgekehrter Reihenfolge gleich den Radien der Kreisbögen des erzeugenden Schneckenprofils sind. Wie der Fachmann erkennt, lassen sich die Profilabschnitte des erzeugenden Schneckenprofils und des erzeugten Schneckenprofils durch Rotation und Spiegeln zur Deckung bringen. In den nachfolgenden Figuren, die Abschnitte von Schneckenprofilen unterschiedlicher Gangzahl behandeln, wird daher häufig nicht mehr zwischen dem erzeugenden und dem erzeugten Schneckenprofil unterschieden, sondern nur noch von Schneckenprofilen gesprochen.

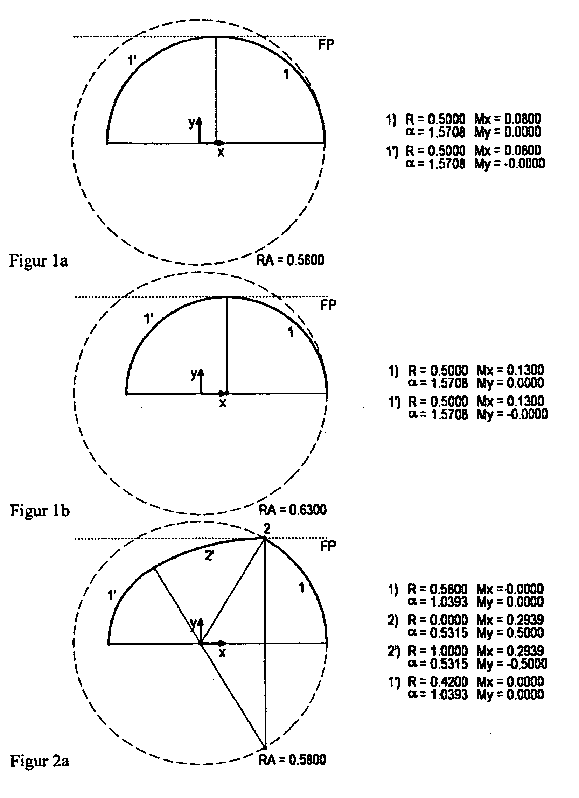

Die Figuren 1 bis 24 zeigen nach dem erfindungsgemäßen Verfahren erhaltene Schneckenprofile der Gangzahl 1. In den Figuren 1 bis 20 werden immer die Hälfte und damit ein Abschnitt eines Schneckenprofils der Gangzahl 1 gezeigt. Alle diese Figuren weisen den gleichen Aufbau auf, der nachfolgend im Detail beschrieben wird. In der Mitte der Figuren liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen, versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert.

Die Figuren 1 bis 24 zeigen Schneckenprofile und Schneckenelemente, in denen der dimensionslose Schneckenaußenradius RA die Werte 0,54, 0,56, 0,57, 0,58 und 0,63 hat. Das erfindungsgemäße Verfahren zur Erzeugung von ebenen, dicht kämmenden, selbstreinigenden, gleichsinnig drehenden Schneckenprofilen der Gangzahl z ist nicht auf diese diskreten Werte des dimensionslosen Schneckenaußenradius limitiert. Unter Anwendung des erfindungsgemäßen Verfahrens können eingängige Schneckenprofile mit einem dimensionslosen Schneckenaußenradius zwischen RA größer 0,5 und RA kleiner oder gleich 1, bevorzugt im Bereich von RA=0,52 bis RA=0,707 erzeugt werden.

Schneckenprofile, bei denen ein Abschnitt des Schneckenprofils aus insgesamt 2 Kreisbögen bestehen, werden nachfolgend als 2-Kreis-Schneckenprofile bezeichnet. Schneckenprofile, bei denen ein Abschnitt des Schneckenprofils aus insgesamt 4 Kreisbögen bestehen, werden nachfolgend als 4-Kreis-Schneckenprofile bezeichnet. Schneckenprofile, bei denen ein Abschnitt des Schneckenprofils aus insgesamt 6 Kreisbögen bestehen, werden nachfolgend als 6-Kreis-Schneckenprofile bezeichnet. Schneckenprofile, bei denen ein Abschnitt des Schneckenprofils aus insgesamt 8 Kreisbögen bestehen, werden nachfolgend als 8-Kreis-Schneckenprofile bezeichnet.
Figur 1: Die Figuren 1a und 1b zeigen bevorzugte 2-Kreis-Schneckenprofile. Die Figuren 1a und 1b unterscheiden sich durch den Schneckenaußenradius RA. In der Figur 1a beträgt der Schneckenaußenradius RA=0,58. In der Figur 1b beträgt der Schneckenaußenradius RA=0,63. In den Figuren 1a und 1b besitzt der 1. Kreisbogen jeweils den Radius R_1=A/2=0,5. In den Figuren 1a und 1b besitzt der 1. Kreisbogen jeweils den Winkel α_1=π/2.

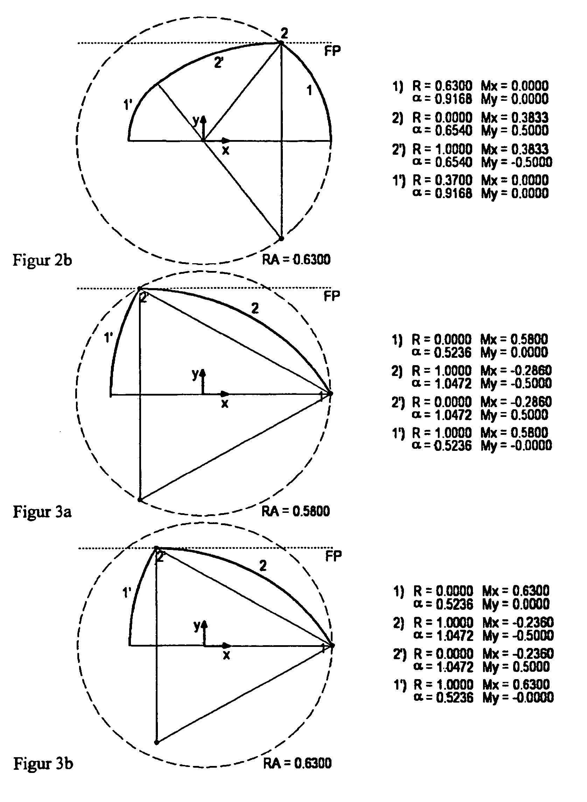

**Figur 2****:** Die Figuren 2a und 2b zeigen bevorzugte 4-Kreis-Schneckenprofile. Die Figuren 2a und 2b unterscheiden sich durch den Schneckenaußenradius RA. In der Figur 2a beträgt der Schneckenaußenradius RA=0,58. In der Figur 2b beträgt der Schneckenaußenradius RA=0,63. In den Figuren 2a und 2b besitzt der 1. Kreisbogen jeweils den Radius R_1=RA. In den Figuren 2a und 2b besitzt der 2. Kreisbogen jeweils den Radius R_2=0. In den Figuren 2a und 2b ist der Winkel α_1 des 1. Kreisbogens vom Schneckenaußenradius RA abhängig. In den Figuren 2a und 2b ist der Winkel α_2 des 2. Kreisbogens vom Schneckenaußenradius RA abhängig.
**Figur 3****:** Die Figuren 3a und 3b zeigen weitere bevorzugte 4-Kreis-Schneckenprofile. Die Figuren 3a und 3b unterscheiden sich durch den Schneckenaußenradius RA. In der Figur 3a beträgt der Schneckenaußenradius RA=0,58. In der Figur 3b beträgt der Schneckenaußenradius RA=0,63. In den Figuren 3a und 3b besitzt der 1. Kreisbogen jeweils den Radius R_1=0. In den Figuren 3a und 3b besitzt der 2. Kreisbogen jeweils den Radius R_2=A=1. In den Figuren 3a und 3b besitzt der 1. Kreisbogen jeweils den Winkel α_1=π/6. In den Figuren 3a und 3b besitzt der 2. Kreisbogen jeweils den Winkel α_2=π/3.

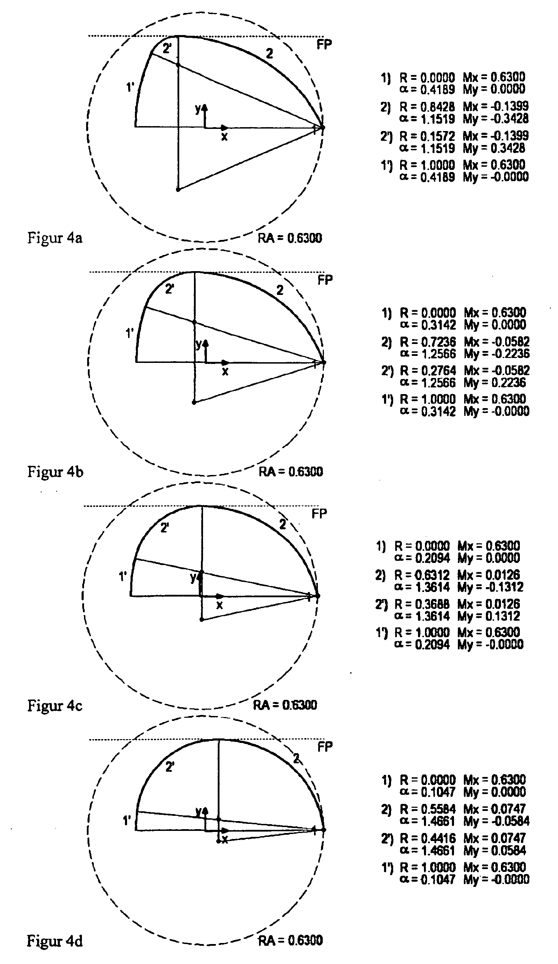

**Figur 4****:** Die Figuren 4a bis 4d zeigen weitere bevorzugte 4-Kreis-Schneckenprofile. Die Figuren 4a bis 4d zeigen einen bevorzugten Übergang zwischen der Figur 3b und der Figur 1b. In den Figuren 4a bis 4d beträgt der Schneckenaußenradius jeweils RA=0,63. In den Figuren 4a bis 4d besitzt der 1. Kreisbogen jeweils den Radius R_1=0. In den Figuren 4a bis 4d wird der Winkel α_1 des 1. Kreisbogens schrittweise verringert.

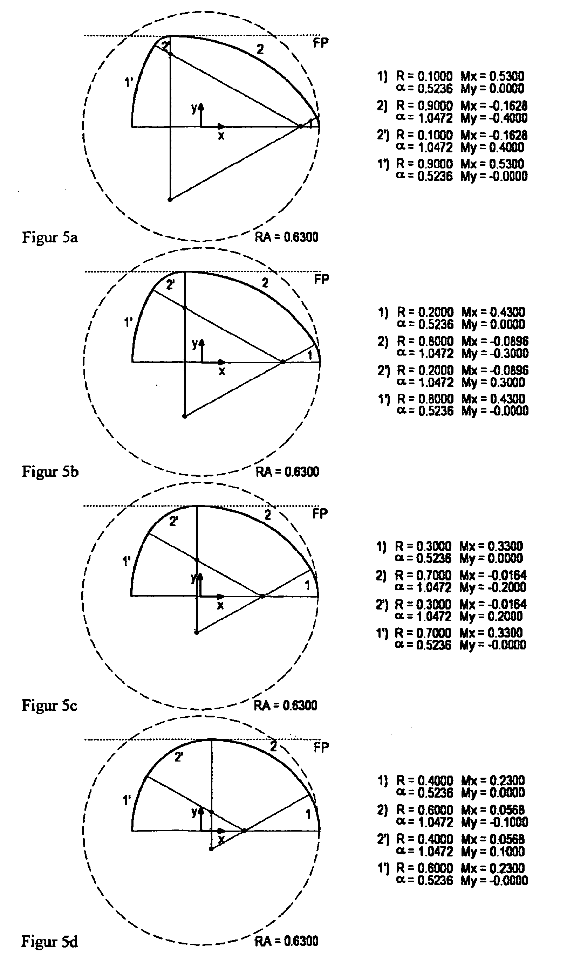

**Figur 5****:** Die Figuren 5a bis 5d zeigen weitere bevorzugte 4-Kreis-Schneckenprofile. Die Figuren 5a bis 5d zeigen einen weiteren bevorzugten Übergang zwischen der Figur 3b und der Figur 1b. In den Figuren 5a bis 5d beträgt der Schneckenaußenradius jeweils RA=0,63. In den Figuren 5a bis 5d besitzt der 1. Kreisbogen jeweils den Winkel α_1=π/6. In den Figuren 5a bis 5d wird der Radius R_1 des 1. Kreisbogens schrittweise vergrößert.

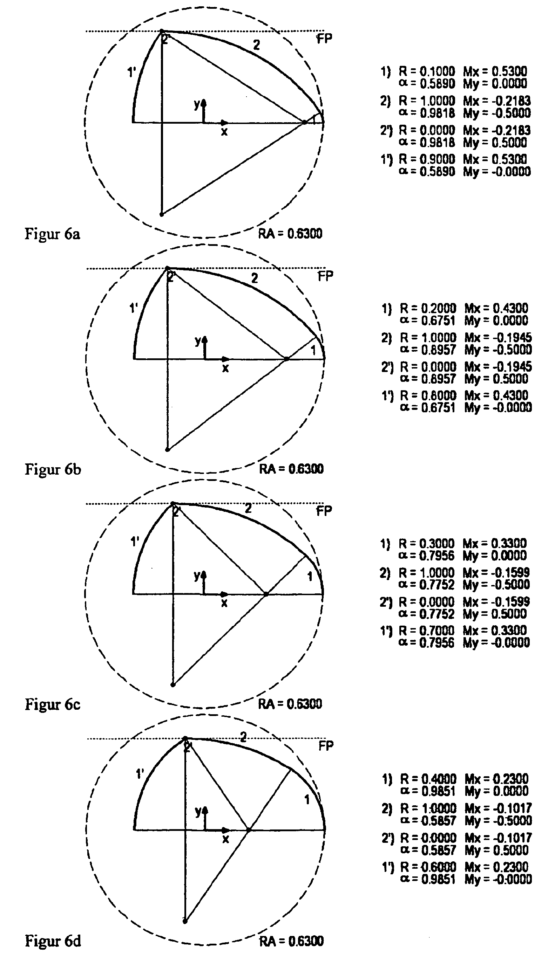

**Figur 6****:** Die Figuren 6a bis 6d zeigen weitere bevorzugte 4-Kreis-Schneckenprofile. Die Figuren 6a bis 6d zeigen einen weiteren bevorzugten Übergang zwischen der Figur 3b und der Figur 1 b. In den Figuren 6a bis 6d beträgt der Schneckenaußenradius jeweils RA=0,63. In den Figuren 6a bis 6d besitzt der 2. Kreisbogen jeweils den Radius R_2=A=1. In den Figuren 6a bis 6d wird der Radius R_1 des 1. Kreisbogens schrittweise vergrößert.

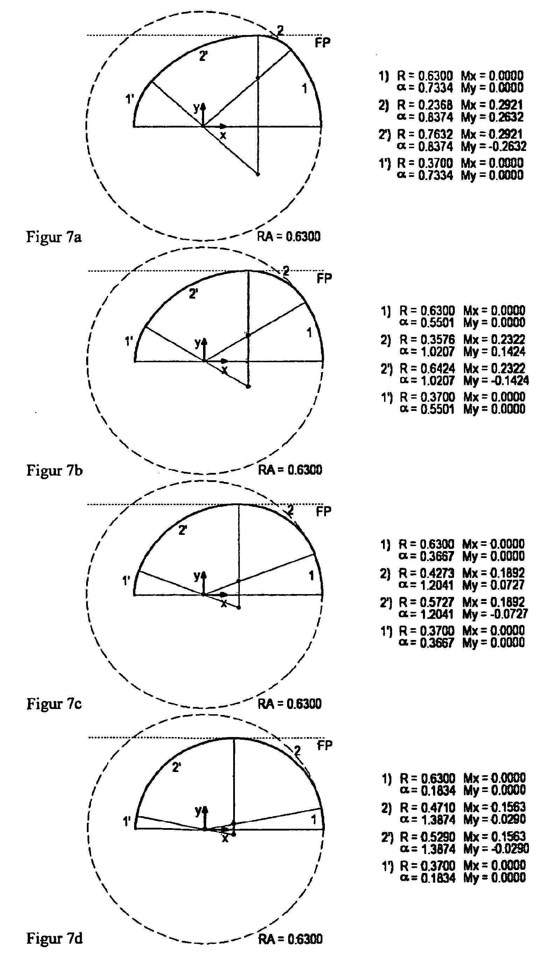

**Figur 7****:** Die Figuren 7a bis 7d zeigen weitere bevorzugte 4-Kreis-Schneckenprofile. Die Figuren 7a bis 7d zeigen einen bevorzugten Übergang zwischen der Figur 2b und der Figur 1b. In den Figuren 7a bis 7d beträgt der Schneckenaußenradius jeweils RA=0,63. In den Figuren 7a bis 7d besitzt der 1. Kreisbogen jeweils den Radius R_1=RA. In den Figuren 7a bis 7d wird der Winkel α_1 des 1. Kreisbogens schrittweise verringert.

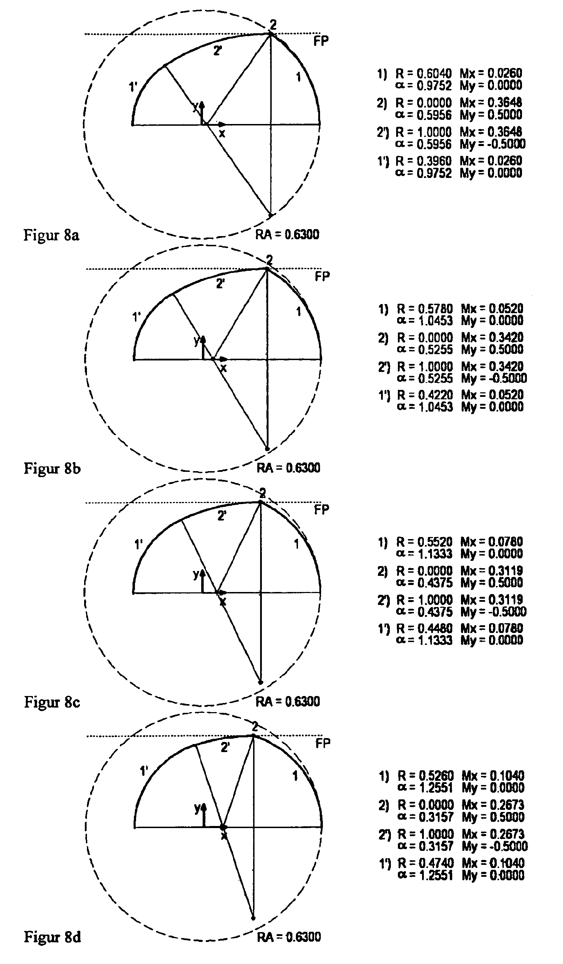

**Figur 8****:** Die Figuren 8a bis 8d zeigen weitere bevorzugte 4-Kreis-Schneckenprofile. Die Figuren 8a bis 8d zeigen einen weiteren bevorzugten Übergang zwischen der Figur 2b und der Figur 1b. In den Figuren 8a bis 8d beträgt der Schneckenaußenradius jeweils RA=0,63. In den Figuren 8a bis 8d besitzt der 2. Kreisbogen jeweils den Radius R_2=0. In den Figuren 8a bis 8d wird der Radius R_1 des 1. Kreisbogens schrittweise verringert und der Winkel α_1 des 1. Kreisbogens schrittweise vergrößert.

Ein direkter Übergang zwischen Figur 2b und Figur 3b ist mittels eines 4-Kreis-Schneckenprofils nicht möglich. Der Übergang erfolgt in einem solchen Fall über Figur 1b.

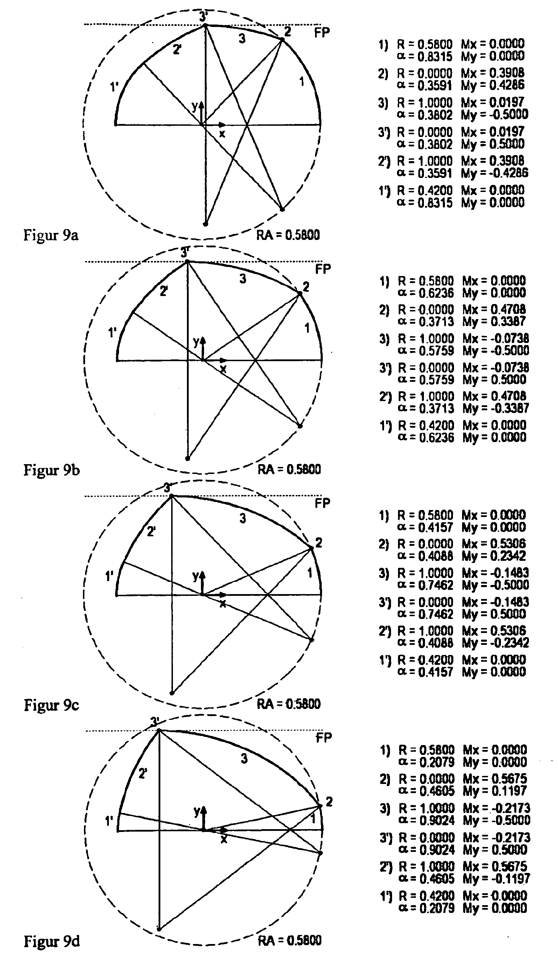

**Figur 9****:** Die Figuren 9a bis 9d zeigen bevorzugte 6-Kreis-Schneckenprofile. Die Figuren 9a bis 9d zeigen einen bevorzugten Übergang zwischen der Figur 2a und der Figur 3a. In den Figuren 9a bis 9d beträgt der Schneckenaußenradius jeweils RA=0,58. In den Figuren 9a bis 9d besitzt der 1. Kreisbogen jeweils den Radius R_1=RA. In den Figuren 9a bis 9d besitzt der 2. Kreisbogen jeweils den Radius R_2=0. In den Figuren 9a bis 9d besitzt der 3. Kreisbogen jeweils den Radius R_3=A=1. In den Figuren 9a bis 9d wird der Winkel α_1 des 1. Kreisbogens schrittweise verringert.

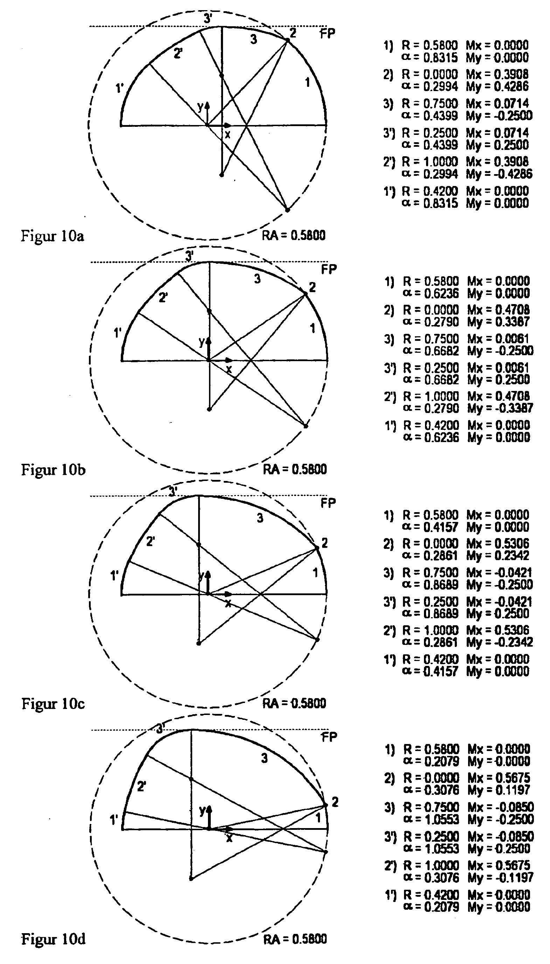

**Figur 10****:** Die Figuren 10a bis 10d zeigen weitere bevorzugte 6-Kreis-Schneckenprofile. Die Figuren 10a bis 10d zeigen einen weiteren bevorzugten Übergang zwischen der Figur 2a und einer Figur, die ähnlich der Figur 4b ist. In den Figuren 10a bis 10d beträgt der Schneckenaußenradius jeweils RA=0,58. In den Figuren 10a bis 10d besitzt der 1. Kreisbogen jeweils den Radius R_1=RA. In den Figuren 10a bis 10d besitzt der 2. Kreisbogen jeweils den Radius R_2=0. In den Figuren 10a bis 10d besitzt der 3. Kreisbogen jeweils den Radius R_3=0,75. In den Figuren 10a bis 10d wird der Winkel α_1 des 1. Kreisbogens schrittweise verringert.

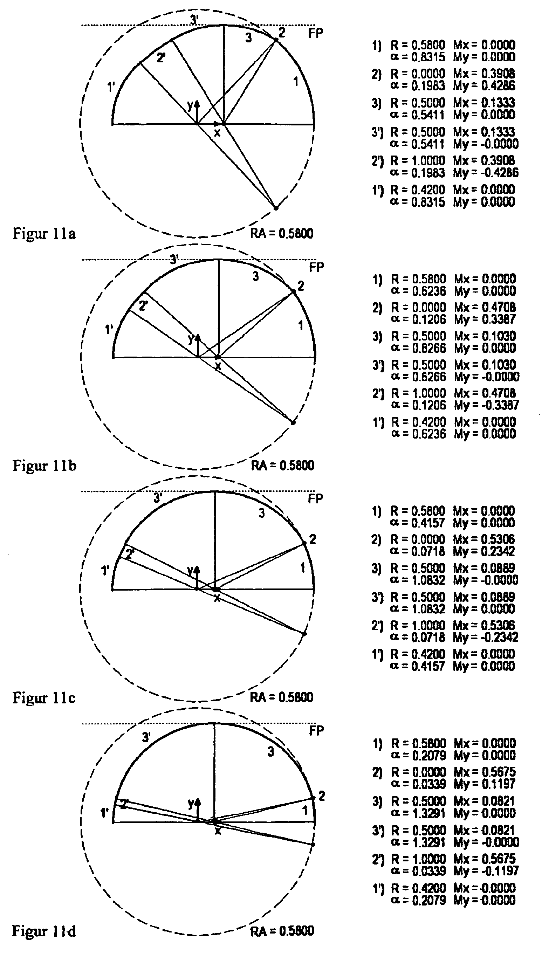

**Figur 11****:** Die Figuren 11a bis 11d zeigen weitere bevorzugte 6-Kreis-Schneckenprofile. Die Figuren 11a bis 11d zeigen einen weiteren bevorzugten Übergang zwischen der Figur 2a und der Figur 1a. In den Figuren 11a bis 11 d beträgt der Schneckenaußenradius jeweils RA=0,58. In den Figuren 11a bis 11d besitzt der 1. Kreisbogen jeweils den Radius R_1=RA. In den Figuren 11 a bis 11d besitzt der 2. Kreisbogen jeweils den Radius R_2=0. In den Figuren 11a bis 11d besitzt der 3. Kreisbogen jeweils den Radius R_3=0,5. In den Figuren 11a bis 11d wird der Winkel α_1 des 1. Kreisbogens schrittweise verringert
Neben den bereits geschilderten Übergängen der Schneckenprofile innerhalb der einzelnen Figuren ist auch ein figurübergreifender Übergang möglich. Beispielsweise können die Schneckenprofile der Figuren 9a, 10a, 11a oder der Figuren 9b, 10b, 11b schrittweise ineinander übergehen.

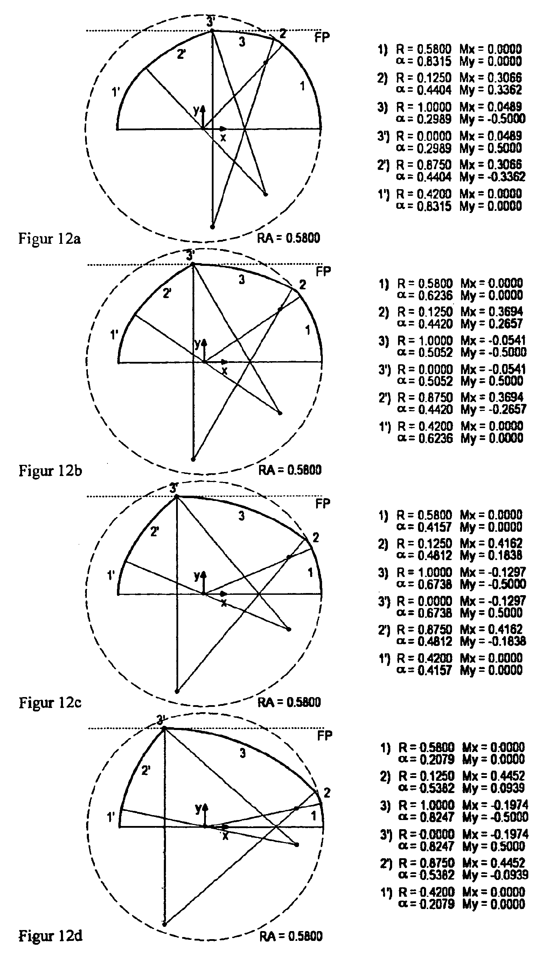

**Figur 12****:** Die Figuren 12a bis 12d zeigen weitere bevorzugte 6-Kreis-Schneckenprofile. Die Figuren 12a bis 12d zeigen einen weiteren bevorzugten Übergang ausgehend von Figur 2a. In den Figuren 12a bis 12d beträgt der Schneckenaußenradius jeweils RA=0,58. In den Figuren 12a bis 12d besitzt der 1. Kreisbogen jeweils den Radius R_1=RA. In den Figuren 12a bis 12d besitzt der 2. Kreisbogen jeweils den Radius R_2=0,125. In den Figuren 12a bis 12d besitzt der 3. Kreisbogen jeweils den Radius R_3=A=1. In den Figuren 12a bis 12d wird der Winkel α_1 des 1. Kreisbogens schrittweise verringert.

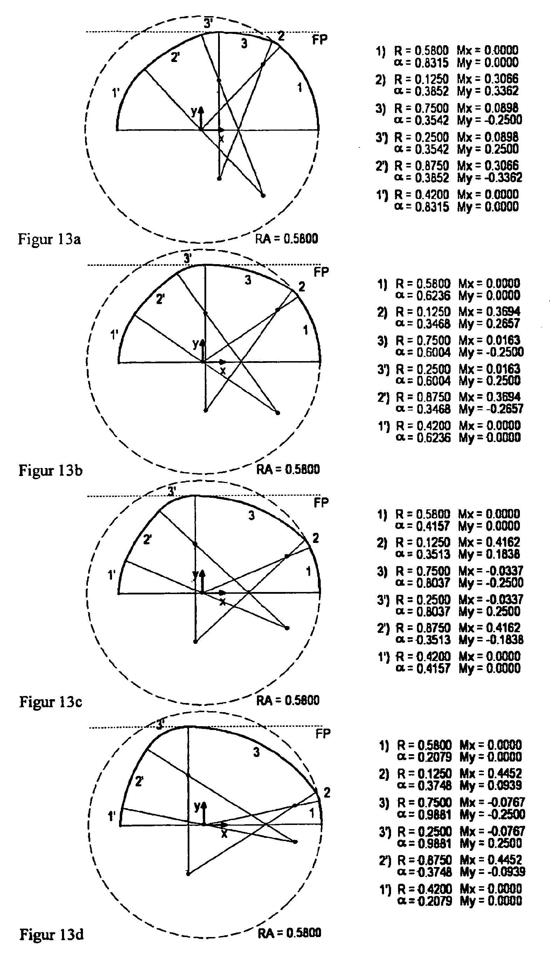

**Figur 13****:** Die Figuren 13a bis 13d zeigen weitere bevorzugte 6-Kreis-Schneckenprofile. Die Figuren 13a bis 13d zeigen einen weiteren bevorzugten Übergang ausgehend von Figur 2a. In den Figuren 13a bis 13d beträgt der Schneckenaußenradius jeweils RA=0,58. In den Figuren 13a bis 13d besitzt der 1. Kreisbogen jeweils den Radius R_1=RA. In den Figuren 13a bis 13d besitzt der 2. Kreisbogen jeweils den Radius R_2=0,125. In den Figuren 13a bis 13d besitzt der 3. Kreisbogen jeweils den Radius R_3=0,75. In den Figuren 13a bis 13d wird der Winkel α_1 des 1. Kreisbogens schrittweise verringert.

Neben den bereits geschilderten Übergängen der Schneckenprofile innerhalb der einzelnen Figuren ist auch ein figurübergreifender Übergang möglich. Beispielsweise können die Schneckenprofile der Figuren 12a und 13a oder der Figuren 12b und 13b schrittweise ineinander übergehen.

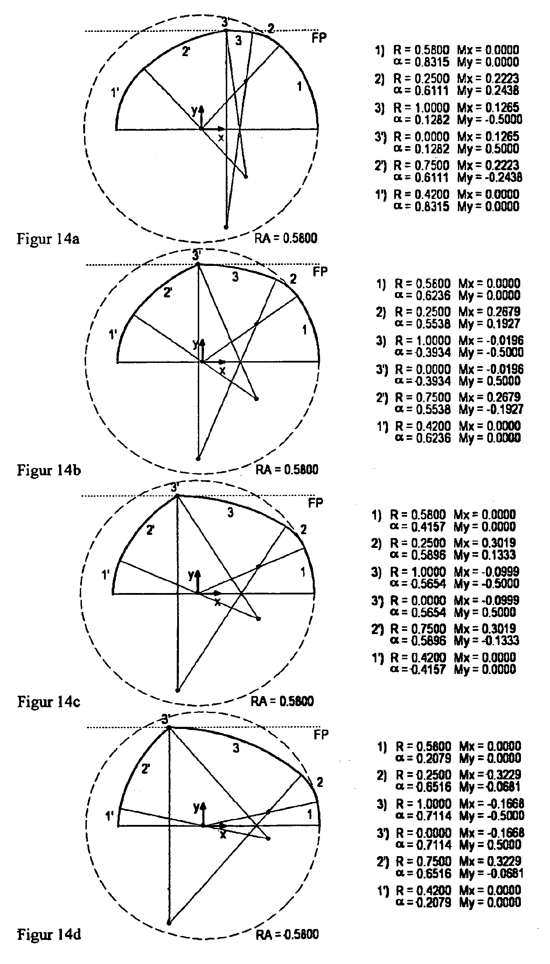

**Figur 14****:** Die Figuren 14a bis 14d zeigen weitere bevorzugte 6-Kreis-Schneckenprofile. Die Figuren 14a bis 14d zeigen einen weiteren bevorzugten Übergang ausgehend von Figur 2a. In den Figuren 14a bis 14d beträgt der Schneckenaußenradius jeweils RA=0,58. In den Figuren 14a bis 14d besitzt der 1. Kreisbogen jeweils den Radius R_1=RA. In den Figuren 14a bis 14d besitzt der 2. Kreisbogen jeweils den Radius R_2=0,25. In den Figuren 14a bis 14d besitzt der 3. Kreisbogen jeweils den Radius R_3=A=1. In den Figuren 14a bis 14d wird der Winkel α_1 des 1. Kreisbogens schrittweise verringert.

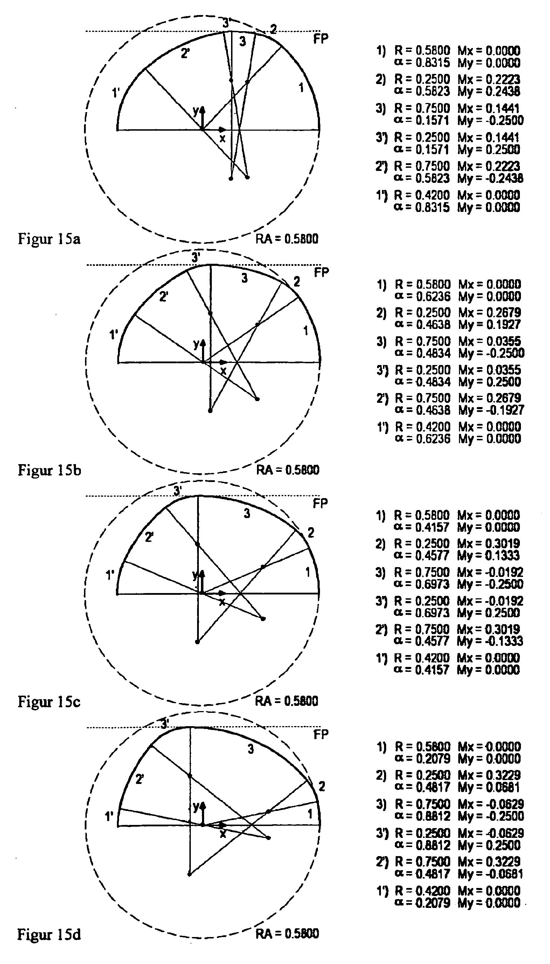

**Figur 15****:** Die Figuren 15a bis 15d zeigen weitere bevorzugte 6-Kreis-Schneckenprofile. Die Figuren 15a bis 15d zeigen einen weiteren bevorzugten Übergang ausgehend von Figur 2a. In den Figuren 15a bis 15d beträgt der Schneckenaußenradius jeweils RA=0,58. In den Figuren 15a bis 15d besitzt der 1. Kreisbogen jeweils den Radius R_1=RA. In den Figuren 15a bis 15d besitzt der 2. Kreisbogen jeweils den Radius R_2=0,25. In den Figuren 15a bis 15d besitzt der 3. Kreisbogen jeweils den Radius R_3=0,75. In den Figuren 15a bis 15d wird der Winkel α_1 des 1. Kreisbogens schrittweise verringert.

Neben den bereits geschilderten Übergängen der Schneckenprofile innerhalb der einzelnen Figuren ist auch ein figurübergreifender Übergang möglich. Beispielsweise können die Schneckenprofile der Figuren 14a und 15a oder der Figuren 9a, 12a, 14a oder der Figuren 10a, 13a, 15a schrittweise ineinander übergehen.

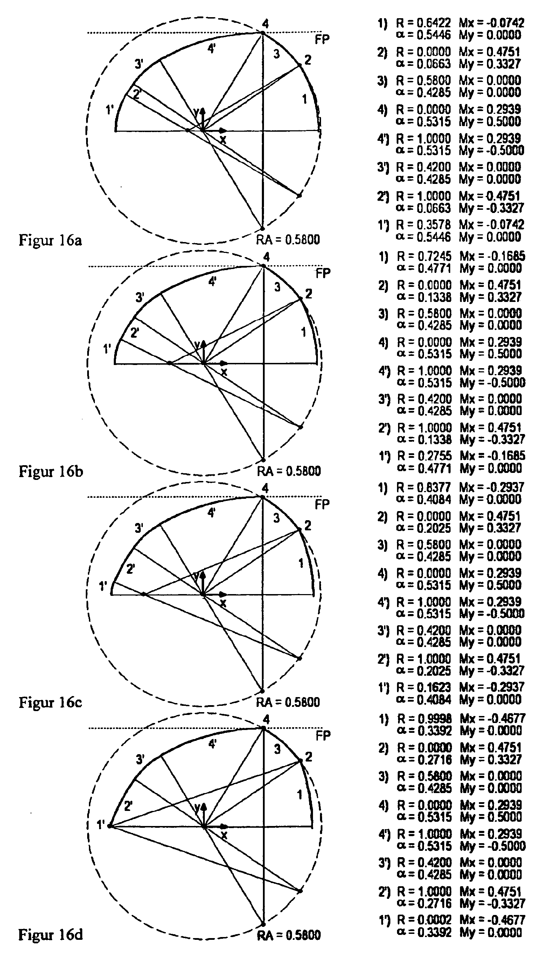

In den bisherigen Figuren zu eingängigen Schneckenprofilen startete das Schneckenprofil immer in dem Punkt x=RA, y=0. In den Figuren 16 bis 19 werden eine Auswahl von 8-Kreis-Schneckenprofile gezeigt, die an einem Punkt x<RA, y=0 starten und bei denen nur der 3. Kreisbogen auf dem Schneckenaußenradius liegt.
**Figur 16****:** Die Figuren 16a bis 16d zeigen bevorzugte 8-Kreis-Schneckenprofile. Die Figuren 16a bis 16d zeigen einen bevorzugten Übergang ausgehend von Figur 2a. In den Figuren 16a bis 16d beträgt der Schneckenaußenradius jeweils RA=0,58. In den Figuren 16a bis 16d wird der Radius R_1 des 1. Kreisbogens schrittweise vergrößert. In den Figuren 16a bis 16d besitzt der 2. Kreisbogen jeweils den Radius R_2=0. In den Figuren 16a bis 16d besitzt der 3. Kreisbogen jeweils den Radius R_3=RA und liegt auf dem Schneckenaußenradius. In den Figuren 16a bis 16d besitzt der 4. Kreisbogen jeweils den Radius R_4=0. In den Figuren 16a bis 16d wird der Winkel α_1 des 1. Kreisbogens schrittweise verringert und der Winkel α_2 des 2. Kreisbogens schrittweise vergrößert. In den Figuren 16a bis 16d besitzt der 3. Kreisbogen jeweils den Winkel α_3=0,4285. In den Figuren 16a bis 16d besitzt der 4. Kreisbogen jeweils den Winkel α_4=0,5315.

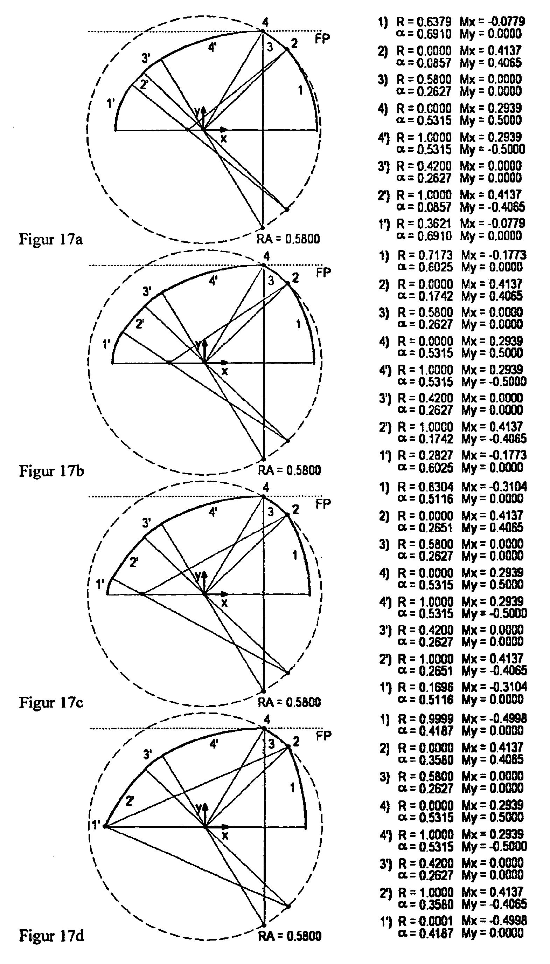

**Figur 17****:** Die Figuren 17a bis 17d zeigen weitere bevorzugte 8-Kreis-Schneckenprofile. Die Figuren 17a bis 17d zeigen einen weiteren bevorzugten Übergang ausgehend von Figur 2a. In den Figuren 17a bis 17d beträgt der Schneckenaußenradius jeweils RA=0,58. In den Figuren 17a bis 17d wird der Radius R_1 des 1. Kreisbogens schrittweise vergrößert. In den Figuren 17a bis 17d besitzt der 2. Kreisbogen jeweils den Radius R_2=0. In den Figuren 17a bis 17d besitzt der 3. Kreisbogen jeweils den Radius R_3=RA und liegt auf dem Schneckenaußenradius. In den Figuren 17a bis 17d wird der Winkel α_1 des 1. Kreisbogens schrittweise verringert und der Winkel α_2 des 2. Kreisbogens schrittweise vergrößert. In den Figuren 17a bis 17d besitzt der 3. Kreisbogen jeweils den Winkel α_3=0,2627. In den Figuren 17a bis 17d besitzt der 4. Kreisbogen jeweils den Winkel α_4=0,5315. In den Figuren 17a bis 17d besitzt der 4. Kreisbogen jeweils den Radius R_4=0, d.h. an dieser Stelle weist das Profil einen Knick auf. Der Mittelpunkt des Kreisbogens 4 fällt mit dem Knick zusammen. Die "Größe des Knicks" ist durch den Winkel α_4 gegeben, d.h. der Übergang vom Kreisbogen 3 auf den Kreisbogen 4' erfolgt durch Drehung um den Winkel α_4. Oder anders ausgedrückt: eine Tangente an den Kreisbogen 3 im Mittelpunkt des Kreisbogens 4 schneidet eine Tangente an den Kreisbogen 4' ebenfalls im Mittelpunkt des Kreisbogens 4 in einem Winkel von α_4. Unter Berücksichtigung des Kreisbogens 4 gehen jedoch alle benachbarten Kreisbögen 3→4, 4→4' tangential ineinander über.

Neben den bereits geschilderten Übergängen der Schneckenprofile innerhalb der einzelnen Figuren ist auch ein figurübergreifender Übergang möglich. Beispielsweise können die Schneckenprofile der Figuren 16a und 17a oder der Figuren 16b und 17b schrittweise ineinander übergehen.

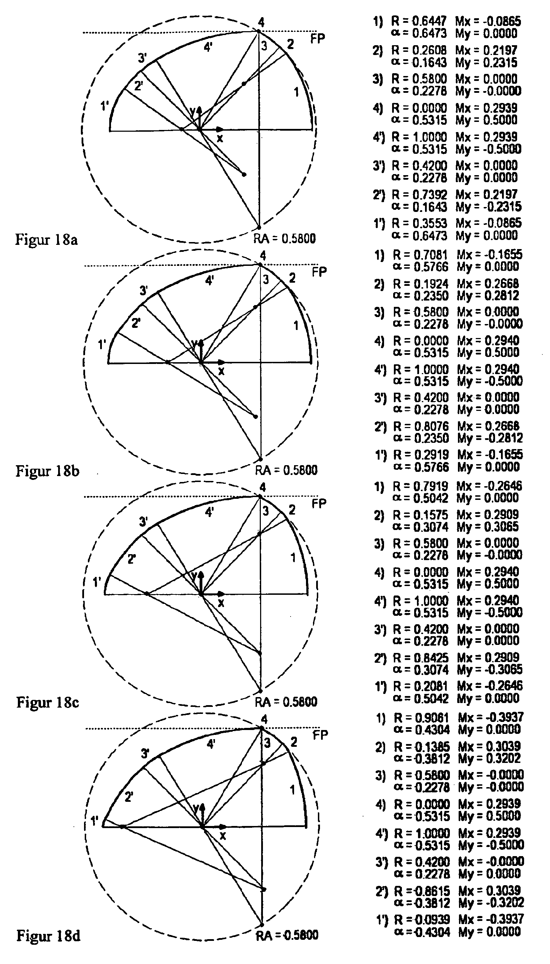

**Figur 18****:** Die Figuren 18a bis 18d zeigen weitere bevorzugte 8-Kreis-Schneckenprofile. Die Figuren 18a bis 18d zeigen einen weiteren bevorzugten Übergang ausgehend von Figur 2a. In den Figuren 18a bis 18d beträgt der Schneckenaußenradius jeweils RA=0,58. In den Figuren 18a bis 18d wird der Radius R_1 des 1. Kreisbogens schrittweise vergrößert und der Radius R_2 des 2. Kreisbogens schrittweise verkleinert. In den Figuren 18a bis 18d besitzt der 3. Kreisbogen jeweils den Radius R_3=RA und liegt auf dem Schneckenaußenradius. In den Figuren 18a bis 18d besitzt der 4. Kreisbogen jeweils den Radius R_4=0. In den Figuren 18a bis 18d wird der Winkel α_1 des 1. Kreisbogens schrittweise verringert und der Winkel α_2 des 2. Kreisbogens schrittweise vergrößert. In den Figuren 18a bis 18d besitzt der 3. Kreisbogen jeweils den Winkel α_3=0,2278. In den Figuren 18a bis 18d besitzt der 4. Kreisbogen jeweils den Winkel α_4=0,5315.

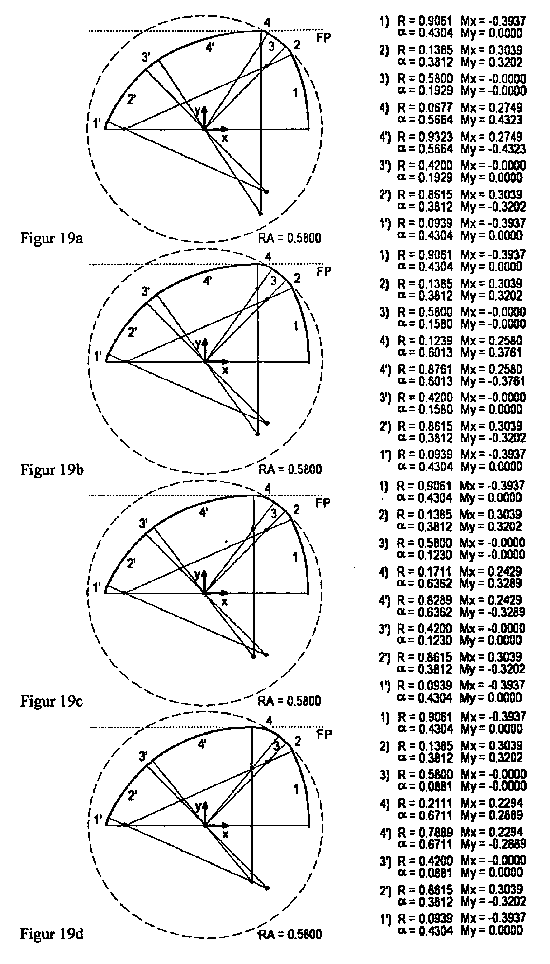

**Figur 19****:** Die Figuren 19a bis 19d zeigen weitere bevorzugte 8-Kreis-Schneckenprofile. Die Figuren 19a bis 19d zeigen einen bevorzugten Übergang ausgehend von Figur 18d. In den Figuren 19a bis 19d beträgt der Schneckenaußenradius jeweils RA=0,58. In den Figuren 19a bis 19d besitzt der 1. Kreisbogen jeweils den Radius R_1=0,9061. In den Figuren 19a bis 19d besitzt der 2. Kreisbogen jeweils den Radius R_2=0,1385. In den Figuren 19a bis 19d besitzt der 3. Kreisbogen jeweils den Radius R_3=RA und liegt auf dem Schneckenaußenradius. In den Figuren 19a bis 19d wird der Radius R_4 des 4. Kreisbogens schrittweise vergrößert. In den Figuren 19a bis 19d besitzt der 1. Kreisbogen jeweils den Winkel α_1=0,4304. In den Figuren 19a bis 19d besitzt der 2. Kreisbogen jeweils den Winkel α_2=0,3812. In den Figuren 19a bis 19d wird der Winkel α_3 des 3. Kreisbogens schrittweise verringert und der Winkel α**_**4 des 4. Kreisbogens schrittweise vergrößert.

Das erfindungsgemäße Verfahren zur Erzeugung ebener, dicht kämmender, selbstreinigender und gleichsinnig drehender Schneckenprofile der Gangzahl z soll beispielhaft an dem Abschnitt eines Schneckenprofils in Figur 19b erläutert werden.

Das Schneckenprofil und damit der Abschnitt des Schneckenprofils liegen erfindungsgemäß in einer Ebene. Der Einfachheit halber wird diese Ebene in die xy-Ebene eines kartesischen Koordinatensystems gelegt. Ebenfalls der Einfachheit halber wird der Drehpunkt des Schneckenprofils in den Ursprung des kartesischen Koordinatensystems gelegt (x=0, y=0).

Die Gangzahl z wird erfindungsgemäß so gewählt, dass z größer oder gleich 1 ist. In dem vorliegenden Beispiel wird die Gangzahl zu z=1 gewählt. Die Anzahl der Kreisbögen n des Schneckenprofils wird erfindungsgemäß so gewählt, dass n ein ganzes Vielfaches p von 4*z ist. In dem vorliegendem Beispiel wird die Anzahl der Kreisbögen zu n=16 gewählt, woraus p=4 resultiert. Der dimensionslose Schneckenaußenradius RA des Schneckenprofils wird erfindungsgemäß so gewählt, dass er größer 0 und kleiner oder gleich dem dimensionslosen Achsabstand A ist. In dem vorliegenden Beispiel wird der dimensionslose Schneckenaußenradius des Schneckenprofils zu RA=0,58 gewählt. Der dimensionslose Kernradius RI des Schneckenprofils wird erfindungsgemäß so gewählt, dass er größer oder gleich 0 und kleiner oder gleich dem dimensionslosen Schneckenaußenradius RA ist. In dem vorliegenden Beispiel wird der dimensionslose Kernradius des Schneckenprofils zu RI=A-RA=0,42 gewählt.

Die Kreisbögen des Schneckenprofils können im oder gegen den Uhrzeigersinn um die Drehachse des Schneckenprofils angeordnet werden. In dem vorliegenden Beispiel werden die Kreisbögen gegen den Uhrzeigersinn um die Drehachse des Schneckenprofils angeordnet.

Das Schneckenprofil wird in 2*z Abschnitte eingeteilt, die dadurch gekennzeichnet sind, dass jeder Abschnitt durch zwei Geraden begrenzt ist, die zueinander einen Winkel im Bogenmaß von π/z bilden und die sich im Drehpunkt des Schneckenprofils schneiden, wobei diese beiden Geraden als Abschnittsgrenzen bezeichnet werden. In dem vorliegenden Beispiel ergibt sich, dass das Schneckenprofil in zwei Abschnitte unterteilt wird. Der Einfachheit halber werden beide Abschnittsgrenzen auf die x-Achse des Koordinatensystems gelegt. In dem vorliegenden Beispiel wird im Folgenden nur der Abschnitt des Schneckenprofils betrachtet, der in positiver y-Richtung liegt.

Der Abschnitt des Schneckenprofils wird in einen ersten und einen zweiten Teil untergliedert, wobei der erste Teil aus p Kreisbögen und der zweite Teil aus p' Kreisbögen besteht, wobei p'=p ist. In dem vorliegenden Beispiel ergibt sich, dass p'=4 ist. Die Kreisbögen des ersten Teils des Abschnitts des Schneckenprofils können in aufsteigender oder absteigender Reihenfolge nummeriert sein. Die Kreisbögen des zweiten Teils des Abschnitts des Schneckenprofils sind in umgekehrter Reihenfolge wie die Kreisbögen des ersten Teils des Abschnittes des Schneckenprofils nummeriert. In dem vorliegenden Beispiel werden die Kreisbögen des ersten Teils des Abschnitts des Schneckenprofils in aufsteigender Reihenfolge, die Kreisbögen des zweiten Teils des Abschnitts des Schneckenprofils dementsprechend in absteigender Reihenfolge nummeriert.

Der Winkel α_1 des 1. Kreisbogens des ersten Teils des Abschnitts des Schneckenprofils wird erfindungsgemäß so gewählt, dass er im Bogenmaß größer oder gleich 0 und kleiner oder gleich π/(2*z) ist. In dem vorliegenden Beispiel wird der Winkel des 1. Kreisbogens zu α_1=0,4304 gewählt. Der dimensionslose Radius R_1 des 1. Kreisbogens des ersten Teils des Abschnitts des Schneckenprofils wird erfindungsgemäß so gewählt, dass er größer oder gleich 0 und kleiner oder gleich dem Achsabstand A ist. In dem vorliegenden Beispiel wird der dimensionslose Radius des 1. Kreisbogens zu R_1=0,9061 gewählt. Die Position des 1. Kreisbogens des ersten Teils des Abschnitts des Schneckenprofils wird erfindungsgemäß so gewählt, dass der 1. Kreisbogen innerhalb oder auf den Grenzen eines Kreisrings mit dem dimensionslosen Schneckenaußenradius RA und dem dimensionslosen Kernradius RI liegt, dessen Mittelpunkt auf dem Drehpunkt des Schneckenprofils liegt. Die Position wird bevorzugt durch die Positionierung des Anfangspunkts und des Mittelpunkts des 1. Kreisbogens festgelegt. In dem erfindungsgemäßen Verfahren liegen der Anfangs- und der Mittelpunkt des 1. Kreisbogens auf einer der Abschnittsgrenzen, wodurch sich der Anfangspunkt aus der Position des Mittelpunkts und des dimensionslosen Radius R_1 ergibt. In dem vorliegenden Beispiel wird der Mittelpunkt des 1. Kreisbogens auf die Koordinate Mx_1=-0,3937, My_1=0,0000 gelegt und der Anfangspunkt liegt damit auf der Koordinate x=0,5124, y=0,0000.

Die Winkel α_2, ..., α_(p-1) von p-2 weiteren Kreisbögen, also von 2 weiteren Kreisbögen des ersten Teils des Abschnitts des Schneckenprofils werden erfindungsgemäß so gewählt, dass sie im Bogenmaß größer oder gleich 0 und kleiner oder gleich π/(2*z) sind. In dem vorliegenden Beispiel werden die Winkel der 2 weiteren Kreisbögen zu α_2*0,3812 und α_3=0,1580 gewählt. Die dimensionslosen Radien R_2, ..., R_(p-1) der 2 weiteren Kreisbögen des ersten Teils des Abschnitts des Schneckenprofils werden erfindungsgemäß so gewählt, dass sie größer oder gleich 0 und kleiner oder gleich dem dimensionslosen Achsabstand A sind. In dem vorliegenden Beispiel werden die dimensionslosen Radien der 2 weiteren Kreisbögen zu R_2=0,1385 und R_3=0,5800 gewählt. Gemäß den Anordnungsregeln werden die Kreisbögen so angeordnet, dass die Kreisbögen derart tangential ineinander übergehen, dass sich ein geschlossenes, konvexes Schneckenprofil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps«1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Schneckenprofil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Schneckenprofil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 2 weiteren Kreisbögen: Mx_2=0,3039, My_2=0,3202 und Mx_3=0,0000, My_3=0,0000. Der 3. Kreisbogen liegt auf dem dimensionslosen Schneckenaußenradius RA und die Anordnungsregel, dass mindestens ein Kreisbogen den dimensionslosen Schneckenaußenradius RA berührt, ist erfüllt.

Der Winkel α_4 des letzten Kreisbogens des ersten Teils des Abschnitts des Schneckenprofils ergibt sich erfindungsgemäß daraus, dass die Summe der Winkel der 4 Kreisbögen des ersten Teils des Abschnitts des Schneckenprofils im Bogenmaß gleich π/(2*z) ist, wobei der Winkel α_4 im Bogenmaß größer oder gleich 0 und kleiner oder gleich π/(2*z) ist. In dem vorliegenden Beispiel ergibt sich der Winkel dieses letzten Kreisbogens zu α_4=0,6013. Der dimensionslose Radius R_4 des letzten Kreisbogens des ersten Teils des Abschnitts des Schneckenprofils ergibt sich erfindungsgemäß daraus, dass der Endpunkt dieses letzten Kreisbogens eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des Schneckenprofils in Richtung dieses Abschnitts besitzt, der gleich dem halben Achsabstand ist, wobei die Winkelhalbierende wie die Abschnittsgrenzen durch den Drehpunkt des Schneckenprofils führt. Die Gerade FP ist in der Figur 19b als gepunktete Linie eingezeichnet. Der 4. Kreisbogen des ersten Teils des Abschnitts des Schneckenprofils wird konstruiert, indem am Endpunkt des 3. Kreisbogens eine Tangente an den 3. Kreisbogen gelegt wird, der Schnittpunkt der Tangente mit der Gerade FP der Mittelpunkt eines Kreises ist, dessen Radius gleich der Länge der Strecke zwischen dem Endpunkt des 3. Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des 4. Kreisbogens mit der Gerade FP ist. Am Endpunkt des 4. Kreisbogens wird ein Lot auf die Gerade FP gefällt. Der Schnittpunkt dieses Lots mit der Geraden, die durch den Endpunkt und den Mittelpunkt des 3. Kreisbogens gegeben ist, ist der Mittelpunkt des 4. Kreisbogens. In dem vorliegenden Beispiel berechnet sich die Position des Mittelpunkts des 4. Kreisbogens zu Mx_4=0,2580, My_4=0,3761 und der dimensionslose Radius des 4. Kreisbogens ergibt sich zu R_4=0,1239.

Die Winkel α_p', ..., α_1' des zweiten Teils des Abschnitts des Schneckenprofils sind dadurch bestimmt, dass der Winkel α_j' des j'-ten Kreisbogens des zweiten Teils des Abschnitts gleich dem Winkel α_j des j-ten Kreisbogens des ersten Teils des Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p). In dem vorliegenden Beispiel berechnen sich die Winkel des zweiten Teils des Abschnitts zu α_1'=α_1=0,4304, α_2'=α_2=0,3812, α_3'=α_3=0,1580 und α_4'=α_4=0,6013.

Die dimensionslosen Radien R_p', ..., R_1' des zweiten Teils des Abschnitts des Schneckenprofils sind dadurch bestimmt, dass die Summe des dimensionslosen Radius R_j' des j'-ten Kreisbogens des zweiten Teils eines Abschnitts und des dimensionslosen Radius R_j des j-ten Kreisbogens des ersten Teils eines Abschnitts gleich dem dimensionslosen Achsabstand A ist, wobei j und j' ganze Zahlen sind, die gemeinsam alle Werte im Bereich 1 bis zur Anzahl der Kreisbögen p beziehungsweise p' durchlaufen (R_1'+R_1=A=1, ..., R_p'+R_p=A=1). In dem vorliegenden Beispiel berechnen sich die dimensionslosen Radien des zweiten Teils des Abschnitts zu R_1'=A-R_1=0,0939, R_2'=A-R_2=0,8615, R_3'=A-R_3=0,4200 und R_4'=A-R_4=0,8761.

Die Position der Kreisbögen des zweiten Teils des Abschnitts des Schneckenprofils-ergibt sich erfindungsgemäß daraus, das die Kreisbögen tangential ineinander übergehen und das Schneckenprofil konvex ist. In dem vorliegenden Beispiel ergeben sich-die nachfolgenden Koordinaten für die Mittelpunkte der 4 Kreisbögen des zweiten Teil des Abschnitts des Schneckenprofils: Mx_1'=-0,3937, My_1'=0,0000, Mx_2'=0,3039, My_2'=-0,3202, Mx_3'=0,0000, My_3'=0,0000 und Mx_4'=0,2580, My_4'=-0,3761. Der 3. Kreisbogen des zweiten Teils des Abschnitts des Schneckenprofils liegt auf dem dimensionslosen Kernradius RI und die Anordnungsregel, dass mindestens ein Kreisbogen den dimensionslosen Kernradius RI berührt, ist erfüllt.

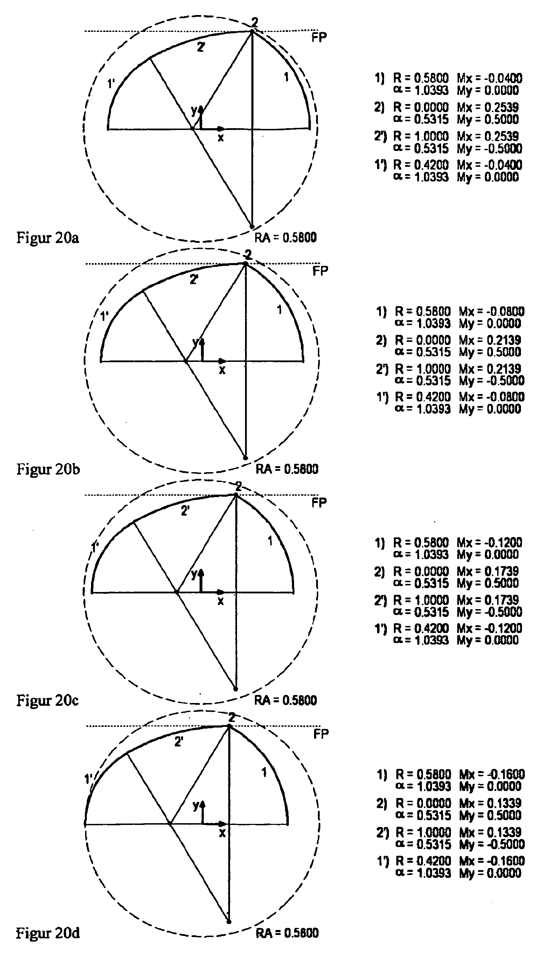

**Figur 20****:** Alle eingängigen Schneckenprofile können längs der x-Achse in einem gewissen Umfang in positiver oder negativer x-Richtung verschoben werden, ohne ihre Selbstreinigung zu verlieren, da durch die Verschiebung längs der x-Achse weiterhin die Bedingung erfiillt bleibt, die Gerade FP in einem Punkt zu berühren. Die maximale Verschiebung in positiver oder negativer x-Richtung ist dann erreicht, wenn das Schneckenprofil an einer Stelle einen Abstand vom Drehpunkt größer als den Außenradius RA besitzt. Der maximale Betrag der Verschiebung ist von dem zu verschiebenden Schneckenprofil abhängig und ist kleiner gleich der Differenz des Außenradius RA minus des Kernradius RI. Ist die Verschiebung kleiner als die maximal zulässige Verschiebung, so ist der maximale Abstand des Schneckenprofils vom Drehpunkt kleiner als der ursprünglich geforderte Außenradius RA. Die Figuren 20a bis 20d veranschaulichen das schrittweise Verschieben eines Schneckenprofils, das der Figur 2a entspricht. Man erkennt, dass die Radien und Winkel der einzelnen Kreisbögen durch das Verschieben nicht verändert werden.

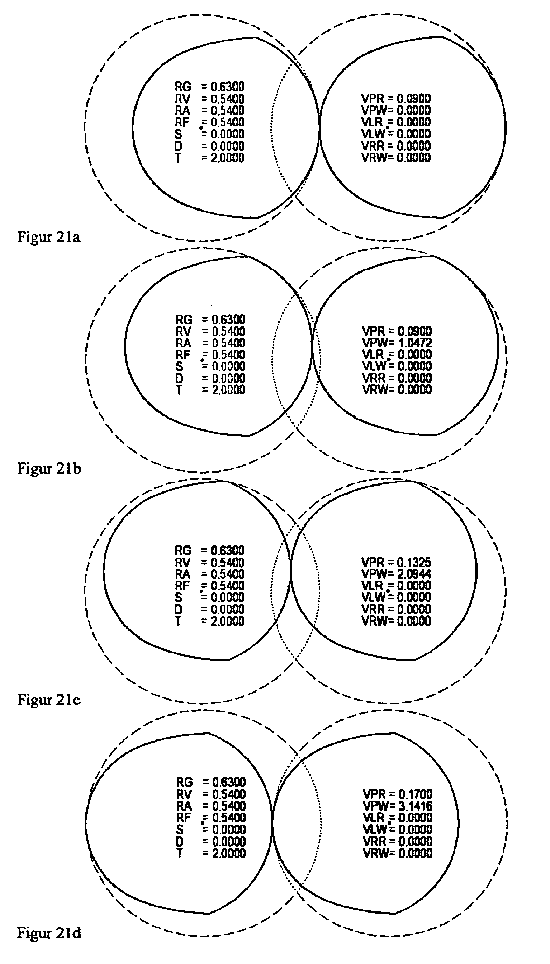

Die Figuren 21 bis 23 zeigen das erzeugende und das erzeugte Schneckenprofil innerhalb eines achtförmigen Schneckengehäuses. Innerhalb der beiden Schneckenprofile befinden sich Zahlenwertangaben zu folgenden Schneckengrößen:
- RG: Radius der beiden Gehäusebohrungen
- RV: Virtueller Gehäuseradius, der kleiner gleich dem Gehäuseradius RG ist
- RA: Schneckenaußenradius der dicht kämmenden, selbstreinigenden Schneckenprofile
- RF: Schneckenaußenradius der zu fertigenden Schneckenprofile
- S: Spiel zwischen den beiden zu fertigenden Schneckenprofilen
- D: Spiel zwischen den zu fertigenden Schneckenprofilen und dem Gehäuse
- T: Steigung eines Förder-, Misch- oder Übergangselements
- VPR: Größe der Verschiebung der dicht kämmenden, selbstreinigenden Schneckenprofile, falls diese exzentrisch angeordnet werden
- VPW: Winkel der Verschiebung (Richtungsangabe) der dicht kämmenden, selbstreinigenden Schneckenprofile, falls diese exzentrisch angeordnet werden
- VLR: Größe der Verschiebung des zu fertigenden Schneckenprofils der linken Welle innerhalb der Spiele
- VLW: Winkel der Verschiebung des zu fertigenden Schneckenprofils der linken Welle innerhalb der Spiele
- VRR: Größe der Verschiebung des zu fertigenden Schneckenprofils der rechten Welle innerhalb der Spiele
- VRW: Winkel der Verschiebung des zu fertigenden Schneckenprofils der rechten Welle innerhalb der Spiele

Das Schneckengehäuse, welches sich aus zwei gegenseitig durchdringenden Bohrungen mit jeweils dem Radius RG und dem Abstand A=1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die dicht kämmenden, selbstreinigenden Schneckenprofile werden durch eine dicke, durchgezogene Linie gekennzeichnet. Die Schneckenprofile in der Fertigung werden durch eine dünne, durchgezogene Linie dargestellt.

Dem Fachmann ist bekannt, dass zwischen dem Schneckenaußenradius RA des dicht kämmenden, selbstreinigenden Schneckenprofils, dem virtuellen Gehäuseradius RV, dem Spiel S zwischen den beiden zu fertigenden Schneckenprofilen und dem Spiel D zwischen den zu fertigenden Schneckenprofilen und dem Schneckengehäuse folgender Zusammenhang gilt: RA=RV-D+S/2.

Dem Fachmann ist ferner bekannt, dass zwischen dem Schneckenaußenradius RF des zu fertigenden Schneckenprofils, dem virtuellen Gehäuseradius RV und dem Spiel D zwischen den zu fertigenden Schneckenprofilen und dem Schneckengehäuse folgender Zusammenhang gilt: RF=RV-D.

Typischerweise ist der virtuelle Gehäuseradius RV gleich dem ausgeführten Gehäuseradius RG. Wird der virtuelle Gehäuseradius RV kleiner als der Gehäuseradius RG gewählt, so ergibt sich zwischen den Schneckenprofilen und dem Gehäuse ein zusätzliches Spiel. Dieses Spiel kann dazu genutzt werden, das erzeugende und das erzeugte Schneckenprofil unter Beibehaltung der Selbstreinigung exzentrisch zu verschieben. Die Exzentrizität ist durch Angabe der Größe der Verschiebung VPR und der Richtung der Verschiebung in Form eines Winkels VPW eindeutig charakterisiert.
**Figur 21****:** Die Figuren 21a bis 21d zeigen bevorzugte Ausführungsformen einer exzentrischen Positionierung eingängiger Schneckenprofile. Die gezeigten dicht kämmenden, selbstreinigenden Schneckenprofile basieren auf der Figur 2, wobei hier ein Schneckenaußenradius von RA=0,54 gewählt wurde. Der virtuelle Gehäuseradius beträgt RV=0,54 und ist kleiner als der Gehäuseradius RG (RG=0,63). Die weiteren geometrischen Kenngrößen können den einzelnen Figuren entnommen werden. Exzentrisch positionierte, eingängige, dicht kämmende, selbstreinigende Schneckenprofile sind dadurch charakterisiert, dass der Abstand der Schneckenprofile zum Gehäuse unabhängig von der Richtung der Verschiebung für beide Schneckenprofile immer gleich groß ist. Die Schneckenprofile sind in den Figuren 21 a bis 21 d jeweils soweit verschoben worden, dass genau ein Punkt der Schneckenprofile das Gehäuse berührt. Die Größe der dazu notwendigen Verschiebung hängt von der Richtung der Verschiebung ab. Es können ferner exzentrische Positionierungen der Schneckenprofile gewählt werden, bei dem kein Punkt der Schneckenprofile das Gehäuse berührt.

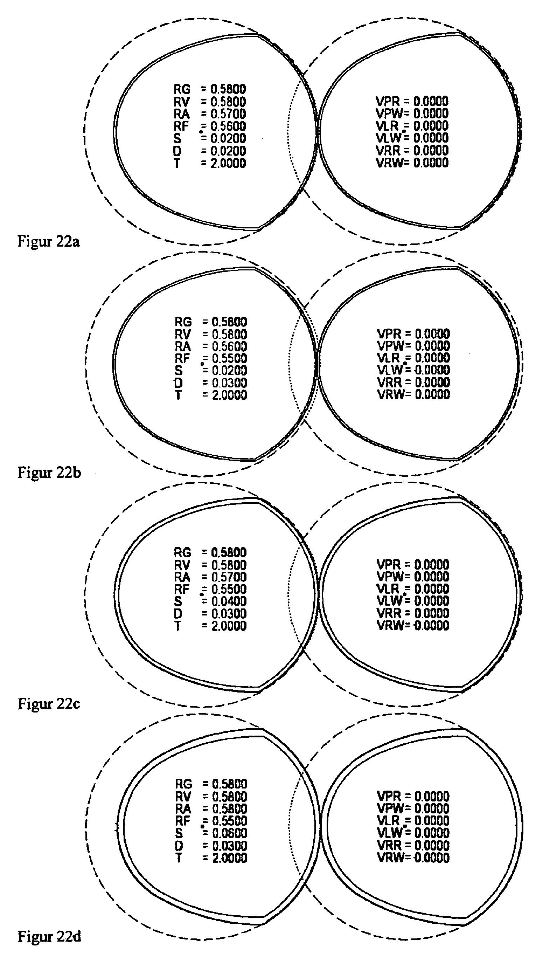

**Figur 22****:** Wie dem Fachmann bekannt ist, benötigen alle Schneckenelemente in der Praxis ein gewisses Spiel und zwar sowohl untereinander als auch gegenüber dem Gehäuse. Die Figuren 22a bis 22d zeigen verschiedene Spielstrategien. Die gezeigten dicht kämmenden, selbstreinigenden Schneckenprofile basieren auf der Figur 2a. Die weiteren geometrischen Kenngrößen können den einzelnen Figuren entnommen werden. In Figur 22a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 22b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 22c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 22d wird eine weitere Ausführungsform nach Figur 22c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

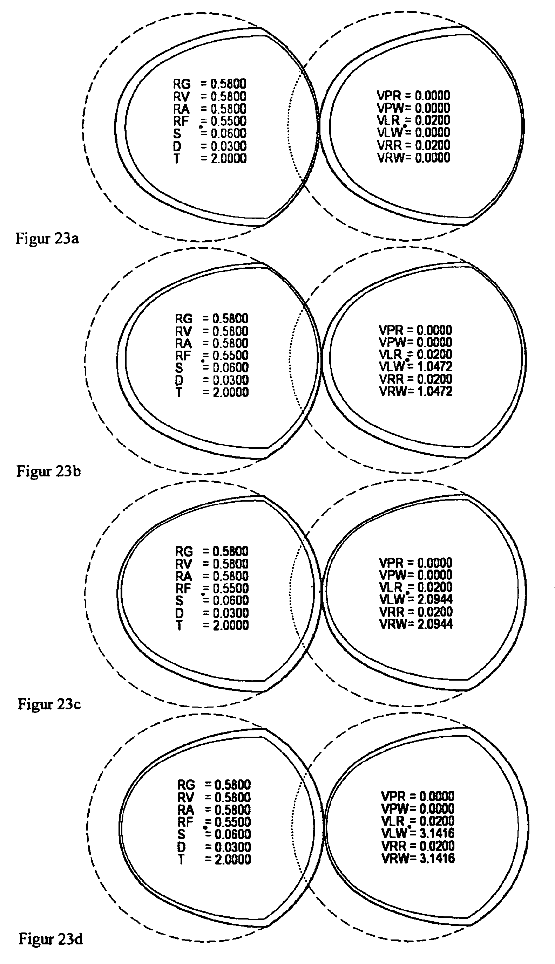

**Figur 23****:** Weiterhin ist es möglich, die zu fertigenden Schneckenprofile innerhalb der Spiele zu verschieben. Die Figuren 23a bis 23d zeigen eine Auswahl möglicher Verschiebungen. Die gezeigten dicht kämmenden, selbstreinigenden Schneckenprofile basieren auf der Figur 2a. Die gezeigten zu fertigenden Schneckenprofile basieren auf der Figur 22d. Die weiteren geometrischen Kenngrößen können den einzelnen Figuren entnommen werden. In den Figuren 23a bis 23d beträgt die Größe der Verschiebung für jeweils beide zu fertigenden Schneckenprofile VLR=VRR=0,02. In den Figuren 23a bis 23d wird die Richtung der Verschiebung für jeweils beide zu fertigende Schneckenprofile zwischen VLW=VRW=0 und VLW=VRW=π schrittweise variiert. Es ist zulässig, die beiden zu fertigenden Schneckenprofile unabhängig voneinander in verschiedene Richtungen und um verschiedene Größen zu verschieben.

Eingängige Schneckenprofile, die nach dem Verfahren zur Erzeugung von dicht kämmenden, selbstreinigenden, gleichsinnig drehenden Schneckenprofilen der Gangzahl z erzeugt werden, können zur Fertigung von Schneckenelementen verwendet werden. Insbesondere können derartige Schneckenprofile zur Fertigung von Förderelementen, Mischelementen, Knetelementen und Übergangselementen verwendet werden.

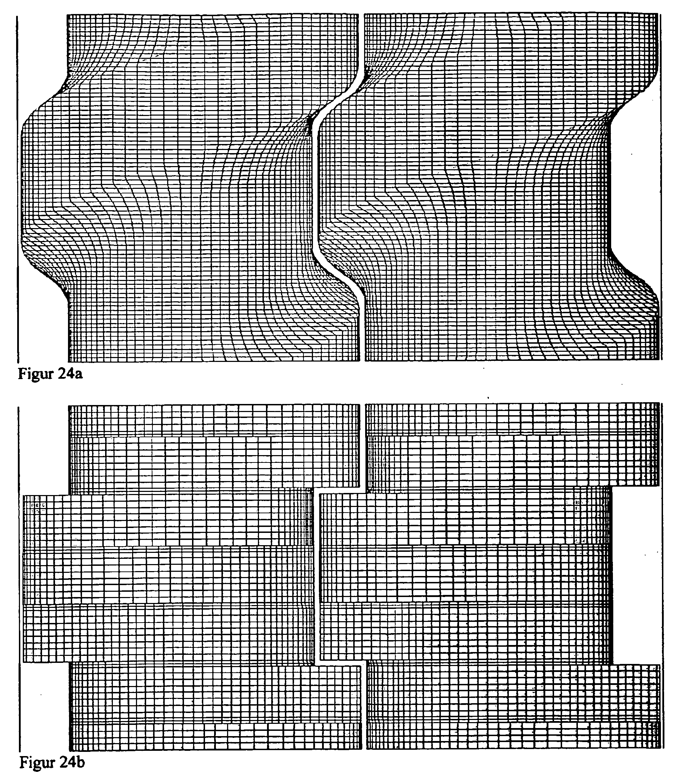

Die **Figur 24a** zeigt beispielhaft ein Paar eines eingängigen Förderelements, das auf dem Schneckenprofil nach Figur 2a basiert. Der Gehäuseradius beträgt RG=0,58. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 24b** zeigt beispielhaft ein Paar eines eingängigen Knetelement, das auf dem Schneckenprofil nach Figur 2a basiert. Der Gehäuseradius beträgt RG=0,58. Das Spiel zwischen den Knetscheiben der beiden Knetelemente beträgt S=0,02. Das Spiel zwischen den Knetscheiben der beiden Knetelementen und dem Gehäuse beträgt D=0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

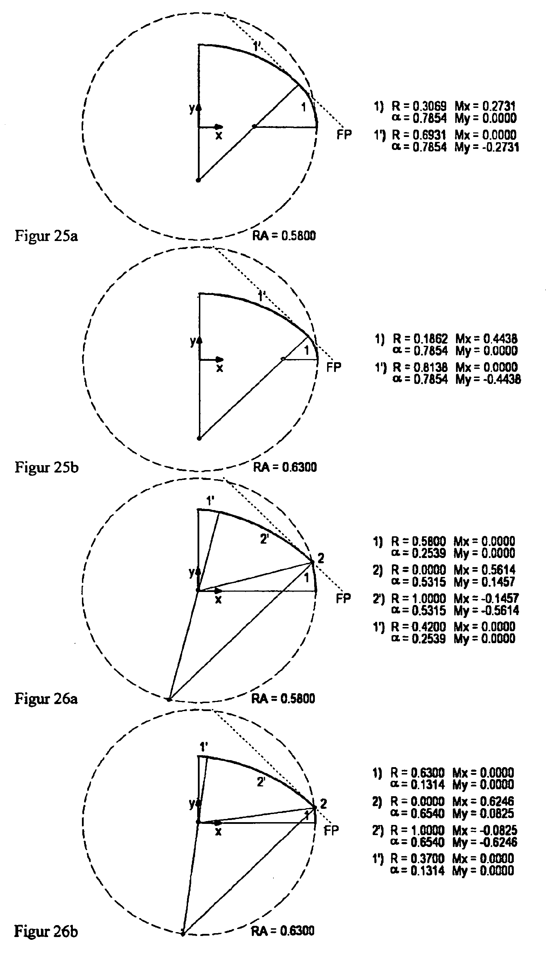

Die Figuren 25 bis 46 beschreiben Schneckenprofile der Gangzahl 2, die nach dem Verfahren zur Erzeugung von dicht kämmenden, selbstreinigenden, gleichsinnig drehenden Schneckenprofilen der Gangzahl z erzeugt werden. In den Figuren 25 bis 42 wird immer ein Viertel eines Schneckenprofils der Gangzahl 2 gezeigt. Alle diese Figuren weisen den analogen Aufbau wie die Figuren 1 bis 20 auf, der für diese Figuren bereits im Detail beschrieben wurde.

Die Figuren 25 bis 46 zeigen Schneckenprofile und Schneckenelemente, in denen der dimensionslose Schneckenaußenradius RA die Werte 0,54, 0,56, 0,57, 0,58 und 0,63 hat. Das erfindungsgemäße Verfahren zur Erzeugung von ebenen, dicht kämmenden, selbstreinigenden, gleichsinnig drehenden Schneckenprofilen der Gangzahl z ist nicht auf diese diskreten Werte des dimensionslosen Schneckenaußenradius limitiert. Unter Anwendung des erfindungsgemäßen Verfahrens können zweigängige Schneckenprofile mit einem dimensionslosen Schneckenaußenradius zwischen RA größer 0,5 und RA kleiner oder gleich 0,707, bevorzugt im Bereich von RA=0,52 bis RA=0,69 erzeugt werden.
**Figur 25****:** Die Figuren 25a und 25b zeigen bevorzugte 2-Kreis-Schneckenprofile. Die Figuren 25a und 25b unterscheiden sich durch den Schneckenaußenradius RA. In der Figur 25a beträgt der Schneckenaußenradius RA=0,58. In der Figur 25b beträgt der Schneckenaußenradius RA=0,63. In den Figuren 25a und 25b ist der Radius R_1 des 1. Kreisbogens vom Schneckenaußenradius RA abhängig. In den Figuren 25a und 25b besitzt der 1. Kreisbogen jeweils den Winkel α_1=π/4.
**Figur 26****:** Die Figuren 26a und 26b zeigen bevorzugte 4-Kreis-Schneckenprofile. Die Figuren 26a und 26b unterscheiden sich durch den Schneckenaußenradius RA. In der Figur 26a beträgt der Schneckenaußenradius RA=0,58. In der Figur 26b beträgt der Schneckenaußenradius RA=0,63. In den Figuren 26a und 26b besitzt der 1. Kreisbogen jeweils den Radius R_1=RA. In den Figuren 26a und 26b besitzt der 2. Kreisbogen jeweils den Radius R_2=0. In den Figuren 26a und 26b ist der Winkel α_1 des 1. Kreisbogens vom Schneckenaußenradius RA abhängig. In den Figuren 26a und 26b ist der Winkel α_2 des 2. Kreisbogens vom Schneckenaußenradius RA abhängig.

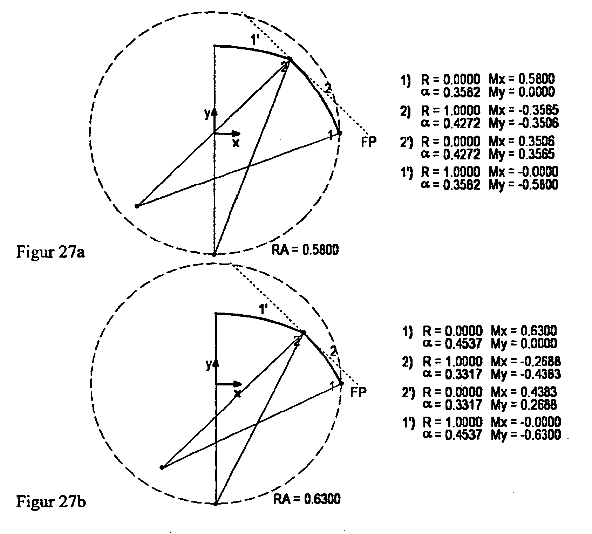

**Figur 27****:** Die Figuren 27a und 27b zeigen weitere bevorzugte 4-Kreis-Schneckenprofile. Die Figuren 27a und 27b unterscheiden sich durch den Schneckenaußenradius RA. In der Figur 27a beträgt der Schneckenaußenradius RA=0,58. In der Figur 27b beträgt der Schneckenaußenradius RA=0,63. In den Figuren 27a und 27b besitzt der 1. Kreisbogen jeweils den Radius R_1=0. In den Figuren 27a und 27b besitzt der 2. Kreisbogen jeweils den Radius R_2=A=1. In den Figuren 27a und 27b ist der Winkel α_1 des 1. Kreisbogens vom Schneckenaußenradius RA abhängig. In den Figuren 27a und 27b ist der Winkel α_2 des 2. Kreisbogens vom Schneckenaußenradius RA abhängig.

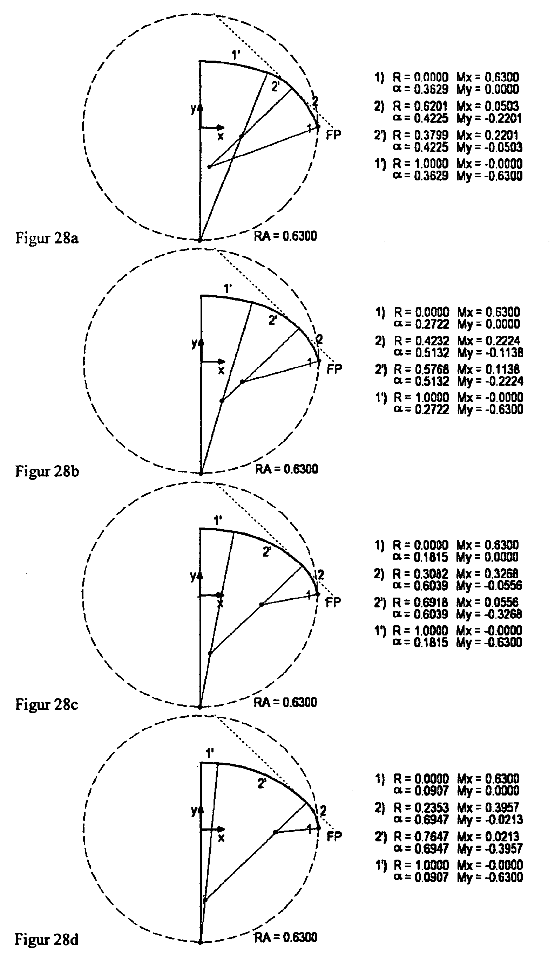

**Figur 28****:** Die Figuren 28a bis 28d zeigen weitere bevorzugte 4-Kreis-Schneckenprofile. Die Figuren 28a bis 28d zeigen einen bevorzugten Übergang zwischen der Figur 27b und der Figur 25b. In den Figuren 28a bis 28d beträgt der Schneckenaußenradius jeweils RA=0,63. In den Figuren 28a bis 28d besitzt der 1. Kreisbogen jeweils den Radius R_1=0. In den Figuren 28a bis 28d wird der Winkel α_1 des 1. Kreisbogens schrittweise verringert.

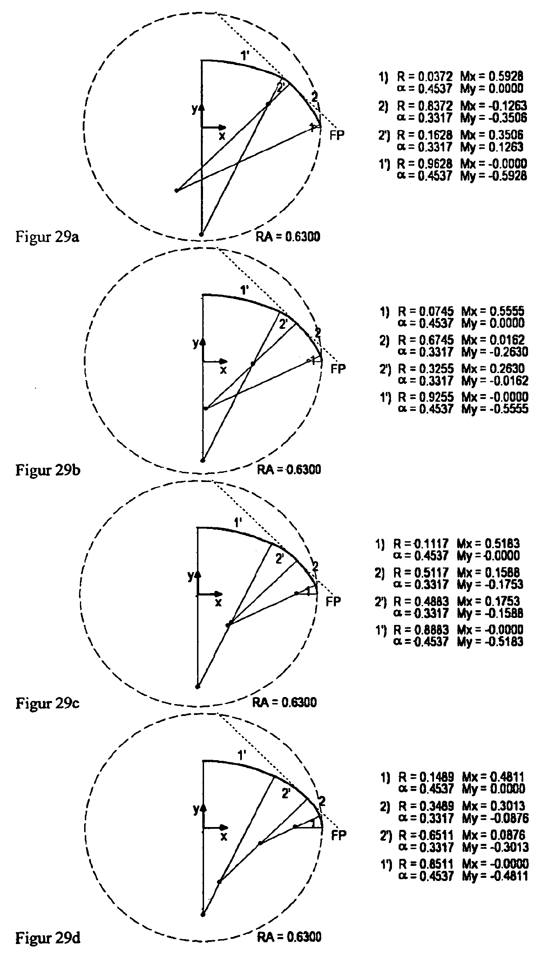

**Figur 29****:** Die Figuren 29a bis 29d zeigen weitere bevorzugte 4-Kreis-Schneckenprofile. Die Figuren 29a bis 29d zeigen einen weiteren bevorzugten Übergang zwischen der Figur 27b und der Figur 25b. In den Figuren 29a bis 29d beträgt der Schneckenaußenradius jeweils RA=0,63. In den Figuren 29a bis 29d besitzt der 1. Kreisbogen jeweils den Winkel α_1=0,4537. In den Figuren 29a bis 29d wird der Radius R_1 des 1. Kreisbogens schrittweise vergrößert.

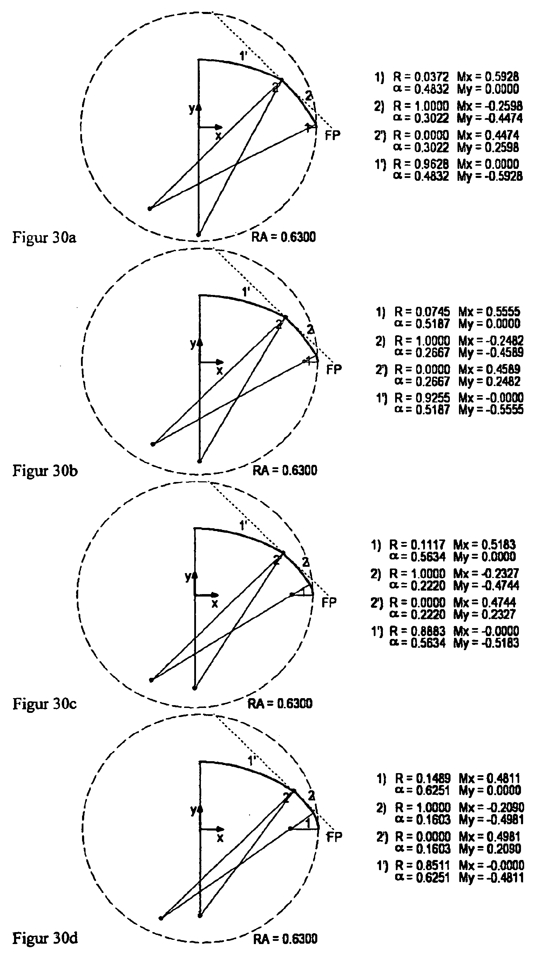

**Figur 30****:** Die Figuren 30a bis 30d zeigen weitere bevorzugte 4-Kreis-Schneckenprofile. Die Figuren 30a bis 30d zeigen einen weiteren bevorzugten Übergang zwischen der Figur 27b und der Figur 25b. In den Figuren 30a bis 30d beträgt der Schneckenaußenradius jeweils RA=0,63. In den Figuren 30a bis 30d besitzt der 2. Kreisbogen jeweils den Radius R_2=A=1. In den Figuren 30a bis 30d wird der Radius R_1 des 1. Kreisbogens schrittweise vergrößert.

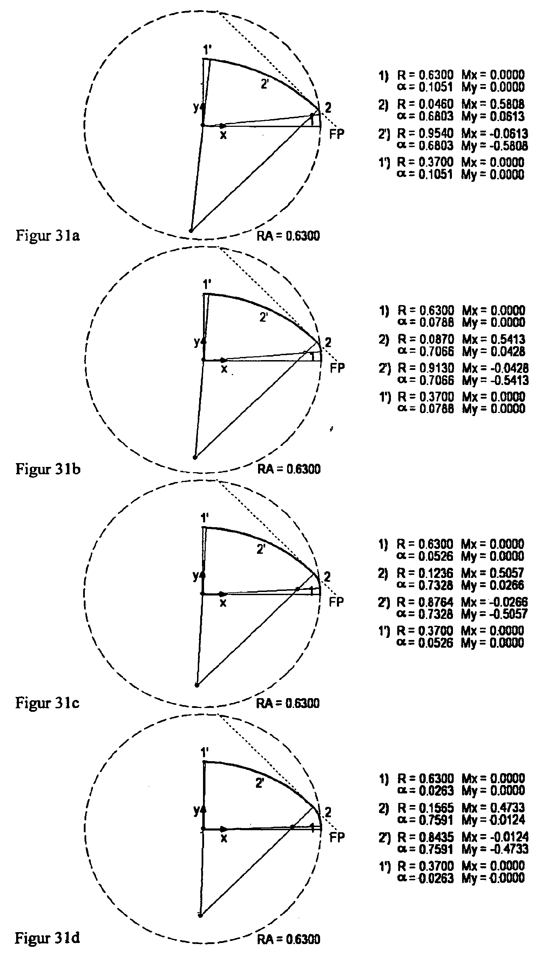

**Figur 31****:** Die Figuren 31a bis 31d zeigen weitere bevorzugte 4-Kreis-Schneckenprofile. Die Figuren 31 a bis 31 d zeigen einen bevorzugten Übergang zwischen der Figur 26b und der Figur 25b. In den Figuren 31a bis 31d beträgt der Schneckenaußenradius jeweils RA=0,63. In den Figuren 31a bis 31d besitzt der 1. Kreisbogen jeweils den Radius R_1=RA. In den Figuren 31a bis 31d wird der Winkel α_1 des 1. Kreisbogens schrittweise verringert.

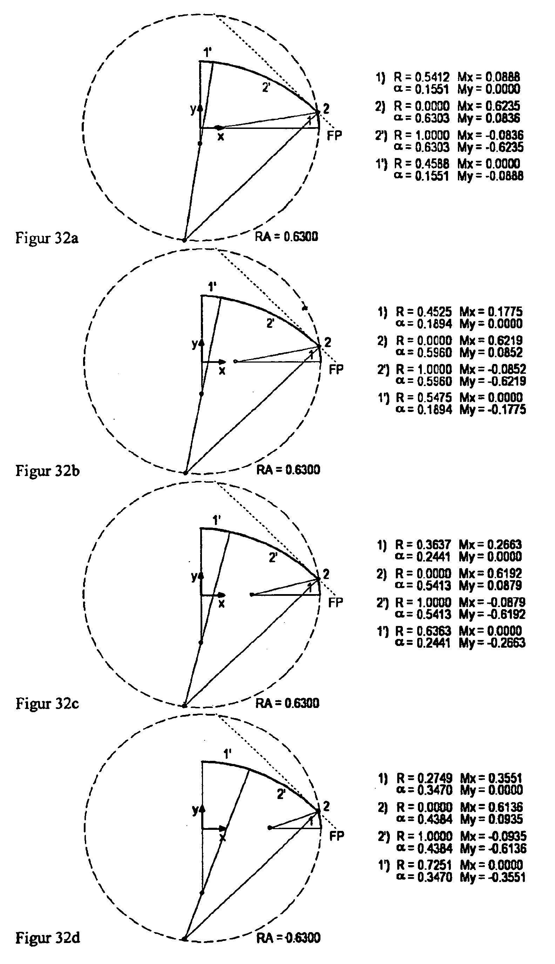

**Figur 32****:** Die Figuren 32a bis 32d zeigen weitere bevorzugte 4-Kreis-Schneckenprofile. Die Figuren 32a bis 32d zeigen einen weiteren bevorzugten Übergang zwischen der Figur 26b und der Figur 25b. In den Figuren 32a bis 32d beträgt der Schneckenaußenradius jeweils RA=0,63. In den Figuren 32a bis 32d besitzt der 2. Kreisbogen jeweils den Radius R_2=0. In den Figuren 32a bis 32d wird der Radius R_1 des 1. Kreisbogens schrittweise verringert und der Winkel α_1 des 1. Kreisbogens schrittweise vergrößert.

Ein direkter Übergang zwischen Figur 26b und Figur 27b ist mittels eines 4-Kreis-Schneckenprofils nicht möglich. Der Übergang erfolgt in einem solchen Fall über Figur 25b.

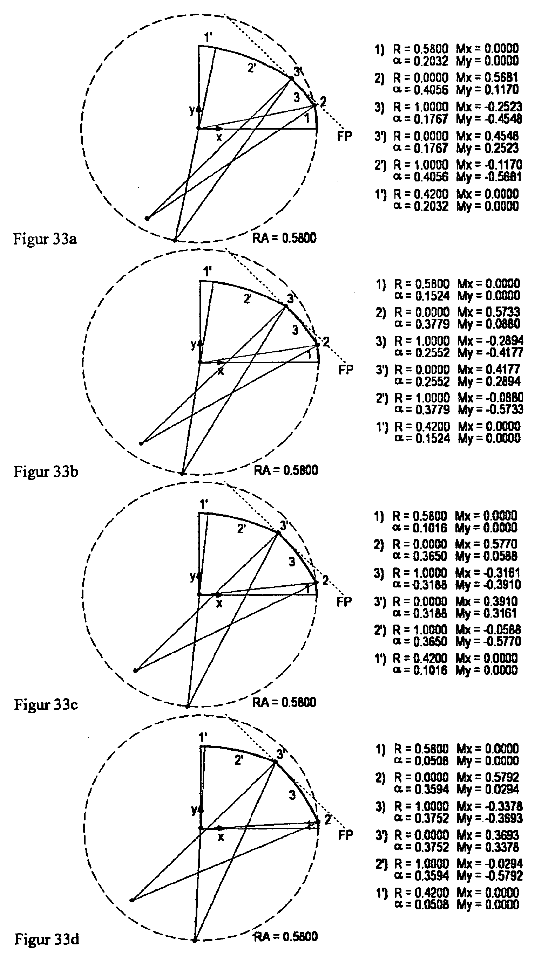

**Figur 33****:** Die Figuren 33a bis 33d zeigen bevorzugte 6-Kreis-Schneckenprofile. Die Figuren 33a bis 33d zeigen einen bevorzugten Übergang zwischen der Figur 26a und der Figur 27a. In den Figuren 33a bis 33d beträgt der Schneckenaußenradius jeweils RA=0,58. In den Figuren 33a bis 33d besitzt der 1. Kreisbogen jeweils den Radius R_1=RA. In den Figuren 33a bis 33d besitzt der 2. Kreisbogen jeweils den Radius R_2=0. In den Figuren 33a bis 33d besitzt der 3. Kreisbogen jeweils den Radius R_3=A=1. In den Figuren 33a bis 33d wird der Winkel α_1 des 1. Kreisbogens schrittweise verringert.

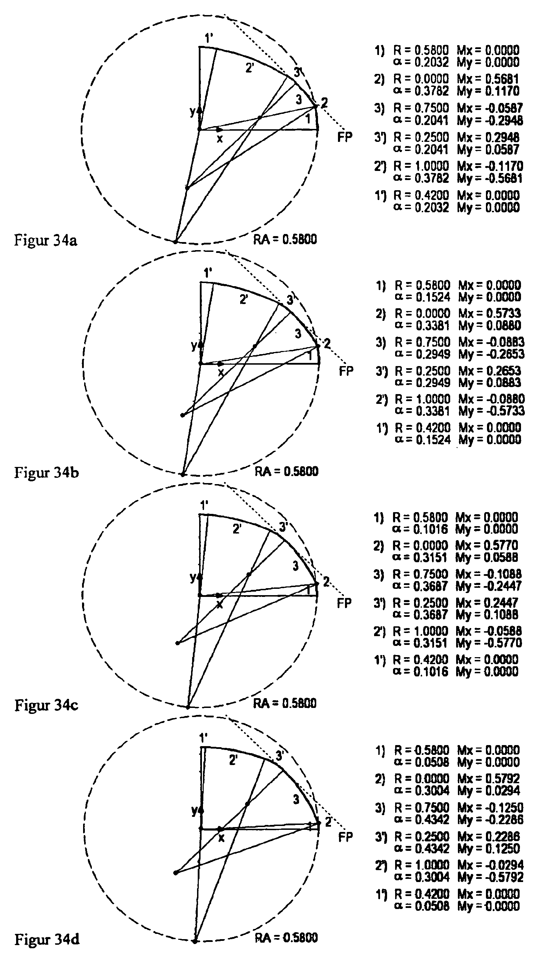

**Figur 34****:** Die Figuren 34a bis 34d zeigen weitere bevorzugte 6-Kreis-Schneckenprofile. Die Figuren 34a bis 34d zeigen einen bevorzugten Übergang zwischen der Figur 26a und einer Figur, die ähnlich der Figur 28a ist. In den Figuren 34a bis 34d beträgt der Schneckenaußenradius jeweils RA=0,58. In den Figuren 34a bis 34d besitzt der 1. Kreisbogen jeweils den Radius R_1=RA. In den Figuren 34a bis 34d besitzt der 2. Kreisbogen jeweils den Radius R_2=0. In den Figuren 34a bis 34d besitzt der 3. Kreisbogen jeweils den Radius R_3=0,75. In den Figuren 34a bis 34d wird der Winkel α_1 des 1. Kreisbogens schrittweise verringert.

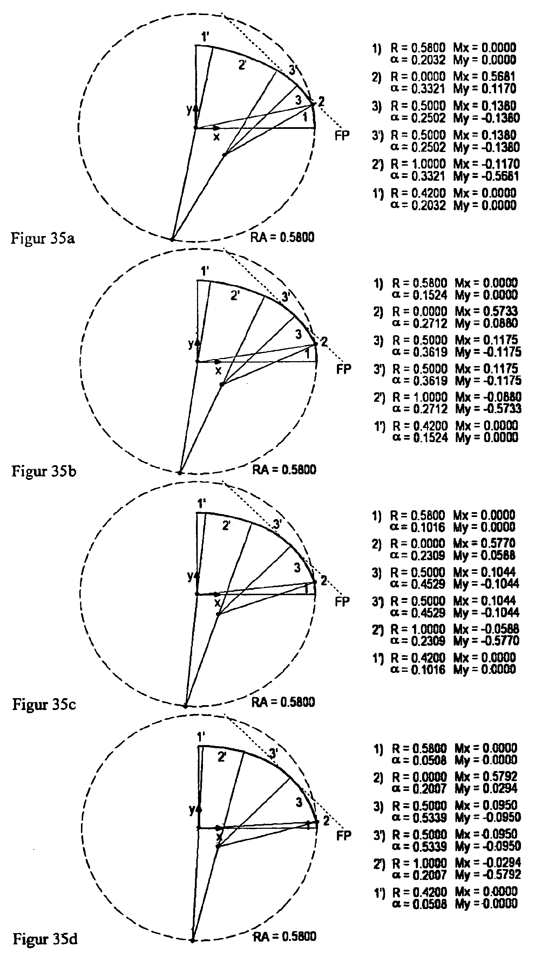

**Figur 35****:** Die Figuren 35a bis 35d zeigen weitere bevorzugte 6-Kreis-Schneckenprofile. Die Figuren 35a bis 35d zeigen einen bevorzugten Übergang zwischen der Figur 26a und einer Figur, die ähnlich den Figuren 28a und 28b ist. In den Figuren 35a bis 35d beträgt der Schneckenaußenradius jeweils RA=0,58. In den Figuren 35a bis 35d besitzt der 1. Kreisbogen jeweils den Radius R_1=RA. In den Figuren 35a bis 35d besitzt der 2. Kreisbogen jeweils den Radius R_2=0. In den Figuren 35a bis 35d besitzt der 3. Kreisbogen jeweils den Radius R_3=0,5. In den Figuren 35a bis 35d wird der Winkel α_1 des 1. Kreisbogens schrittweise verringert.

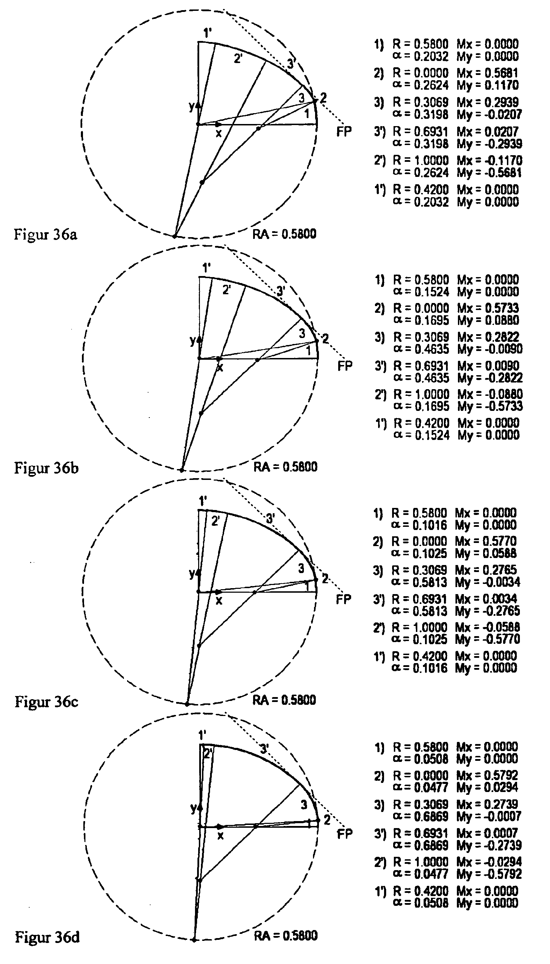

**Figur 36****:** Die Figuren 36a bis 36d zeigen weitere bevorzugte 6-Kreis-Schneckenprofile. Die Figuren 36a bis 36d zeigen einen bevorzugten Übergang zwischen der Figur 26a und der Figur 25a. In den Figuren 36a bis 36d beträgt der Schneckenaußenradius jeweils RA=0,58. In den Figuren 36a bis 36d besitzt der 1. Kreisbogen jeweils den Radius R_1=RA. In den Figuren 36a bis 36d besitzt der 2. Kreisbogen jeweils den Radius R_2=0. In den Figuren 36a bis 36d besitzt der 3. Kreisbogen jeweils den Radius R_3=0,3069. In den Figuren 36a bis 36d wird der Winkel α_1 des 1. Kreisbogens schrittweise verringert.

Neben den bereits geschilderten Übergängen der Schneckenprofile innerhalb der einzelnen Figuren ist auch ein figurübergreifender Übergang möglich. Beispielsweise können die Schneckenprofile der Figuren 33a, 34a, 35a, 36a oder der Figuren 33b, 34b, 35b, 36b schrittweise ineinander übergehen.

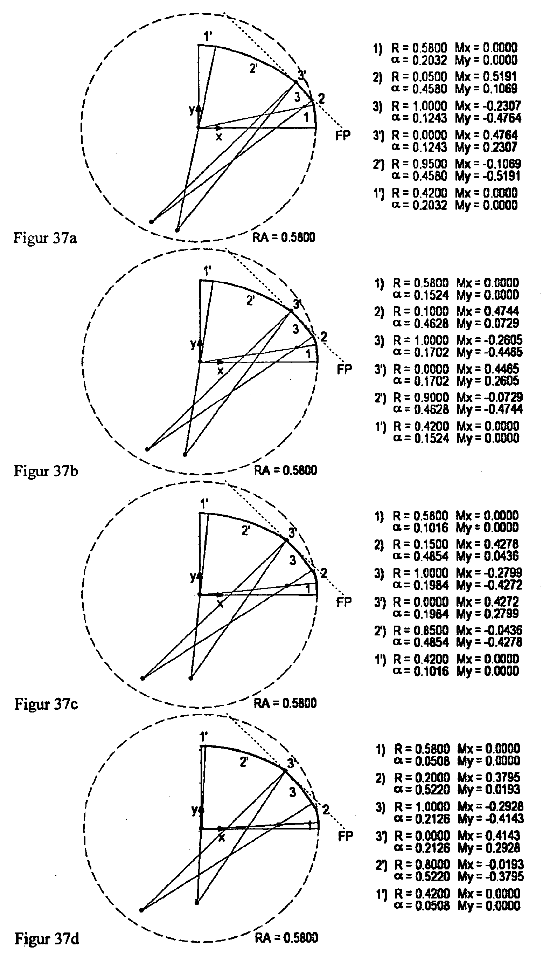

**Figur 37****:** Die Figuren 37a bis 37d zeigen weitere bevorzugte 6-Kreis-Schneckenprofile. Die Figuren 37a bis 37d zeigen einen bevorzugten Übergang ausgehend von Figur 26a. In den Figuren 37a bis 37d beträgt der Schneckenaußenradius jeweils RA=0,58. In den Figuren 37a bis 37d besitzt der 1. Kreisbogen jeweils den Radius R_1=RA. In den Figuren 37a bis 37d wird der Radius R_2 des 2. Kreisbogens schrittweise vergrößert. In den Figuren 37a bis 37d besitzt der 3. Kreisbogen jeweils den Radius R_3=A=1. In den Figuren 37a bis 37d wird der Winkel α_1 des 1. Kreisbogens schrittweise verringert.

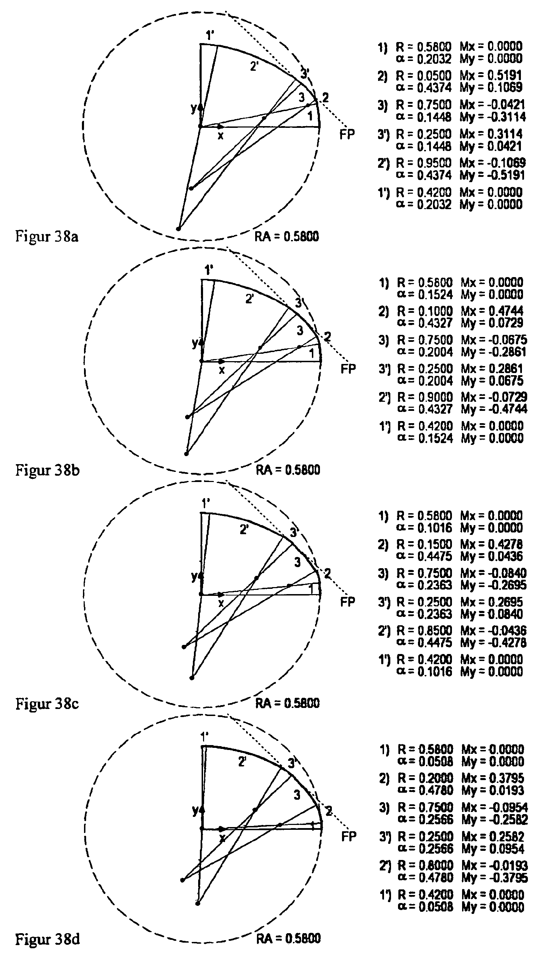

**Figur 38****:** Die Figuren 38a bis 38d zeigen weitere bevorzugte 6-Kreis-Schneckenprofile. Die Figuren 38a bis 38d zeigen einen bevorzugten Übergang ausgehend von Figur 26a. In den Figuren 38a bis 38d beträgt der Schneckenaußenradius jeweils RA=0,58. In den Figuren 38a bis 38d besitzt der 1. Kreisbogen jeweils den Radius R_1=RA. In den Figuren 38a bis 38d wird der Radius R_2 des 2. Kreisbogens schrittweise vergrößert. In den Figuren 38a bis 38d besitzt der 3. Kreisbogen jeweils den Radius R_3=0,75. In den Figuren 38a bis 38d wird der Winkel α_1 des 1. Kreisbogens schrittweise verringert.

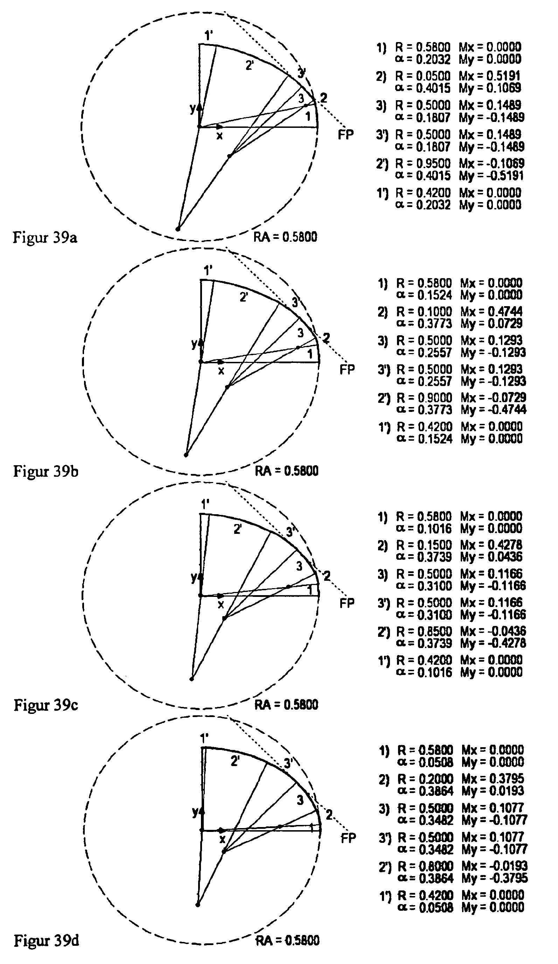

**Figur 39****:** Die Figuren 39a bis 39d zeigen weitere bevorzugte 6-Kreis-Schneckenprofile. Die Figuren 39a bis 39d zeigen einen bevorzugten Übergang ausgehend von Figur 26a. In den Figuren 39a bis 39d beträgt der Schneckenaußenradius jeweils RA=0,58. In den Figuren 39a bis 39d besitzt der 1. Kreisbogen jeweils den Radius R_1=RA. In den Figuren 39a bis 39d wird der Radius R_2 des 2. Kreisbogens schrittweise vergrößert. In den Figuren 39a bis 39d besitzt der 3. Kreisbogen jeweils den Radius R_3=0,5. In den Figuren 39a bis 39d wird der Winkel α_1 des 1. Kreisbogens schrittweise verringert.

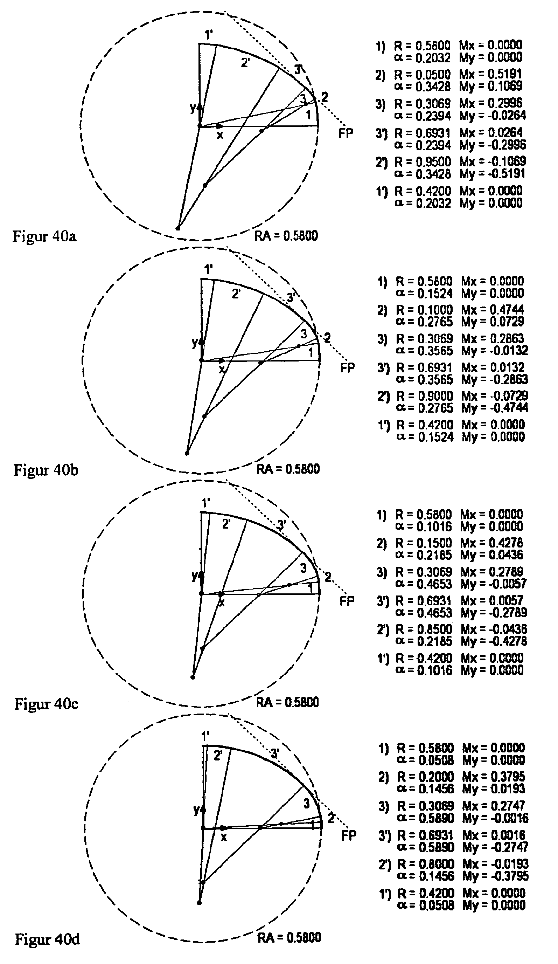

**Figur 40****:** Die Figuren 40a bis 40d zeigen weitere bevorzugte 6-Kreis-Schneckenprofile. Die Figuren 40a bis 40d zeigen einen bevorzugten Übergang zwischen der Figur 26a und der Figur 25a. In den Figuren 40a bis 40d beträgt der Schneckenaußenradius jeweils RA=0,58. In den Figuren 40a bis 40d besitzt der 1. Kreisbogen jeweils den Radius R_1=RA. In den Figuren 40a bis 40d wird der Radius R_2 des 2. Kreisbogens schrittweise vergrößert. In den Figuren 40a bis 40d besitzt der 3. Kreisbogen jeweils den Radius R_3=0,3069. In den Figuren 40a bis 40d wird der Winkel α_1 des 1. Kreisbogens schrittweise verringert.

Neben den bereits geschilderten Übergängen der Schneckenprofile innerhalb der einzelnen Figuren ist auch ein figurübergreifender Übergang möglich. Beispielsweise können die Schneckenprofile der Figuren 37a, 38a, 39a, 40a oder der Figuren 37b, 38b, 39b, 40b schrittweise ineinander übergehen.

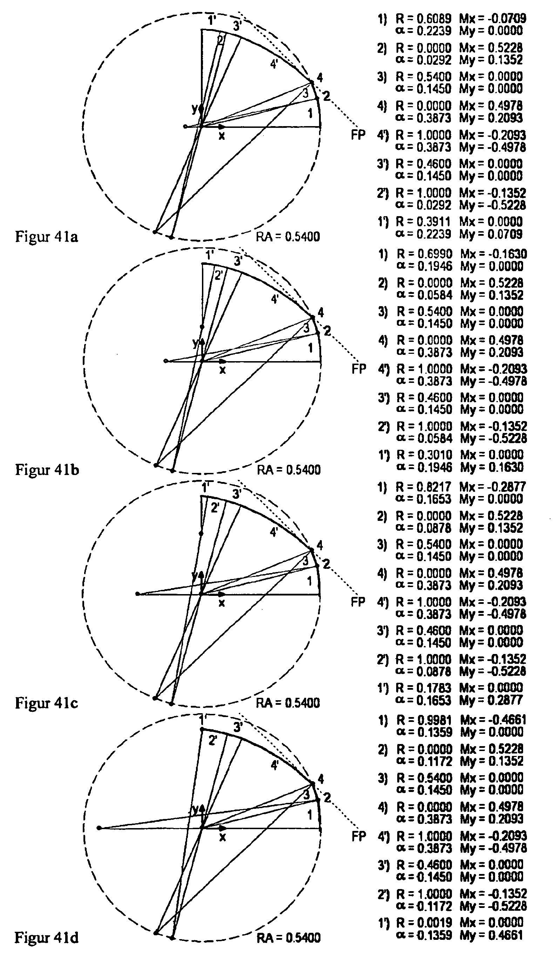

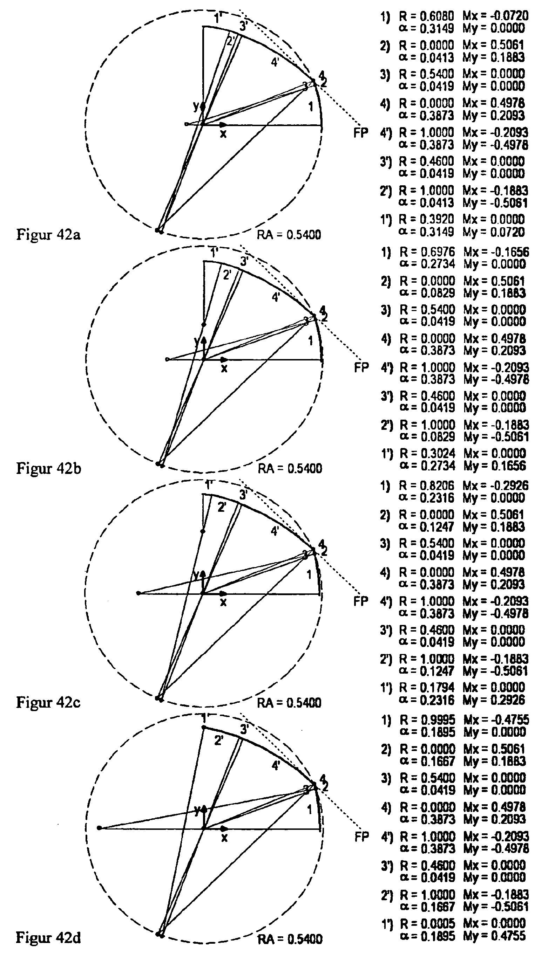

In den bisherigen Figuren zu zweigängigen Schneckenprofilen startete das Schneckenprofil immer in dem Punkt x=RA, y=0. In den Figuren 41 und 42 werden eine Auswahl von 8-Kreis-Schneckenprofile gezeigt, die an einem Punkt x<RA, y=0 starten und bei denen nur der 3. Kreisbogen auf dem Schneckenaußenradius liegt.
**Figur 41****:** Die Figuren 41a bis 41d zeigen bevorzugte 8-Kreis-Schneckenprofile. Die Figuren 41 a bis 41 d zeigen einen bevorzugten Übergang ausgehend von einem Erdmenger-Schneckenprofil mit dem Schneckenaußenradius RA=0,54. In den Figuren 41a bis 41d beträgt der Schneckenaußenradius jeweils RA=0,54. In den Figuren 41a bis 41d wird der Radius R_1 des 1. Kreisbogens schrittweise vergrößert. In den Figuren 41a bis 41d besitzt der 2. Kreisbogen jeweils den Radius R_2=0. In den Figuren 41a bis 41d besitzt der 3. Kreisbogen jeweils den Radius R_3=RA und liegt auf dem Schneckenaußenradius. In den Figuren 41a bis 41d besitzt der 4. Kreisbogen jeweils den Radius R_4=0. In den Figuren 41a bis 41d wird der Winkel α_1 des 1. Kreisbogens schrittweise verringert und der Winkel α_2 des 2. Kreisbogens schrittweise vergrößert. In den Figuren 41a bis 41d besitzt der 3. Kreisbogen jeweils den Winkel α_3=0,145. In den Figuren 41a bis 41d besitzt der 4. Kreisbogen jeweils den Winkel α_4=0,3873.
**Figur 42****:** Die Figuren 42a bis 42d zeigen weitere bevorzugte 8-Kreis-Schneckenprofile. Die Figuren 42a bis 42d zeigen einen weiteren bevorzugten Übergang ausgehend von einem Erdmenger-Schneckenprofil mit dem Schneckenaußenradius RA=0,54. In den Figuren 42a bis 42d beträgt der Schneckenaußenradius jeweils RA=0,54. In den Figuren 42a bis 42d wird der Radius R_1 des 1. Kreisbogens schrittweise vergrößert. In den Figuren 42a bis 42d besitzt der 2. Kreisbogen jeweils den Radius R_2=0. In den Figuren 42a bis 42d besitzt der 3. Kreisbogen jeweils den Radius R_3=RA und liegt auf dem Schneckenaußenradius. In den Figuren 42a bis 42d besitzt der 4. Kreisbogen jeweils den Radius R_4=0. In den Figuren 42a bis 42d wird der Winkel α_1 des 1. Kreisbogens schrittweise verringert und der Winkel α_2 des 2. Kreisbogens schrittweise vergrößert. In den Figuren 42a bis 42d besitzt der 3. Kreisbogen jeweils den Winkel α_3=0,0419. In den Figuren 42a bis 42d besitzt der 4. Kreisbogen jeweils den Winkel α_4=0,3 873.

Neben den bereits geschilderten Übergängen der Schneckenprofile innerhalb der einzelnen Figuren ist auch ein figurübergreifender Übergang möglich. Beispielsweise können die Schneckenprofile der Figuren 41a, 42a oder der Figuren 41b, 42b schrittweise ineinander übergehen.

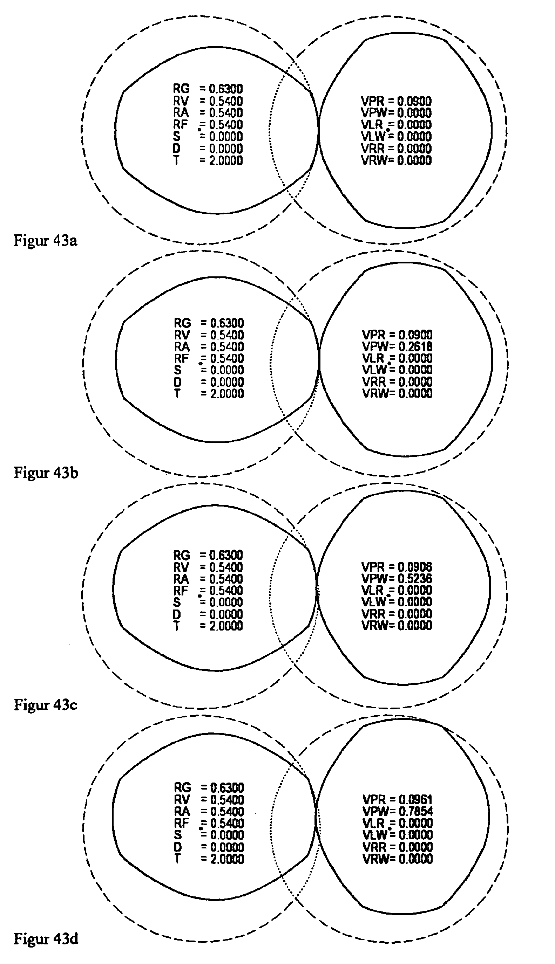

Die Figuren 43 bis 45 zeigen das erzeugende und das erzeugte Schneckenprofil innerhalb eines achtförmigen Schneckengehäuses. Alle diese Figuren weisen den analogen Aufbau wie die Figuren 21 bis 23 auf, der für diese Figuren bereits im Detail beschrieben wurde. Die Zahlenwerte innerhalb der Schneckenprofile sind ebenfalls bereits im Zusammenhang mit den Figuren 21 bis 23 erläutert worden.
**Figur 43****:** Die Figuren 43a bis 43d zeigen bevorzugte Ausführungsformen einer exzentrischen Positionierung zweigängiger Schneckenprofile. Die gezeigten dicht kämmenden, selbstreinigenden Schneckenprofile basieren auf der Figur 26, wobei hier ein Schneckenaußenradius von RA=0,54 gewählt wurde. Der virtuelle Gehäuseradius beträgt RV=0,54 und ist kleiner als der Gehäuseradius RG (RG=0,63). Die weiteren geometrischen Kenngrößen können den einzelnen Figuren entnommen werden. Exzentrisch positionierte, zweigängige, dicht kämmende, selbstreinigende Schneckenprofile sind dadurch charakterisiert, dass der Abstand der Schneckenprofile zum Gehäuse abhängig von der Richtung der Verschiebung unterschiedlich groß ist. Die Schneckenprofile sind in den Figuren 43a bis 43c jeweils soweit verschoben worden, dass genau ein Punkt des linken Schneckenprofils das Gehäuse berührt. Die Größe der dazu notwendigen Verschiebung hängt von der Richtung der Verschiebung ab. Einen Sonderfall zeigt die Figur 43d, bei dem die Schneckenprofile in Größe und Richtung so verschoben werden, dass beide Schneckenprofile in genau einem Punkt das Gehäuse berühren. Die Verschiebung erfolgt hier unter einem Winkel von π/4. Es können ferner exzentrische Positionierungen der Schneckenprofile gewählt werden, bei dem kein Punkt der Schneckenprofile das Gehäuse berührt.

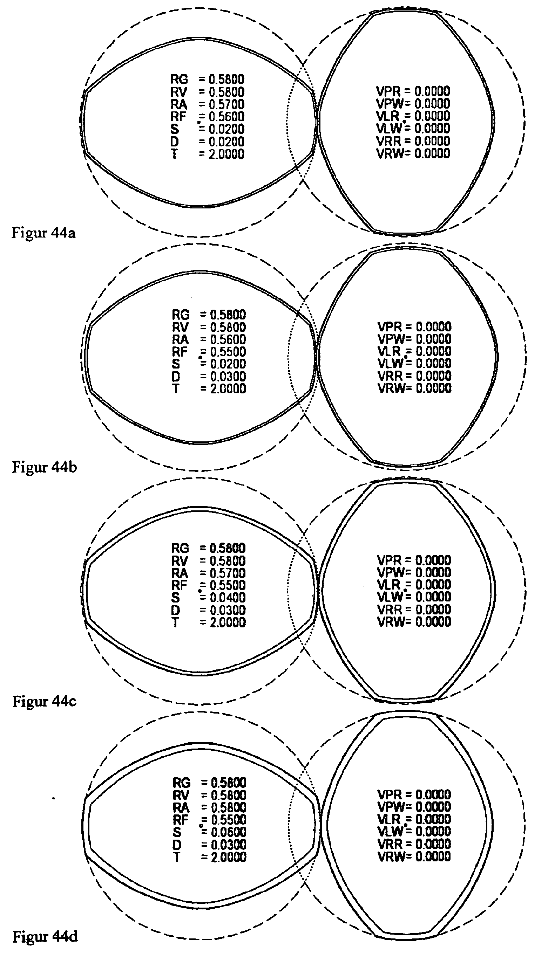

**Figur 44****:** Wie dem Fachmann bekannt ist, benötigen alle Schneckenelemente in der Praxis ein gewisses Spiel und zwar sowohl untereinander als auch gegenüber dem Gehäuse. Die Figuren 44a bis 44d zeigen verschiedene Spielstrategien. Die gezeigten dicht kämmenden, selbstreinigenden Schneckenprofile basieren auf der Figur 26a. Die weiteren geometrischen Kenngrößen können den einzelnen Figuren entnommen werden. In Figur 44a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 44b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 44c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 44d wird eine weitere Ausführungsform nach Figur 44c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

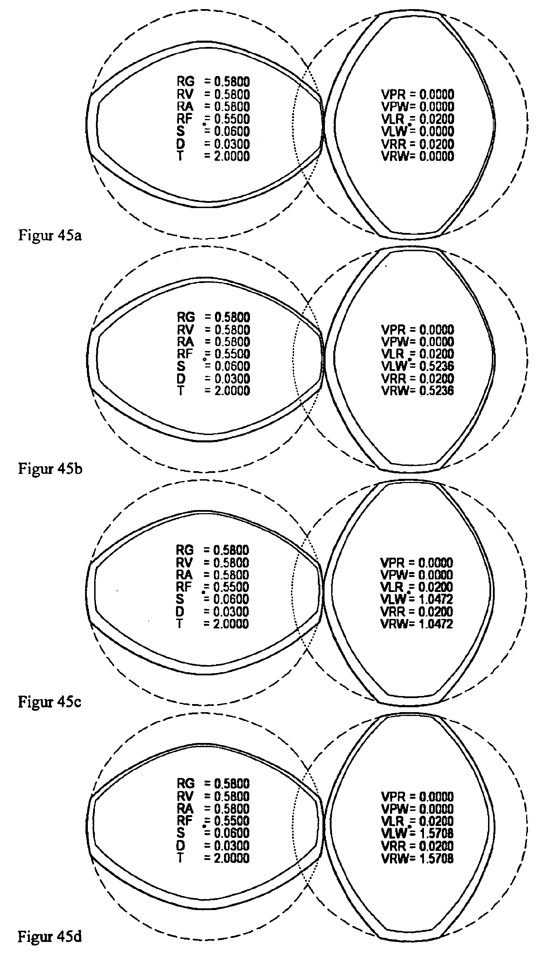

**Figur 45****:** Weiterhin ist es möglich, die zu fertigenden Schneckenprofile innerhalb der Spiele zu verschieben. Die Figuren 45a bis 45d zeigen eine Auswahl möglicher Verschiebungen. Die gezeigten dicht kämmenden, selbstreinigenden Schneckenprofile basieren auf der Figur 26a. Die gezeigten zu fertigenden Schneckenprofile basieren auf der Figur 44d. Die weiteren geometrischen Kenngrößen können den einzelnen Figuren entnommen werden. In den Figuren 45a bis 45d beträgt die Größe der Verschiebung für jeweils beide zu fertigenden Schneckenprofile VLR=VRR=0,02. In den Figuren 45a bis 45d wird die Richtung der Verschiebung für jeweils beide zu fertigende Schneckenprofile zwischen VLW=VRW=0 und VLW=VRW=π/2 schrittweise variiert. Es ist zulässig, die beiden zu fertigenden Schneckenprofile unabhängig voneinander in verschiedene Richtungen und um verschiedene Größen zu verschieben.

Zweigängige Schneckenprofile, die nach dem Verfahren zur Erzeugung von dicht kämmenden, selbstreinigenden, gleichsinnig drehenden Schneckenprofilen der Gangzahl z erzeugt werden, können zur Fertigung von Schneckenelementen verwendet werden. Insbesondere können derartige Schneckenprofile zur Fertigung von Förderelementen, Mischelementen, Knetelementen und Übergangselementen verwendet werden.

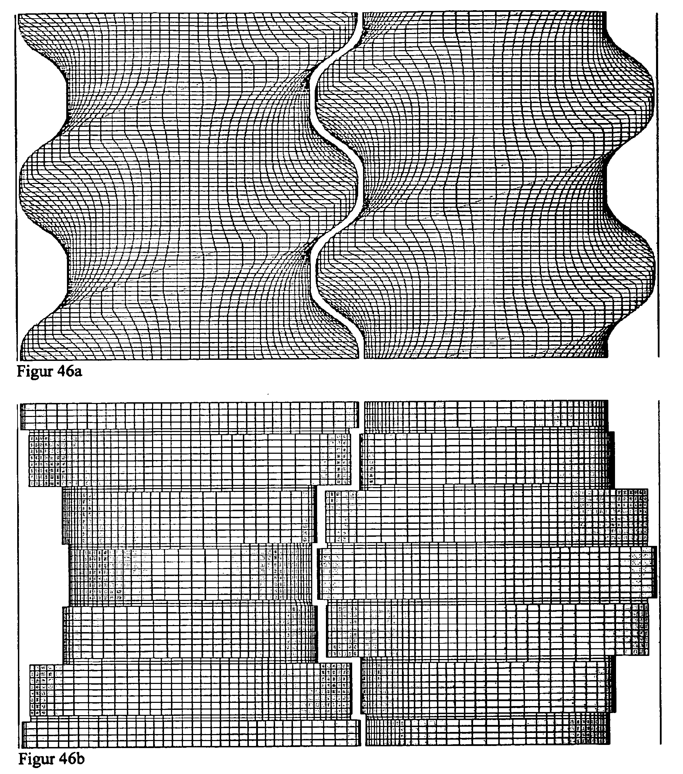

Die **Figur 46a** zeigt beispielhaft ein Paar eines zweigängigen Förderelements, das auf dem Schneckenprofil nach Figur 26a basiert. Der Gehäuseradius beträgt RG=0,58. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 46b** zeigt beispielhaft ein Paar eines zweigängigen Knetelements, das auf dem Schneckenprofil nach Figur 26a basiert. Der Gehäuseradius beträgt RG=0,58. Das Spiel zwischen den Knetscheiben der beiden Knetelemente beträgt S=0,02. Das Spiel zwischen den Knetscheiben der beiden Knetelementen und dem Gehäuse beträgt D=0,01. Das Knetelement besteht aus 7 Knetscheiben, die jeweils um einen Winkel von π/6 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

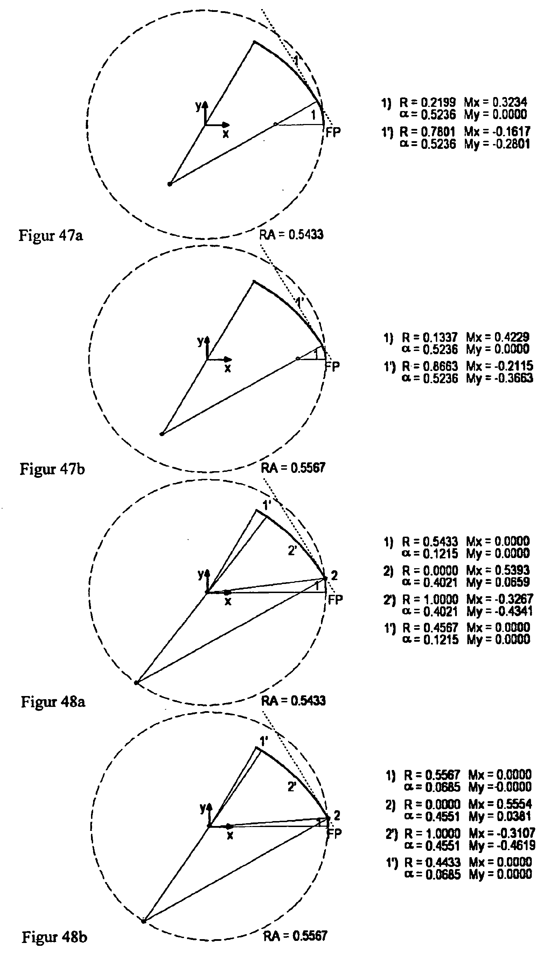

Die Figuren 47 bis 53 beschreiben Schneckenprofile der Gangzahl 3, die nach dem Verfahren zur Erzeugung von dicht kämmenden, selbstreinigenden, gleichsinnig drehenden Schneckenprofilen der Gangzahl z erzeugt werden. In den Figuren 47 bis 49 wird immer ein Sechstel eines Schneckenprofils der Gangzahl 3 gezeigt. Alle diese Figuren weisen einen analogen Aufbau wie die Figuren 1 bis 20 auf, der für diese Figuren bereits im Detail beschrieben wurde.

Die Figuren 47 bis 53 zeigen Schneckenprofile und Schneckenelemente, in denen der dimensionslose Schneckenaußenradius RA die Werte 0,5233, 0,53, 0,5333, 0,5433 und 0,5567 hat. Das erfindungsgemäße Verfahren zur Erzeugung von ebenen, dicht kämmenden, selbstreinigenden, gleichsinnig drehenden Schneckenprofilen der Gangzahl z ist nicht auf diese diskreten Werte des dimensionslosen Schneckenaußenradius limitiert. Unter Anwendung des erfindungsgemäßen Verfahrens können dreigängige Schneckenprofile mit einem dimensionslosen Schneckenaußenradius zwischen RA größer 0,5 und RA kleiner oder gleich 0,577, bevorzugt im Bereich von RA=0,51 bis RA=0,57 erzeugt werden.
**Figur 47****:** Die Figuren 47a und 47b zeigen bevorzugte 2-Kreis-Schneckenprofile. Die Figuren 47a und 47b unterscheiden sich durch den Schneckenaußenradius RA. In der Figur 47a beträgt der Schneckenaußenradius RA=0,5433. In der Figur 47b beträgt der Schneckenaußenradius RA=0,5567. In den Figuren 47a und 47b ist der Radius R_1 des 1. Kreisbogens vom Schneckenaußenradius RA abhängig. In den Figuren 47a und 47b besitzt der 1. Kreisbogen jeweils den Winkel α_1=π/6.
**Figur 48****:** Die Figuren 48a und 48b zeigen bevorzugte 4-Kreis-Schneckenprofile. Die Figuren 48a und 48b unterscheiden sich durch den Schneckenaußenradius RA. In der Figur 48a beträgt der Schneckenaußenradius RA=0,5433. In der Figur 48b beträgt der Schneckenaußenradius RA=0,5567. In den Figuren 48a und 48b besitzt der 1. Kreisbogen jeweils den Radius R_1=RA. In den Figuren 48a und 48b besitzt der 2. Kreisbogen jeweils den Radius R_2=0. In den Figuren 48a und 48b ist der Winkel α_1 des 1. Kreisbogens vom Schneckenaußenradius RA abhängig. In den Figuren 48a und 48b ist der Winkel α_2 des 2. Kreisbogens vom Schneckenaußenradius RA abhängig.

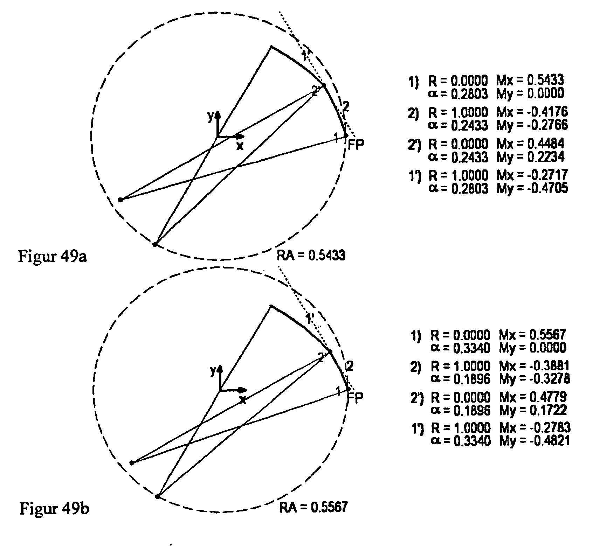

**Figur 49****:** Die Figuren 49a und 49b zeigen weitere bevorzugte 4-Kreis-Schneckenprofile. Die Figuren 49a und 49b unterscheiden sich durch den Schneckenaußenradius RA. In der Figur 49a beträgt der Schneckenaußenradius RA=0,5433. In der Figur 49b beträgt der Schneckenaußenradius RA=0,5567. In den Figuren 49a und 49b besitzt der 1. Kreisbogen jeweils den Radius R_1=0. In den Figuren 49a und 49b besitzt der 2. Kreisbogen jeweils den Radius R_2=A=1. In den Figuren 49a und 49b ist der Winkel α_1 des 1. Kreisbogens vom Schneckenaußenradius RA abhängig. In den Figuren 49a und 49b ist der Winkel α_2 des 2. Kreisbogens vom Schneckenaußenradius RA abhängig.

Die Figuren 47 bis 49 zeigen Schneckenprofile, die analog der Figuren 1 bis 3 für eingängige Schneckenprofile aufgebaut sind. Die Figuren 47 bis 49 zeigen Schneckenprofile, die analog der Figuren 25 bis 27 für zweigängige Schneckenprofile aufgebaut sind. Die in den Figuren 4 bis 19 und in den Figuren 28 bis 42 gezeigten ein- und zweigängigen Schneckenprofile lassen sich analog auf dreigängige Schneckenprofile übertragen. Damit kann auch bei dreigängigen Schneckenprofilen die Größe des Kammbereichs auf vielfältige Art und Weise eingestellt werden. Je nach Wahl des Übergangs zwischen Flanken- und Kammbereich des Schneckenprofils können wie bei den eingängigen und den zweigängigen Schneckenprofilen der auf das viskose Fluid wirkende Dehn- und Scheranteil eingestellt werden.

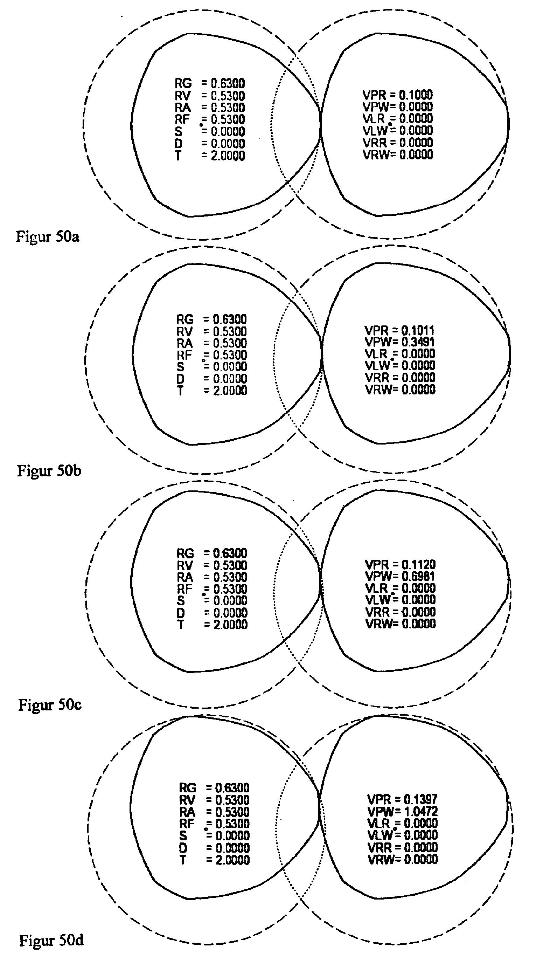

Die Figuren 50 bis 52 zeigen das erzeugende und das erzeugte Schneckenprofil innerhalb eines achtförmigen Schneckengehäuses. Alle diese Figuren weisen den analogen Aufbau wie die Figuren 21 bis 23 auf, der für diese Figuren bereits im Detail beschrieben wurde. Die Zahlenwerte innerhalb der Schneckenprofile sind ebenfalls bereits im Zusammenhang mit den Figuren 21 bis 23 erläutert worden.
**Figur 50****:** Die Figuren 50a bis 50d zeigen bevorzugte Ausführungsformen einer exzentrischen Positionierung dreigängiger Schneckenprofile. Die gezeigten dicht kämmenden, selbstreinigenden Schneckenprofile basieren auf der Figur 48, wobei hier ein Schneckenaußenradius von RA=0,53 gewählt wurde. Der virtuelle Gehäuseradius beträgt RV=0,53 und ist kleiner als der Gehäuseradius RG (RG=0,63). Die weiteren geometrischen Kenngrößen können den einzelnen Figuren entnommen werden. Exzentrisch positionierte, dreigängige, dicht kämmende, selbstreinigende Schneckenprofile sind dadurch charakterisiert, dass der Abstand der Schneckenprofile zum Gehäuse unabhängig von der Richtung der Verschiebung für beide Schneckenprofile immer gleich groß ist. Die Schneckenprofile sind in den Figuren 50a bis 50d jeweils soweit verschoben worden, dass genau ein Punkt der Schneckenprofile das Gehäuse berührt. Die Größe der dazu notwendigen Verschiebung hängt von der Richtung der Verschiebung ab. Es können ferner exzentrische Positionierungen der Schneckenprofile gewählt werden, bei dem kein Punkt der Schneckenprofile das Gehäuse berührt.

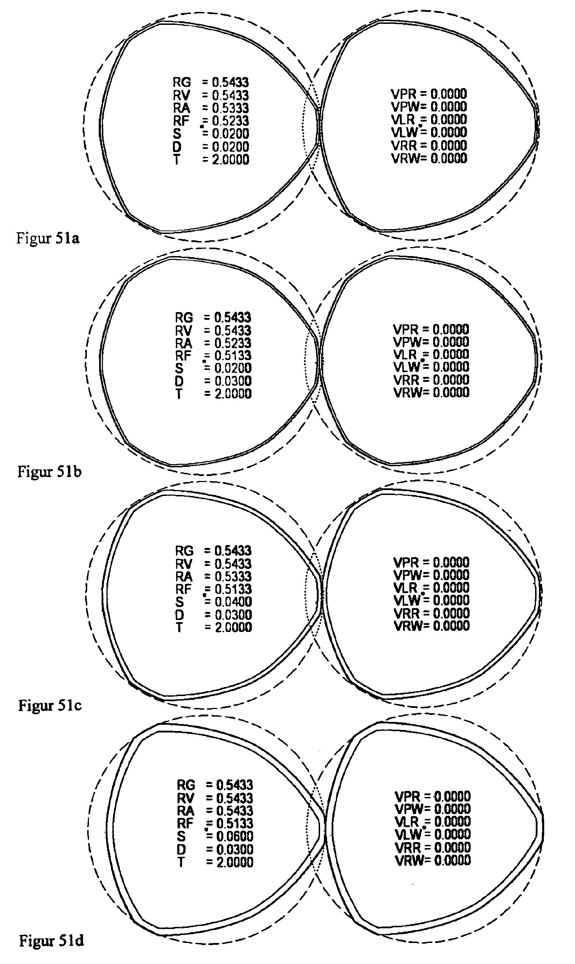

**Figur 51****:** Wie dem Fachmann bekannt ist, benötigen alle Schneckenelemente in der Praxis ein gewisses Spiel und zwar sowohl untereinander als auch gegenüber dem Gehäuse. Wie dem Fachmann bekannt ist und wie es in dem Buch [1] auf den Seiten 28 bis 30 und auf den Seiten 99 bis 105 nachzulesen ist, können Spiele unter anderem nach den Methoden der Achsabstands-Vergrößerung, der Längsschnitt-Äquidistante oder der Raumschnitt-Äquidistante erhalten werden. Üblicherweise wird ein konstantes Spiel längs des Umfangs der Schneckenprofile verwendet. Es ist jedoch auch möglich, dass das Spiel längs des Umfangs des Schneckenprofils variiert wird. Die Figuren 51a bis 51d zeigen verschiedene Spielstrategien. Die gezeigten dicht kämmenden, selbstreinigenden Schneckenprofile basieren auf der Figur 48a. Die weiteren geometrischen Kenngrößen können den einzelnen Figuren entnommen werden. In Figur 51a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 51b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 51c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 51d wird eine weitere Ausführungsform nach Figur 51c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zu fertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

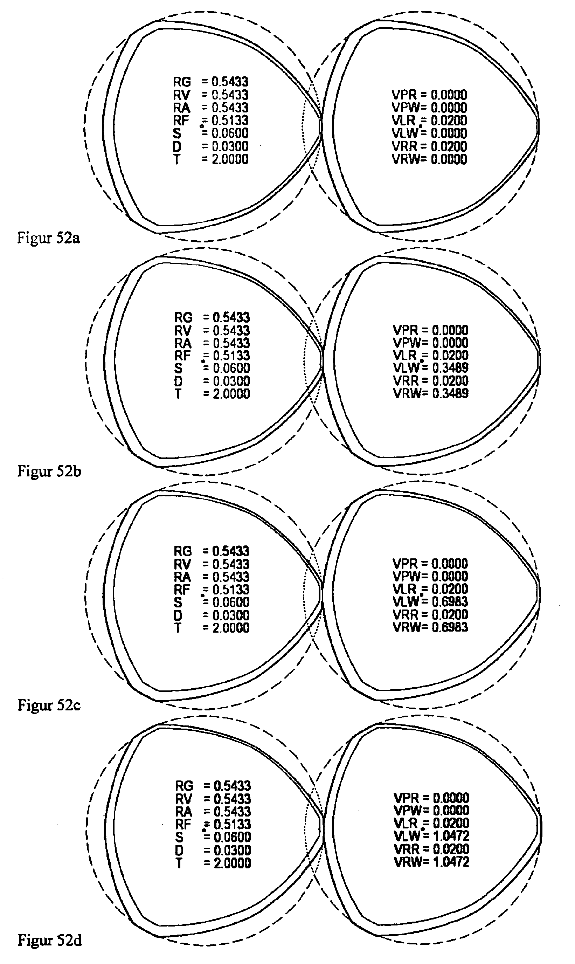

**Figur 52****:** Weiterhin ist es möglich, die zu fertigenden Schneckenprofile innerhalb der Spiele zu verschieben. Die Figuren 52a bis 52d zeigen eine Auswahl möglicher Verschiebungen. Die gezeigten dicht kämmenden, selbstreinigenden Schneckenprofile basieren auf der Figur 48a. Die gezeigten zu fertigenden Schneckenprofile basieren auf der Figur 51d. Die weiteren geometrischen Kenngrößen können den einzelnen Figuren entnommen werden. In den Figuren 52a bis 52d beträgt die Größe der Verschiebung für jeweils beide zu fertigenden Schneckenprofile VLR=VRR=0,02. In den Figuren 52a bis 52d wird die Richtung der Verschiebung für jeweils beide zu fertigende Schneckenprofile zwischen VLW=VRW=0 und VLW=VRW=π/3 schrittweise variiert. Es ist zulässig, die beiden zu fertigenden Schneckenprofile unabhängig voneinander in verschiedene Richtungen und um verschiedene Größen zu verschieben.

Dreigängige Schneckenprofile, die nach dem Verfahren zur Erzeugung von dicht kämmenden, selbstreinigenden, gleichsinnig drehenden Schneckenprofilen der Gangzahl z erzeugt werden, können zur Fertigung von Schneckenelementen verwendet werden. Insbesondere können derartige Schneckenprofile zur Fertigung von Förderelementen, Mischelementen, Knetelementen und Übergangselementen verwendet werden.

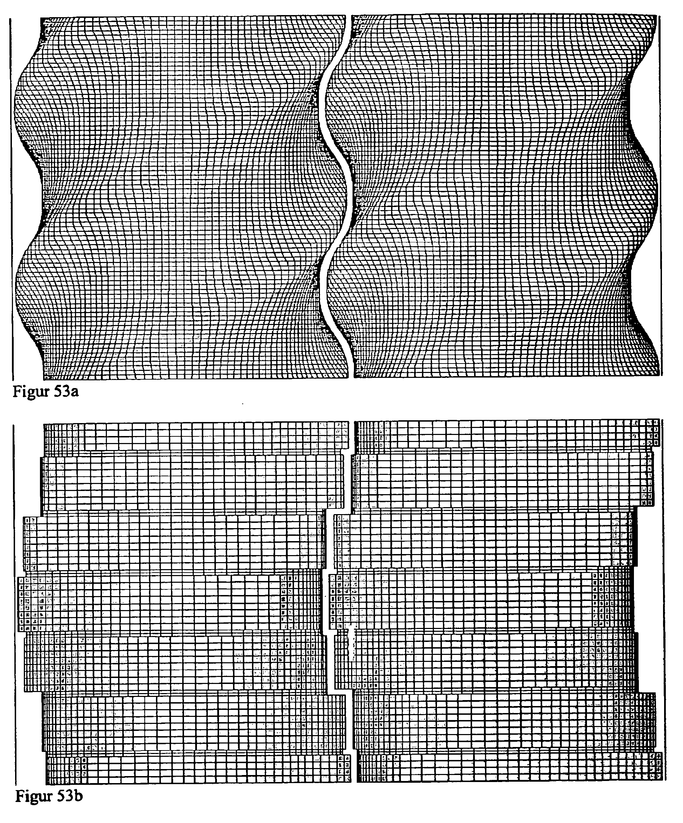

Die **Figur 53a** zeigt beispielhaft ein Paar eines dreigängigen Förderelements, das auf dem Schneckenprofil nach Figur 48a basiert. Der Gehäuseradius beträgt RG=0,5433. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,8. Die Länge der Förderelemente beträgt 1,2, was einer Drehung der Schneckenprofile um einen Winkel von 1,3333*π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 53b** zeigt beispielhaft ein Paar eines dreigängigen Knetelements, das auf dem Schneckenprofil nach Figur 48a basiert. Der Gehäuseradius beträgt RG=0,5433. Das Spiel zwischen den Knetscheiben der beiden Knetelemente beträgt S=0,02. Das Spiel zwischen den Knetscheiben der beiden Knetelementen und dem Gehäuse beträgt D=0,01. Das Knetelement besteht aus 7 Knetscheiben, die jeweils um einen Winkel von π/9 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

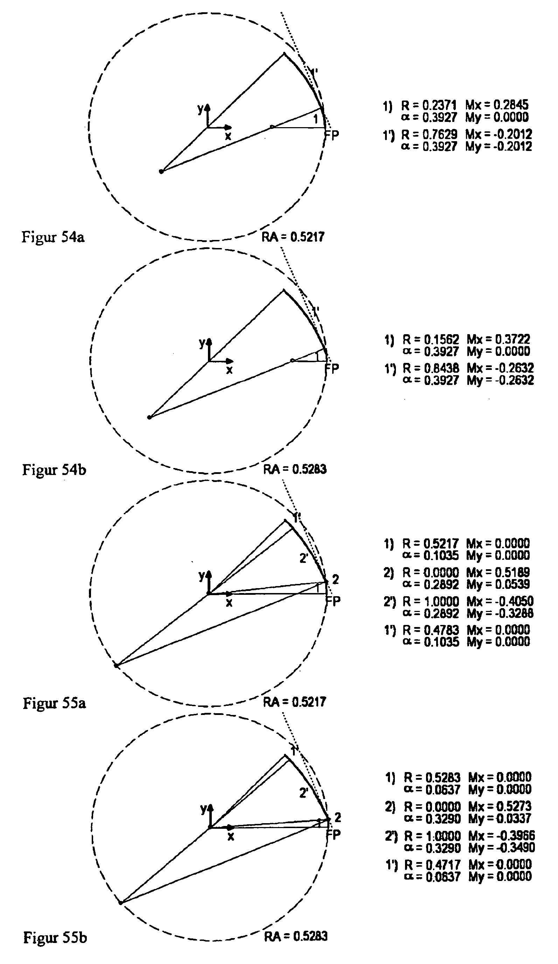

Die Figuren 54 bis 60 beschreiben Schneckenprofile der Gangzahl 4, die nach dem Verfahren zur Erzeugung von dicht kämmenden, selbstreinigenden, gleichsinnig drehenden Schneckenprofilen der Gangzahl z erzeugt werden. In den Figuren 54 bis 56 wird immer ein Achtel eines Schneckenprofils der Gangzahl 4 gezeigt. Alle diese Figuren weisen einen analogen Aufbau wie die Figuren 1 bis 20 auf, der für diese Figuren bereits im Detail beschrieben wurde.

Die Figuren 54 bis 60 zeigen Schneckenprofile und Schneckenelemente, in denen der dimensionslose Schneckenaußenradius RA die Werte 0,5083, 0,515, 0,5183, 0,5217 und 0,5283 hat. Das erfindungsgemäße Verfahren zur Erzeugung von ebenen, dicht kämmenden, selbstreinigenden, gleichsinnig drehenden Schneckenprofilen der Gangzahl z ist nicht auf diese diskreten Werte des dimensionslosen Schneckenaußenradius limitiert. Unter Anwendung des erfindungsgemäßen Verfahrens können viergängige Schneckenprofile mit einem dimensionslosen Schneckenaußenradius zwischen RA größer 0,5 und RA kleiner oder gleich 0,541, bevorzugt im Bereich von RA=0,505 bis RA=0,536 erzeugt werden.
**Figur 54****:** Die Figuren 54a und 54b zeigen bevorzugte 2-Kreis-Schneckenprofile. Die Figuren 54a und 54b unterscheiden sich durch den Schneckenaußenradius RA. In der Figur 54a beträgt der Schneckenaußenradius RA=0,5217. In der Figur 54b beträgt der Schneckenaußenradius RA=0,5283. In den Figuren 54a und 54b ist der Radius R_1 des 1. Kreisbogens vom Schneckenaußenradius RA abhängig. In den Figuren 54a und 54b besitzt der 1. Kreisbogen jeweils den Winkel α_1=π/8.
**Figur 55****:** Die Figuren 55a und 55b zeigen bevorzugte 4-Kreis-Schneckenprofile. Die Figuren 55a und 55b unterscheiden sich durch den Schneckenaußenradius RA. In der Figur 55a beträgt der Schneckenaußenradius RA=0,5217. In der Figur 55b beträgt der Schneckenaußenradius RA=0,5283. In den Figuren 55a und 55b besitzt der 1. Kreisbogen jeweils den Radius R_1=RA. In den Figuren 55a und 55b besitzt der 2. Kreisbogen jeweils den Radius R_2=0. In den Figuren 55a und 55b ist der Winkel α_1 des 1. Kreisbogens vom Schneckenaußenradius RA abhängig. In den Figuren 55a und 55b ist der Winkel α_2 des 2. Kreisbogens vom Schneckenaußenradius RA abhängig.

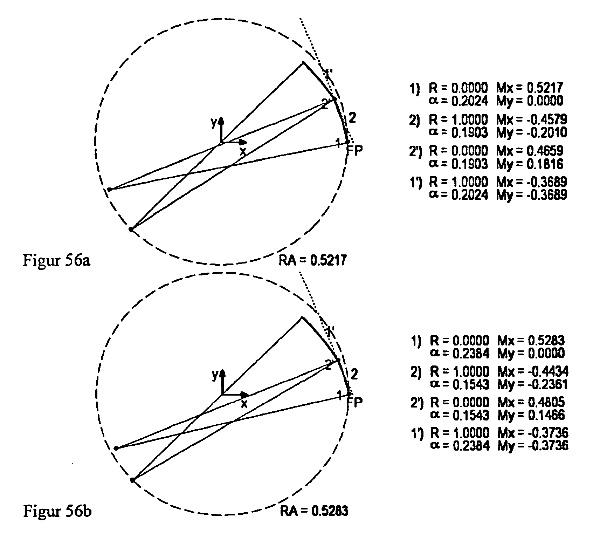

**Figur 56****:** Die Figuren 56a und 56b zeigen weitere bevorzugte 4-Kreis-Schneckenprofile. Die Figuren 56a und 56b unterscheiden sich durch den Schneckenaußenradius RA. In der Figur 56a beträgt der Schneckenaußenradius RA=0,5217. In der Figur 56b beträgt der Schneckenaußenradius RA=0,5283. In den Figuren 56a und 56b besitzt der 1. Kreisbogen jeweils den Radius R_1=0. In den Figuren 56a und 56b besitzt der 2. Kreisbogen jeweils den Radius R_2=A=1. In den Figuren 56a und 56b ist der Winkel α_1 des 1. Kreisbogens vom Schneckenaußenradius RA abhängig. In den Figuren 56a und 56b ist der Winkel α_2 des 2. Kreisbogens vom Schneckenaußenradius RA abhängig.

Die Figuren 54 bis 56 zeigen Schneckenprofile, die analog der Figuren 1 bis 3 für eingängige Schneckenprofile aufgebaut sind. Die Figuren 54 bis 56 zeigen Schneckenprofile, die analog der Figuren 25 bis 27 für zweigängige Schneckenprofile aufgebaut sind. Die Figuren 54 bis 56 zeigen Schneckenprofile, die analog der Figuren 47 bis 49 für dreigängige Schneckenprofile aufgebaut sind. Die in den Figuren 4 bis 19 und in den Figuren 28 bis 42 gezeigten ein- und zweigängigen Schneckenprofile lassen sich analog auf viergängige Schneckenprofile übertragen. Damit kann auch bei viergängigen Schneckenprofilen die Größe des Kammbereichs auf vielfältige Art und Weise eingestellt werden. Je nach Wahl des Übergangs zwischen Flanken- und Kammbereich des Schneckenprofils können wie bei den eingängigen, den zweigängigen und den dreigängigen Schneckenprofilen der auf das viskose Fluid wirkende Dehn- und Scheranteil eingestellt werden.

Wie aus den Figuren 1 bis 20, den Figuren 25 bis 42, den Figuren 47 bis 49 und den Figuren 54 bis 56 hervorgeht, lassen sich die Mittelpunkte der Kreisbögen des zweiten Teils eines z-gängigen Schneckenprofilabschnitts besonders einfach dadurch erhalten, indem die Mittelpunkte der Kreisbögen des ersten Teils eines Schneckenprofilabschnitts an der in den Koordinatenursprung verschobenen Gerade FP gespiegelt werden. In den besagten Figuren ist die Steigung der Geraden FP für eine Gangzahl z=1 gleich 0 und für eine Gangzahl z>1 gleich -1/tan(π/(2*z)), wobei π die Kreiszahl ist.

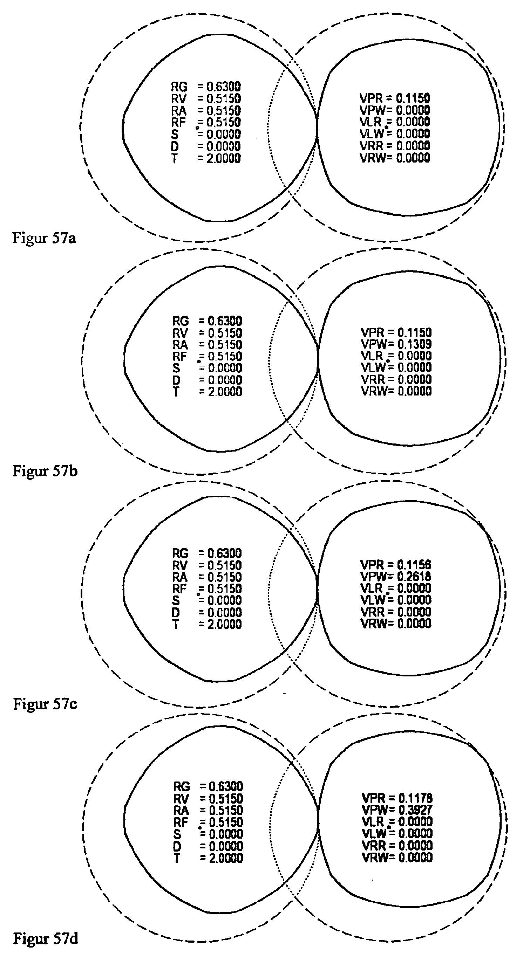

Die Figuren 57 bis 59 zeigen das erzeugende und das erzeugte Schneckenprofil innerhalb eines achtförmigen Schneckengehäuses. Alle diese Figuren weisen den analogen Aufbau wie die Figuren 21 bis 23 auf, der für diese Figuren bereits im Detail beschrieben wurde. Die Zahlenwerte innerhalb der Schneckenprofile sind ebenfalls bereits im Zusammenhang mit den Figuren 21 bis 23 erläutert worden.
**Figur 57****:** Die Figuren 57a bis 57d zeigen bevorzugte Ausführungsformen einer exzentrischen Positionierung viergängiger Schneckenprofile. Die gezeigten dicht kämmenden, selbstreinigenden Schneckenprofile basieren auf der Figur 55, wobei hier ein Schneckenaußenradius von RA=0,515 gewählt wurde. Der virtuelle Gehäuseradius beträgt RV=0,515 und ist kleiner als der Gehäuseradius RG (RG=0,63). Die weiteren geometrischen Kenngrößen können den einzelnen Figuren entnommen werden. Exzentrisch positionierte, viergängige, dicht kämmende, selbstreinigende Schneckenprofile sind dadurch charakterisiert, dass der Abstand der Schneckenprofile zum Gehäuse abhängig von der Richtung der Verschiebung unterschiedlich groß ist. Die Schneckenprofile sind in den Figuren 57a bis 57c jeweils soweit verschoben worden, dass genau ein Punkt des linken Schneckenprofils das Gehäuse berührt. Die Größe der dazu notwendigen Verschiebung hängt von der Richtung der Verschiebung ab. Einen Sonderfall zeigt die Figur 57d, bei dem die Schneckenprofile in Größe und Richtung so verschoben werden, dass beide Schneckenprofile in genau einem Punkt das Gehäuse berühren. Die Verschiebung erfolgt hier unter einem Winkel von π/8. Es können ferner exzentrische Positionierungen der Schneckenprofile gewählt werden, bei dem kein Punkt der Schneckenprofile das Gehäuse berührt.

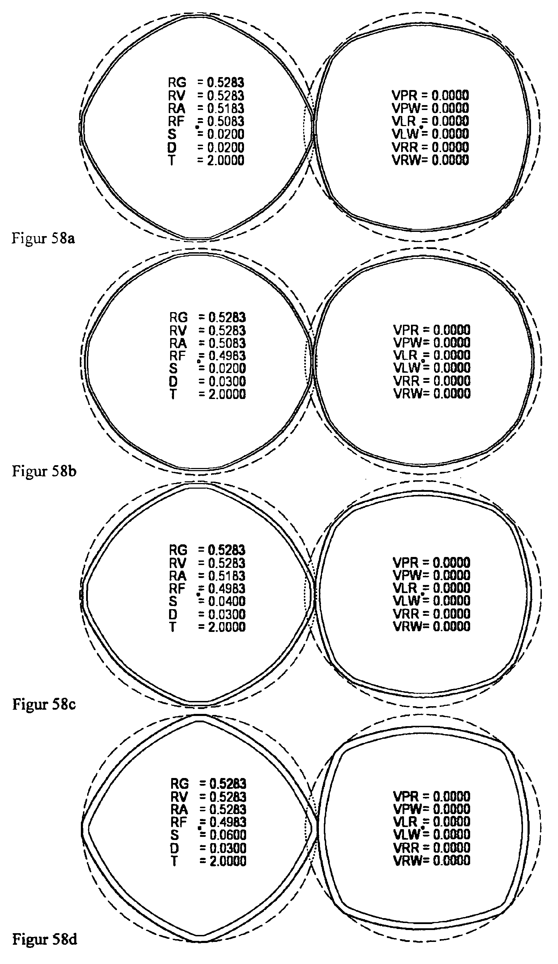

**Figur 58****:** Wie dem Fachmann bekannt ist, benötigen alle Schneckenelemente in der Praxis ein gewisses Spiel und zwar sowohl untereinander als auch gegenüber dem Gehäuse. Die Figuren 58a bis 58d zeigen verschiedene Spielstrategien. Die gezeigten dicht kämmenden, selbstreinigenden Schneckenprofile basieren auf der Figur 55b. Die weiteren geometrischen Kenngrößen können den einzelnen Figuren entnommen werden. In Figur 58a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 58b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 58c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 58d wird eine weitere Ausführungsform nach Figur 58c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

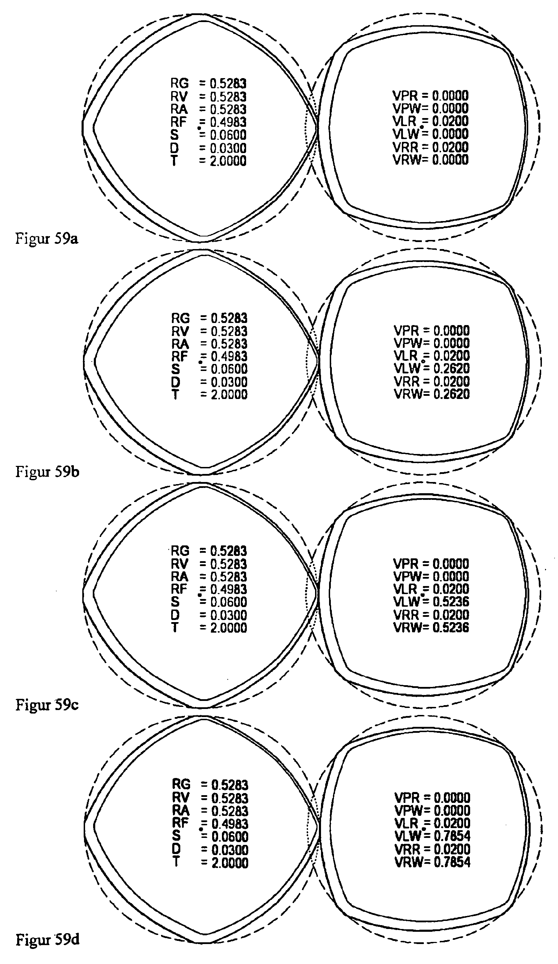

**Figur 59****:** Weiterhin ist es möglich, die zu fertigenden Schneckenprofile innerhalb der Spiele zu verschieben. Die Figuren 59a bis 59d zeigen eine Auswahl möglicher Verschiebungen. Die gezeigten dicht kämmenden, selbstreinigenden Schneckenprofile basieren auf der Figur 55b. Die gezeigten zu fertigenden Schneckenprofile basieren auf der Figur 58d. Die weiteren geometrischen Kenngrößen können den einzelnen Figuren entnommen werden. In den Figuren 59a bis 59d beträgt die Größe der Verschiebung für jeweils beide zu fertigenden Schneckenprofile VLR=VRR=0,02. In den Figuren 59a bis 59d wird die Richtung der Verschiebung für jeweils beide zu fertigende Schneckenprofile zwischen VLW=VRW=0 und VLW=VRW=π/4 schrittweise variiert. Es ist zulässig, die beiden zu fertigenden Schneckenprofile unabhängig voneinander in verschiedene Richtungen und um verschiedene Größen zu verschieben.

Viergängige Schneckenprofile, die nach dem Verfahren zur Erzeugung von dicht kämmenden, selbstreinigenden, gleichsinnig drehenden Schneckenprofilen der Gangzahl z erzeugt werden, können zur Fertigung von Schneckenelementen verwendet werden. Insbesondere können derartige Schneckenprofile zur Fertigung von Förderelementen, Mischelementen, Knetelementen und Übergangselementen verwendet werden.

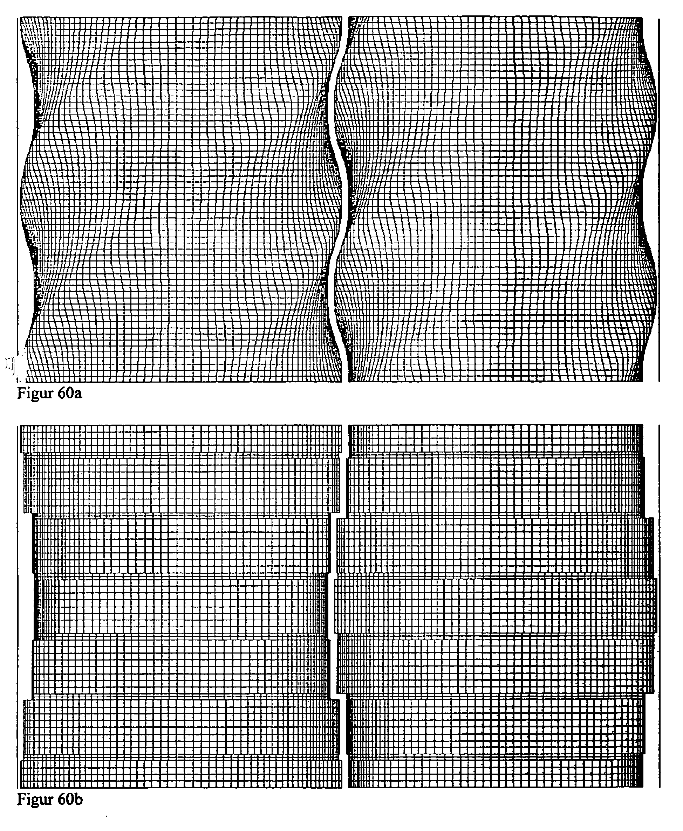

Die Figur 60a zeigt beispielhaft ein Paar eines viergängigen Förderelements, das auf dem Schneckenprofil nach Figur 55a basiert. Der Gehäuseradius beträgt RG=0,5217. Das Spiel zwischen den beiden Förderelementen beträgt S=0,02. Das Spiel zwischen den beiden Förderelementen und dem Gehäuse beträgt D=0,01. Die Steigung der Förderelemente beträgt T=2,4. Die Länge der Förderelemente beträgt 1,2, was einer Drehung der Schneckenprofile um einen Winkel von π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 60b** zeigt beispielhaft ein Paar eines viergängigen Knetelements, das auf dem Schneckenprofil nach Figur 55a basiert. Der Gehäuseradius beträgt RG=0,5217. Das Spiel zwischen den Knetscheiben der beiden Knetelemente beträgt S=0,02. Das Spiel zwischen den Knetscheiben der beiden Knetelementen und dem Gehäuse beträgt D=0,01. Das Knetelement besteht aus 7 Knetscheiben, die jeweils um einen Winkel von π/12 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

Die **Figuren 62a** und **62b** verdeutlichen eine Besonderheit der konkreten Ausführungsform VK1 des erfindungsgemäßen Verfahrens.

Die **Figur 62a** zeigt schematisch die Querschnittsprofile eines Schneckenelementpaares, die mittels der konkreten Ausführungsform VK1 des erfindungsgemäßen Verfahrens erzeugt worden sind. Das erzeugende Schneckenprofil besteht in der Figur aus den 5 Kreisbögen 1, 2, 3, 4 und 5, die gegen den Uhrzeigersinn um den Drehmittelpunkt (den Ursprung des x,y-Koordinatensystems) angeordnet sind. Der Außenradius RA wurde zu RA = 0,63 gewählt. Der Anfangs- und Mittelpunkt des ersten Kreisbogens 1 wurde gemäß der konkreten Ausführungsform VK1 des erfindungsgemäßen Verfahrens auf die x-Achse gelegt. Ausgehend von diesem ersten Kreisbogen 1 wurden die übrigen Kreisbögen des erzeugenden und erzeugten Schneckenprofils konstruiert. Dabei schließt der Kreisbogen 5 das erzeugende Profil und geht erfindungsgemäß tangential in den Kreisbogen 1 über. Kreisbogen 1 und Kreisbogen 5 verfügen über den gleichen Mittelpunkt und den gleichen Radius. Die korrespondierenden Kreisbögen 1' und 5' des erzeugten Schneckenprofils, die sich erfindungsgemäß aus den Kreisbögen 1 und 5 des erzeugenden Schneckenprofils konstruieren lassen, verfügen ebenfalls über den gleichen Mittelpunkt und den gleichen Radius. Die Kreisbögen 1 und 5 mit den Winkeln α_1 und α_5 lassen sich demnach zu einem Kreisbogen mit einem Winkel α_1 + α_5 zusammenfassen. Ebenso lassen sich die korrespondierenden Kreisbögen 1' und 5' des erzeugten Schneckenprofils mit den Winkeln α_1' und α_5' zu einem Kreisbogen mit einem Winkel α_1' + α_5' zusammenfassen. Die Besonderheit, dass durch die Anwendung der Ausführungsform VK1 Schneckenprofile erzeugt werden können, die sich im Nachhinein in der beschriebenen Weise "vereinfachen" lassen, rührt daher, dass in VK1 der Mittelpunkt und der Anfangspunkt des ersten Kreisbogens auf die x-Achse gelegt wird. Bei der erfindungsgemäßen Erzeugung der Schneckenprofile liegt auf der x-Achse ein Berührpunkt von erzeugendem und erzeugtem Schneckenprofil. Die fertigen Schneckenprofile (siehe Figur 62b) verfügen jedoch bei der gleichsinnigen Rotation um ihre jeweiligen Drehmittelpunkte über keinen Berührpunkt, der auf der x-Achse liegt und gleichzeitig ein Anfangs- oder Endpunkt eines profilerzeugenden Kreisbogens ist. Daher wird bei der konkreten Ausführungsform VK1 "hilfsweise" ein Kreisbogen in zwei Kreisbögen geteilt, die nach der Konstruktion wieder zu einem zusammengefügt werden.

Die **Figur 62b** zeigt die "vereinfachte" Konstruktion der Querschnittsprofile aus Figur 62a, bei dem die Kreisbögen 1 und 5 und 1' und 5' aus der Figur 62a zu jeweils einem Kreisbogen 1 und 1' in Figur 62b zusammengefügt wurden. Für die konkrete Ausführungsform VK2 gilt dasselbe.

In den aufgeführten Figuren werden maximal 16 Kreisbögen zur Beschreibung eines erzeugenden oder eines erzeugten Schneckenprofils verwendet. Die erfindungsgemäßen Verfahren V0, VA1, VA2, VA3, VK1 und VK2 sind jedoch keinesfalls auf maximal 16 Kreisbögen beschränkt. Vielmehr können beliebig viele Kreisbögen zur Erzeugung von Schneckenprofilen herangezogen werden. Damit ist es möglich, das Profil einer Schnecke von Grund auf so zu gestalten, dass es für eine vorgegebene Aufgabe optimal geeignet ist. Die nach dem Stand der Technik bekannten Schneckenelemente sind zum größten Teil nicht auf eine konkrete Aufgabe hin optimal gestaltet. Vielmehr liefern die Hersteller Schneckenelemente (Förder-, Knet- und Mischelemente) aus einem festliegenden Baukastensystem unabhängig von einer konkreten Aufgabe. Durch die vorliegende Erfindung ist es erstmalig möglich, das Profil von selbstreinigenden Schneckenelementen nahezu völlig frei zu gestalten und somit auf eine Anwendung hin durch kleinste Variation von Parametern für die jeweilige Anwendung zu optimieren. Daneben ist es möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren. Dabei ist das mittels Kreisbögen approximierte Profile natürlich selbstreinigend.

Aus einem (erzeugenden oder erzeugten) Schneckenprofil lässt sich das Längsschnittprofil berechnen. Bevorzugt wird jeder Kreisbogen eines Schneckenprofils genutzt, um mittels einer expliziten Funktion einen zu diesem Kreisbogen gehörigen Teil des Längsschnitts zu berechnen.

Zur Berechnung des Abstandes s eines Punktes eines Kreisbogens eines Schneckenprofils wird in einem ersten Schritt der Schnittpunkt (Sx, Sy) einer Geraden g, dadurch charakterisiert, dass die besagte Gerade in der Ebene des Schneckenprofils liegt, durch den Drehpunkt des Schneckenprofils führt und die Orientierung der Gerade durch den Winkel ϕ gegeben ist, mit einem Kreisbogen kb, charakterisiert durch seinen Radius r und die Lage seines Mittelpunktes (Mx, My), bestimmt. In einem zweiten Schritt wird der Abstand des Schnittpunktes (Sx, Sy) vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher s=s(ϕ, r, Mx, My). Der Winkel ϕ lässt sich bei bekannter Steigung t eines Schneckenelements über ϕ/2π*t in eine axiale Position z_ax umrechnen, so das für den Abstand s=s(z_ax, r, Mx, My)=s(ϕ/2π*t, r, Mx, My) gilt. Die Funktion s(z_ax, r, Mx, My) beschreibt den gesuchten Längsschnitt für einen Kreisbogen des Schneckenprofils.

## Patentansprüche

1. Verfahren zur Erzeugung von beliebigen ebenen, dicht kämmenden, selbstreinigenden, gleichsinnig drehenden Schneckenprofilen mit einem wählbaren Achsabstand a zwischen den Drehachsen eines erzeugenden und eines erzeugten Schneckenprofils, wobei das erzeugende Schneckenprofil aus n Kreisbögen und das erzeugte Schneckenprofil aus n' Kreisbögen gebildet wird, wobei
- das erzeugende Schneckenprofil und das erzeugte Schneckenprofil in einer Ebene liegen,
- die Drehachse des erzeugenden Schneckenprofils und die Drehachse des erzeugten Schneckenprofils jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird, wobei
- **in Schritt 1**
die Anzahl der Kreisbögen n des erzeugenden Schneckenprofils gewählt wird, wobei n eine ganze Zahl ist, die größer oder gleich 1 ist,
- **in Schritt 2**
ein Außenradius ra des erzeugenden Schneckenprofils gewählt wird, wobei ra einen Wert annehmen kann, der größer als 0 (ra>0) und kleiner oder gleich dem Achsabstand (ra≤a) ist,
- **in Schritt 3**
ein Kernradius ri des erzeugenden Schneckenprafils gewählt wird, wobei ri einen Wert annehmen kann, der größer oder gleich 0 (ri≥0) und kleiner oder gleich ra (ri≤ra) ist,
- **in Schritt 4**
die Kreisbögen des erzeugenden Schneckenprofils entsprechend den nachfolgenden Anordnungsregeln derart angeordnet werden, dass:
o alle Kreisbögen des erzeugenden Schneckenprofils derart tangential ineinander übergehen, dass sich ein geschlossenes, konvexes Schneckenprofil ergibt, wobei ein Kreisbogen, dessen Radius gleich 0 ist, wie ein Kreisbogen behandelt wird, dessen Radius gleich eps ist, wobei eps eine sehr kleine positive reelle Zahl ist, die gegen 0 strebt (eps<<1, eps→0),
o jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
o mindestens einer der Kreisbögen des erzeugenden Schneckenprofils den Außenradius ra des erzeugenden Schneckenprofils berührt,
o mindestens einer der Kreisbögen des erzeugenden Schneckenprofils den Kernradius ri des erzeugenden Schneckenprofils berührt,
- **in Schritt 5**
die Größe eines ersten Kreisbogens des erzeugenden Schneckenprofils, die durch einen Winkel α_1 und einen Radius r_1 festgelegt ist, derart gewählt wird, dass der Winkel α_1 im Bogenmaß größer oder gleich 0 und kleiner oder gleich 2π ist, wobei unter π die Kreiszahl zu verstehen ist (π≈3,14159), und der Radius r_1 größer oder gleich 0 und kleiner oder gleich dem Achsabstand a ist, und die Position dieses ersten Kreisbogens des erzeugenden Schneckenprofils, die sich durch das Positionieren von zwei verschiedenen Punkten dieses ersten Kreisbogens ergibt, entsprechend den besagten Anordnungsregeln festgelegt wird, wobei ein erster zu positionierender Punkt dieses ersten Kreisbogens bevorzugt ein zu diesem ersten Kreisbogen zugehörender Anfangspunkt ist und wobei ein zweiter zu positionierender Punkt dieses ersten Kreisbogens bevorzugt der zu diesem ersten Kreisbogen zugehörende Mittelpunkt ist,
- **in Schritt 6**
die Größen von weiteren n-2 Kreisbögen des erzeugenden Schneckenprofils, die durch die Winkel α_2, ..., α_(n-1) und die Radien r_2, ..., r_(n-1) festgelegt sind, derart gewählt werden, dass die Winkel α_2, ..., α_(n-1) im Bogenmaß größer oder gleich 0 und kleiner oder gleich 2π sind und die Radien r_2, ..., r_(n-1) größer oder gleich 0 und kleiner oder gleich dem Achsabstand a sind, und die Positionen dieser weiteren n-2 Kreisbögen des erzeugenden Schneckenprofils entsprechend den besagten Anordnungsregeln festgelegt sind, **wobei** die Größe eines letzten Kreisbogens des erzeugenden Schneckenprofils, die durch einen Winkel α_n und einen Radius r_n festgelegt ist, dadurch gegeben ist, dass die Summe der n Winkel der n Kreisbögen des erzeugenden Schneckenprofils im Bogenmaß gleich 2π ist, wobei der Winkel α_n im Bogenmaß größer oder gleich 0 und kleiner oder gleich 2π ist, und der Radius r_n das erzeugende Schneckenprofil schließt, wobei der Radius r_n größer oder gleich 0 und kleiner oder gleich dem Achsabstand a ist, und die Position dieses letzten Kreisbogens des erzeugenden Schneckenprofils entsprechend den besagten Anordnungsregeln festgelegt ist, und wobei
- sich die n' Kreisbögen des erzeugten Schneckenprofils aus den n Kreisbögen des erzeugenden Schneckenprofils dadurch ergeben, dass
o die Anzahl der Kreisbögen n' des erzeugten Schneckenprofils gleich der Anzahl der Kreisbögen n des erzeugenden Schneckenprofils ist, wobei n' eine ganze Zahl ist,
o der Außenradius ra' des erzeugten Schneckenprofils gleich der Differenz des Achsabstandes minus des Kernradius ri des erzeugenden Schneckenprofils ist (ra'=a-ri),
o der Kernradius ri' des erzeugten Schneckenprofils gleich der Differenz des Achsabstandes minus des Außenradius ra des erzeugenden Schneckenprofils ist (ri'=a-ra),
o der Winkel α_i' des i'-ten Kreisbogens des erzeugten Schneckenprofils gleich dem Winkel α_i des i-ten Kreisbogens des erzeugenden Schneckenprofils ist, wobei i und i' ganze Zahlen sind, die gemeinsam alle Werte im Bereich von 1 bis zur Anzahl der Kreisbögen n beziehungsweise n' durchlaufen (α_1'=α_1, ..., α_n'=α_n),
o die Summe des Radius r_i' des i'-ten Kreisbogens des erzeugten Schneckenprofils und des Radius r_i des i-ten Kreisbogens des erzeugenden Schneckenprofils gleich dem Achsabstand a ist, wobei i und i' ganze Zahlen sind, die gemeinsam alle Werte im Bereich 1 bis zur Anzahl der Kreisbögen n beziehungsweise n' durchlaufen (r_1'+ r_1=a, ..., r_n'+ r_n=a),
o der Mittelpunkt des i'-ten Kreisbogens des erzeugten Schneckenprofils einen Abstand von dem Mittelpunkt des i-ten Kreisbogens des erzeugenden Schneckenprofils besitzt, der gleich dem Achsabstand a ist, und der Mittelpunkt des i'-ten Kreisbogens des erzeugten Schneckenprofils einen Abstand von dem Drehpunkt des erzeugten Schneckenprofils besitzt, der gleich dem Abstand des Mittelpunkts des i-ten Kreisbogens des erzeugenden Schneckenprotils von dem Drehpunkt des erzeugenden Schneckenprofils ist, und die Verbindungslinie zwischen dem Mittelpunkt des i'-ten Kreisbogens des erzeugten Schneckenprofils und dem Mittelpunkt des i-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei i und i' ganze Zahlen sind, die gemeinsam alle Werte im Bereich 1 bis zur Anzahl der Kreisbögen n beziehungsweise n' durchlaufen (i'=1),
o ein Anfangspunkt des i'-ten Kreisbogens des erzeugten Schneckenprofils in einer Richtung bezogen auf den Mittelpunkt des i'-ten Kreisbogens des erzeugten Schneckenprofils liegt, die entgegengesetzt derjenigen Richtung ist, die ein Anfangspunkt des i-ten Kreisbogens des erzeugenden Schneckenprotils bezogen auf den Mittelpunkt des i-ten Kreisbogens des erzeugenden Schneckenprofils besitzt, wobei i und i' ganze Zahlen sind, die gemeinsam alle Werte im Bereich 1 bis zur Anzahl der Kreisbögen n beziehungsweise n' durchlaufen (i'=i).

2. Verfahren nach Anspruch 1, **dadurch gekennzeichnet, dass** der Schneckenaußenradius ra des erzeugenden Schneckenprofils gleich dem Schneckenaußenradius ra' des erzeugten Schneckenprofils ist und der Kernradius ri des erzeugenden Schneckenprofils gleich dem Kernradius ri' des erzeugten Schneckenprolils ist.

3. Verfahren nach Anspruch 2, **dadurch gekennzeichnet, dass**
- eine Gangzahl z gewählt wird, wobei z eine ganze Zahl ist, die größer oder gleich 1 ist,
- die Anzahl der Kreisbogen n des erzeugenden Schneckenprofils so gewählt wird, dass sie ein ganzes Vielfaches p von 4*z ist,
- das erzeugende Schneckenprofil in 2*z Abschnitte eingeteilt wird, die **dadurch gekennzeichnet sind, dass**
o jeder Abschnitt durch zwei Geraden begrenzt ist, die zueinander einen Winkel im Bogenmaß von π/z bilden und die sich im Drehpunkt des erzeugenden Schneckenprofils schneiden, wobei diese beiden Geraden als Abschnittsgrenzen bezeichnet werden, wobei unter die Kreiszahl zu verstehen ist (π≈3,14159),
o jeder dieser 2*z Abschnitte in einen ersten und einen zweiten Teil untergliedert wird,
o der erste Teil eines Abschnitts aus p Kreisbögen gebildet wird, die in aufsteigender oder absteigender Reihenfolge nummeriert sind,
o zu den p Kreisbögen zugehörige Winkel α_1, ..., α_p so gewählt werden, dass die Summe dieser Winkel gleich π/(2*z) ist, wobei die Winkel α_1, ..., α_p im Bogenmaß größer oder gleich 0 und kleiner oder gleich π/(2*z) sind,
o der zweite Teil eines Abschnitts aus p' Kreisbögen gebildet wird, die in umgekehrter Reihenfolge nummeriert sind, wie die Kreisbögen des ersten Teils eines Abschnitts, wobei p' eine ganze Zahl ist, die gleich p ist,
o zu den p' Kreisbögen zugehörige Winkel α_p', ..., α_1' dadurch bestimmt sind, dass der Winkel α_j' des j'-ten Kreisbogens des zweiten Teils eines Abschnitts gleich dem Winkel α_j des j-ten Kreisbogens des ersten Teils eines Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'= □α_p),
o die Summe des Radius r_j' des j'-ten Kreisbogens des zweiten Teils eines Abschnitts und des Radius r_j des j-ten Kreisbogens des ersten Teils eines Abschnitts gleich dem Achsabstand a ist, wobei j und j' ganze Zahlen sind, die gemeinsam alle Werte im Bereich 1 bis zur Anzahl der Kreisbögen p beziehungsweise p' durchlaufen (r_1'+r_1=a, ..., r_p'+r_p=a),
o ein zu dem Kreisbogen, mit dem das Schneckenprofil im ersten Teil eines Abschnitts beginnt, zugehöriger Mittelpunkt und zugehöriger Anfangspunkt in Abhängigkeit von der Anordnung der Kreisbögen im oder gegen den Uhrzeigersinn auf eine der Abschnittsgrenzen dieses Abschnitts gelegt wird,
o ein zu dem Kreisbogen, mit dem das Schneckenprofil im ersten Teil eines Abschnitts endet, zugehöriger Endpunkt eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des erzeugenden Schneckenprofils in Richtung dieses Abschnitts besitzt, der gleich dem halben Achsabstand ist, wobei die Winkelhalbierende wie die Abschnittsgrenzen durch den Drehpunkt des erzeugenden Schneckenprofils führt.

4. Verfahren nach Anspruch 3, **dadurch gekennzeichnet, dass** ein Schneckenprofilabschnitt in einem der 2*z Abschnitte des erzeugenden Schneckenprofils vorgegeben wird und die übrigen Schneckenprofilabschnitte durch fortlaufende Spiegelung des vorgegebenen Schneckenprofilabschnitts an den Abschnittsgrenzen erzeugt werden.

5. Verfahren nach den Ansprüchen 2 bis 4, **dadurch gekennzeichnet, dass** eingängige Schneckenprofile längs einer Abschnittsgrenze verschoben werden.

6. Verfahren nach Anspruch 1 bis 5, **dadurch gekennzeichnet, dass** die Schneckenprotile exzentrisch angeordnet werden.

7. Verfahren nach einem der Ansprüche 1 bis 6 zur Herstellung von Schneckenelementen.

8. Verfahren nach Anspruch 7, wobei die Schneckenelemente als Mischelemente oder Förderelemente ausgebildet sind, **dadurch gekennzeichnet, dass** sie rechts- oder linksgängig sind und die auf den Achsabstand normierte Steigung im Bereich 0,1 bis 10 liegt und die auf den Achsabstand normierte Länge der Elemente im Bereich 0,1 bis 10 liegt.

9. Verfahren nach Anspruch 7, wobei die Schneckenelemente als Knetelemente ausgebildet sind, **dadurch gekennzeichnet, dass** die Anordnung der Knetscheiben rechts- oder linksgängig oder neutral erfolgt und die auf den Achsabstand normierte Längen der Knetscheiben im Bereich 0,05 bis 10 liegt.

10. Verfahren nach Anspruch 7, **dadurch gekennzeichnet, dass** ein Übergangselement erzeugt wird, indem die Größe und / oder Position eines oder mehrerer Kreisbögen eines ersten erzeugenden Schneckenprofils oder eines ersten erzeugten Schneckenprofils kontinuierlich auf die Größe und / oder Position eines oder mehrerer Kreisbögen eines zweiten erzeugenden Schneckenprofils oder eines zweiten erzeugten Schneckenprofils übergeht, **dadurch gekennzeichnet, dass** das Übergangselement rechts- oder linksgängig ist und die auf den Achsabstand normierte Steigung im Bereich 0,1 bis 10 liegt und die auf den Achsabstand normierte Länge des Elements im Bereich 0,1 bis 10 liegt.

11. Verfahren nach einem der Ansprüche 7 bis 10, **dadurch gekennzeichnet, dass** die Schneckwelemente Spiele aufweisen, wobei das Spiel zwischen den Schnecken im Bereich des 0,002-fachen bis 0,1-fachen des Achsabstandes liegt und das Spiel zwischen Schnecke und Gehäuse im Bereich des 0,002-fachen bis 0,1-fachen des Achsabstandes liegt.

12. Verfahren nach Anspruch 11, **dadurch gekennzeichnet, dass** die Schneckenelemente innerhalb der Spiele exzentrisch verschoben sind.

13. Computerprogrammprodukt mit Programmcode-Mitteln, die auf einem computerlesbaren Datenträger gespeichert sind, um das Verfahren nach einem der Ansprüche 1 bis 12 durchzuführen, wenn das Computerprogrammprodukt auf einem Computer ausgerührt wird.

14. Computerprogrammprodukt nach Anspruch 13, **dadurch gekennzeichnet, dass** die Schneckenprofile zur Erzeugung mindestens eines Rechengitters genutzt werden, auf denen die Strömung in Zwei- und Mehrwellenextrudern berechnet wird, wobei das mindestens eine Rechengitter ein Förderelement, ein Mischelement, ein Knetelement oder ein Übergangselement abbildet.

## Claims

1. Method for generating arbitrary planar, tightly intermeshing, self-cleaning, co-rotating screw profiles with a selectable centre distance of axes a between the rotational axes of a generating and a generated screw profile, wherein the generating screw profile is formed from n circular arcs and the generated screw profile is formed from n' circular arcs, wherein
- the generating screw profile and the generated screw profile are located in one plane,
- the rotational axis of the generating screw profile and the rotational axis of the generated screw profile are in each case perpendicular on the said plane of the screw profiles, wherein the intersecting point of the rotational axis of the generating screw profile with the said plane is designated as the point of rotation of the generating screw profile and the intersecting point of the rotational axis of the generated screw profile with the said plane is designated as the point of rotation of the generated screw profile, wherein
- **in step 1**
the number of circular arcs n of the generating screw profile is selected, n being a whole number that is greater than or equal to 1,
- **in step 2**
an outer radius ra of the generating screw profile is selected, wherein ra can assume a value that is greater than 0 (ra>0) and less than or equal to the centre distance of axes (ra≤a),
- **in step 3**
a core radius ri of the generating screw profile is selected, wherein ri can assume a value that is greater than or equal to 0 (ri≥0) and less than or equal to ra (ri≤ra).
- **in step 4**
the circular arcs of the generating screw profile are arranged corresponding to the following arrangement rules in such a manner that:
o all circular arcs of the generating screw profile merge into one another tangentially in such a manner that a closed, convex screw profile is produced, wherein a circular arc, the radius of which is equal to 0, is treated as a circular arc, the radius of which is equal to eps, wherein eps is a very small positive real number which tends towards 0 (eps<<1, eps→0).
o each of the circular arcs of the generating screw profile lies within or on the boundaries of an annulus with the outside radius ra and the core radius ri, the centre point of which lies on the point of rotation of the generating screw profile,
o at least one of the circular arcs of the generating screw profile touches the outer radius ra of the generating screw profile,
o at least one of the circular arcs of the generating screw profile touches the core radius ri of the generating screw profile,
- **in step 5**
the size of a first circular arc of the generating screw profile, which is fixed by an angle α_1 and a radius r_1, is selected in such a manner that the angle α_1 in the radian measure is greater than or equal to 0 and less than or equal to 2π, wherein π refers to the number of circles (n≈3.14159), and the radius r_1 is greater than or equal to 0 and less than or equal to the centre distance of axes a, and the position of said first circular arc of the generating screw profile, which is produced by the positioning of two different points of said first circular arc, is fixed corresponding to the said arrangement rules, wherein a first point to be positioned of said first circular arc is preferably a starting point associated with said first circular arc and wherein a second point to be positioned of said first circular arc is preferably the centre point associated with said first circular arc,
- **in step 6**
the sizes of further n-2 circular arcs of the generating screw profile, which are fixed by the angles α_2, ..., α_(n-1) and the radii r_2, ..., r_(n-1) , are selected in such a manner that the angles α_2, ..., α_(n-1) in the radian measure are greater than or equal to 0 and less than or equal to 2π and the radii r_2, ..., r_(n-1) are greater than or equal to 0 and less than or equal to the centre distance of axes a, and the positions of said further n-2 circular arcs of the generating screw profile are fixed corresponding to the said arrangement rules, wherein the size of a last circular arc of the generating screw profile, which is fixed by an angle α_n and a radius r_n, is provided by the sum of the n angles of the n circular arcs of the generating screw profile in the radian measures being equal to 2π, wherein the angle α_n in the radian measure is greater than or equal to 0 and less than or equal to 2π, and the radius r_n closes the generating screw profile, wherein the radius r_n is greater than or equal to 0 and less than or equal to the centre distance of axes a, and the position of said last circular arc of the generating screw profile is fixed corresponding to the said arrangement rules, and wherein
- the n' circular arcs of the generated screw profile are produced from the n circular arcs of the generating screw profile by
o the number of circular arcs n' of the generated screw profile being equal to the number of circular arcs n of the generating screw profile, wherein n' is a whole number,
o the outer radius ra' of the generated screw profile being equal to the difference of the centre distance of axes minus the core radius ri of the generating screw profile (ra'=a-ri),
o the core radius ri' of the generated screw profile being equal to the difference of the centre distance of axes minus the outer radius ra of the generating screw profile (ri'=a-ra),
o the angle α_i' of the i'^{th} circular arc of the generated screw profile being equal to the angle α_i of the i^{th} circular arc of the generating screw profile, wherein i and i' are whole numbers which together run through all the values in the range of between 1 and up to the number of the circular arcs n or rather n' (α_1'=α_1, ..., α_n' =α_n) ,
o the sum of the radius r_i' of the i'^{th} circular arc of the generated screw profile and of the radius r_i of the i^{th} circular arc of the generating screw profile being equal to the centre distance of axes a, wherein i and i' are whole numbers which together run through all the values in the range of between 1 and up to the number of circular arcs n or rather n' (r_1' + r_1=a, ..., r_n' + r_n=a ) ,
o the distance between the centre point of the i'^{th} circular arc of the generated screw profile and the mid-point of the i^{th} circular arc of the generating screw profile being equal to the centre distance of axes a, and the distance between the centre point of the i'^{th} circular arc of the generated screw profile and the point of rotation of the generated screw profile being equal to the distance between the centre point of the i^{th} circular arc of the generating screw profile and the point of rotation of the generating screw profile, and the connecting line between the centre point of the i'^{th} circular arc of the generated screw profile and the centre point of the i^{th} circular arc of the generating screw profile being a line parallel to a connecting line between the point of rotation of the generated screw profile and the point of rotation of the generating screw profile, wherein i and i' are whole numbers which together run through all the values in the range of between 1 and the number of circular arcs n or rather n' (i'=i),
o a starting point of the i'^{th} circular arc of the generated screw profile, with reference to the centre point of the i'^{th} circular arc of the generated screw profile, lying in a direction which is opposite to the direction of a starting point of the i^{th} circular arc of the generating screw profile with reference to the centre point of the i^{th} circular arc of the generating screw profile, wherein i and i' are whole numbers which together run through all the values in the range of between 1 and the number of circular arcs n or rather n' (i'=i).

2. Method according to Claim 1, **characterized in that** the screw outside radius ra of the generating screw profile is equal to the screw outside radius ra' of the generated screw profile and the core radius ri of the generating screw profile is equal to the core radius ri' of the generated screw profile.

3. Method according to Claim 2, **characterized in that**
- a number of flights z is selected, wherein z is a whole number which is greater than or equal to 1,
- the number of circular arcs n of the generating screw profile is selected such that it is a whole multiple p of 4*z,
- the generating screw profile is divided into 2*z sections which are **characterized in that**
o each section is defined by two straight lines which together form an angle in the radian measure of π/z and which intersect in the point of rotation of the generating screw profile, wherein said two straight lines are designated as section boundaries, wherein n refers to the number of circles (π≈3.14159),
o each of said 2*z sections is subdivided into a first and a second part,
o the first part of a section is formed from p circular arcs which are numbered in ascending or descending order,
o angles α_1, ..., α_p associated with the p circular arcs are selected such that the-sum of said angles is equal to π/(2*z), wherein the angles α_1, ..., α_p in the radian measure are greater than or equal to 0 and less than or equal to π/(2*z),
o the second part of a section is formed from p' circular arcs which are numbered in the reverse order to the circular arcs of the first part of a section, wherein p' is a whole number which is equal to p,
o angles α_p', ..., α_1' associated with the p' circular arcs are determined **in that** the angle α_j' of the j'^{th} circular arc of the second part of a section is equal to the angle α_j of the j^{th} circular arc of the first part of a section, wherein j and j' are whole numbers which together run through all the values in the range of between 1 and the number of circular arcs p or rather p' (α_1' =α_1, ..., α_p' =□α_p) ,
o the sum of the radius r_j' of the j'^{th} circular arc of the second part of a section and of the radius r_j of the j^{th} circular arc of the first part of a section is equal to the centre distance of axes a, wherein j and j' are whole numbers which together run through all the values in the range of between 1 and the number of circular arcs p or rather p' (r_1' + r_1=a, ..., r_p'+ r_p=a),
o a centre point associated with the circular arc with which the screw profile starts in the first part of a section, and a starting point associated therewith are placed onto one of the section boundaries of said section in dependence on the arrangement of the circular arcs in a clockwise or anti-clockwise manner,
o an end point associated with the circular arc with which the screw profile ends in the first part of a section is tangent to a straight line FP at one point, wherein the straight line FP is perpendicular on the bisector of the two section boundaries of said section and is at a distance from the point of rotation of the generating screw profile in the direction of said section which is equal to half the centre distance of axes, wherein the bisector as the section boundaries leads through the point of rotation of the generating screw profile.

4. Method according to Claim 3, **characterized in that** a screw profile section is preset in one of the 2*z sections of the generating screw profile and the remaining screw profile sections are generated by continuous reflection of the preset screw profile section at the section boundaries.

5. Method according to Claims 2 to 4, **characterized in that** single-flight screw profiles are displaced along a section boundary.

6. Method according to Claim 1 to 5, **characterized in that** the screw profiles are arranged in an eccentric manner.

7. Method according to one of Claims 1 to 6 for producing screw elements.

8. Method according to Claim 7, wherein the screw elements are realized as mixing elements or conveying elements, **characterized in that** they are right-handed or left-handed and the lead which is normalized to the centre distance of axes is in the range of between 0.1 and 10 and the length of the elements which is normalized to the centre distance of axes is in the range of between 0.1 and 10.

9. Method according to Claim 7, wherein the screw elements are realized as kneading elements, **characterized in that** the arrangement of the kneading discs is right-handed or left-handed or neutral and the length of the kneading discs which is normalized to the centre distance of axes is in the range of between 0.05 and 10.

10. Method according to Claim 7, **characterized in that** a transition element is generated by the size and / or the position of one or more circular arcs of a first generating screw profile or of a first generated screw profile transforming in a continuous manner to the size and / or position of one or more circular arcs of a second generating screw profile or a second generated screw profile, **characterized in that** the transition element is right-handed or left-handed and the lead which is normalized to the centre distance of axes is in the range of between 0.1 and 10 and the length of the element which is normalized to the centre distance of axes is in the range of between 0.1 and 10.

11. Method according to one of Claims 7 to 10, **characterized in that** the screw elements have clearances, wherein the clearance between the screws is in the range of between 0.002 times and 0.1 times the centre distance of axes and the clearance between screw and housing is in the range of between 0.002 times and 0.1 times the centre distance of axes.

12. Method according to Claim 11, **characterized in that** the screw elements are displaced in an eccentric manner within the clearances.

13. Computer program product with program code means which are stored on a computer-readable data carrier in order to carry out the method according to one of Claims 1 to 12 when the computer program product is executed on a computer.

14. Computer program product according to Claim 13, **characterized in that** the screw profiles are utilized to generate at least one computational grid, on which the flow in twin-shaft and multi-shaft extruders is calculated, wherein the at least one computational grid represents one conveying element, one mixing element, one kneading element or one transition element.

## Revendications

1. Procédé de formation de profils hélicoïdaux quelconques, plans, étroitement engrenés, autonettoyants et tournant dans le même sens, présentant une distance a sélectionnée par rapport à l'axe de rotation d'un profil hélicoïdal à former et d'un profil hélicoïdal formé, le profil hélicoïdal à former étant formé de n arcs de cercle et le profil hélicoïdal formé étant constitué de n' arcs de cercle,
le profil hélicoïdal à former et le profil hélicoïdal formé étant situés dans un plan,
l'axe de rotation du profil hélicoïdal à former et l'axe de rotation du profil hélicoïdal formé étant tous deux perpendiculaires audit plan des profils hélicoïdaux, le point d'intersection entre l'axe de rotation du profil hélicoïdal à former et ledit plan étant appelé centre de rotation du profil hélicoïdal à former et le point d'intersection entre l'axe de rotation du profil hélicoïdal formé avec ledit plan étant appelé centre de rotation du profil hélicoïdal formé,
et dans ce procédé :
à l'étape 1 le nombre n des d'arcs de cercle du profil hélicoïdal à former est sélectionné, n étant un nombre entier supérieur ou égal à 1,
à l'étape 2
le rayon extérieur ra du profil hélicoïdal à former est sélectionné, ra pouvant prendre une valeur supérieure à 0 (ra > 0) ou inférieure ou égale à la distance à l'axe (ra ≤ a),
à l'étape 3
le rayon d'âme ri du profil hélicoïdal à former est sélectionné, ri pouvant prendre une valeur supérieure ou égale à 0 (ri ≥ 0) et inférieure ou égale à ra (ri ≤ ra),
à l'étape 4
les arcs de cercle du profil hélicoïdal à former sont disposés en suivant des règles de disposition ci-dessous, de telle sorte que
tous les arcs de cercle du profil hélicoïdal à former se prolongent tangentiellement l'un dans l'autre de telle sorte que l'on obtient un profil hélicoïdal convexe fermé, un arc de cercle dont le rayon est égal à 0 étant traité comme arc de cercle dont le rayon vaut eps, eps étant un nombre réel positif très petit qui tend vers 0 (eps « 1, eps → 0),
chacun des arcs de cercle du profil hélicoïdal à former est situé à l'intérieur ou sur la limite d'un anneau circulaire dont le rayon extérieur est ra et le rayon d'âme ri et dont le centre est situé au centre de rotation du profil hélicoïdal à former,
au moins l'un des arcs de cercle du profil hélicoïdal à former est en contact avec le rayon extérieur ra du profil hélicoïdal à former et
au moins l'un des arcs de cercle du profil hélicoïdal à former est en contact avec le rayon d'âme ri du profil hélicoïdal à former,
à l'étape 5
la taille, définie par un angle α_1 et un rayon r_1, d'un premier arc de cercle du profil hélicoïdal à former est sélectionnée de telle sorte que l'angle α_1 soit en termes d'arc supérieur ou égal à 0 et inférieur ou égal à 2π, π étant le nombre caractéristique du cercle (π ≈ 3,14159) et le rayon r_1 étant supérieur ou égal à 0 et inférieur ou égal à la distance a par rapport à l'axe, la position de ce premier arc de cercle du profil hélicoïdal à former obtenu par positionnement de deux points différents de ce premier arc de cercle étant définie conformément auxdites règles de disposition, un premier point à positionner de ce premier arc de cercle étant de préférence un point initial qui fait partie de ce premier arc de cercle, un deuxième point à positionner de ce premier arc de cercle étant de préférence le point central associé à ce premier arc de cercle,
à l'étape 6
les tailles, définies par les angles α_2, ..., α_(n-1) et les rayons r_2, ..., r_(n-1) , des autres n-2 arcs de cercle du profil hélicoïdal à former sont sélectionnés de telle sorte que les angles α_2, ..., α_(n-1) soient en termes d'angle supérieurs ou égaux à 0 et inférieurs ou égaux à 2π, les rayons r_2, ...r_(n-1) étant supérieurs ou égaux à 0 et inférieurs ou égaux à la distance a par rapport à l'axe, les positions de ces autres n-2 arcs de cercle du profil hélicoïdal à former étant définies conformément auxdites règles de disposition, la taille, défini par un angle α_n et un rayon r_n, d'un dernier arc de cercle du profil hélicoïdal à former étant telle que la somme des n angles des n arcs de cercle du profil hélicoïdal à former soit égale à 2π en termes d'angle, l'angle α_n étant en termes d'angle supérieur ou égal à 0 et inférieur ou égal à 2π, le rayon r n formant le profil hélicoïdal à former, le rayon r_n étant supérieur ou égal à 0 et inférieur ou égal à la distance a par rapport à l'axe, la position de ce dernier arc de cercle du profil hélicoïdal à former étant définie conformément auxdites règles de disposition,
les n' arcs de cercle du profil hélicoïdal formé résultant des n arcs de cercle du profil hélicoïdal à former de telle sorte que
le nombre n' des arcs de cercle du profil hélicoïdal formé est égal au nombre n des arcs de cercle du profil hélicoïdal à former, n' étant un nombre entier,
le rayon extérieur ra' du profil hélicoïdal formé est égal à la différence entre la distance par rapport à l'axe et le rayon d'âme ri du profil hélicoïdal à former (ra' = a - ri),
le rayon d'âme ri' du profil hélicoïdal formé est égal à la différence entre la distance à l'axe et le rayon extérieur ra du profil hélicoïdal à former (ri' = a - ra),
l'angle α_i' de l'arc de cercle i' du profilé hélicoïdal formé est égal à l'angle α_i de l'axe de cercle i du profil hélicoïdal à former, i et i' étant des nombres entiers qui balaient conjointement toutes les valeurs comprises dans la plage qui s'étend entre 1 et le nombre n ou n' des arcs de cercle (α_1' = α_1, ..., α_n' = α_n),
la somme du rayon r_i' de l'arc de cercle i' du profil hélicoïdal formé et du rayon r_i de l'arc de cercle i du profil hélicoïdal à former est égale à la distance a par rapport à l'axe, i et i' étant des nombres entiers qui balaient conjointement toutes les valeurs comprises dans la plage qui s'étend entre 1 et n ou n' des arcs de cercle (r_1' + r_1 = a, ..., r_n' + r_n = a),
le centre de l'arc de cercle i' du profil hélicoïdal formé présente par rapport au centre de l'arc de cercle i du profil hélicoïdal à former une distance égale à la distance a par rapport à l'axe et le centre de l'arc de cercle i' du profil hélicoïdal formé présente par rapport au centre du profilé hélicoïdal formé une distance égale à la distance entre le centre de l'arc de cercle i du profil hélicoïdal à former et le centre du profil hélicoïdal à former, la ligne qui relie le centre de l'arc de cercle i' du profil hélicoïdal formé et la centre de l'arc de cercle i du profil hélicoïdal à former étant une parallèle à la ligne qui relie le centre du profil hélicoïdal formé et le centre du profil hélicoïdal à former, i et i' étant des nombres entiers qui balaient conjointement toutes les valeurs comprises dans la plage qui s'étend entre 1 et le nombre n ou n' des arcs de cercle (i' = i),
le point initial de l'arc de cercle i' du profil hélicoïdal formé étant situé par rapport au centre de l'arc de cercle i' du profil hélicoïdal formé dans une direction opposée à la direction entre le point initial de l'arc de cercle i du profil hélicoïdal à former et le centre de l'arc de cercle i du profil hélicoïdal à former, i et i' étant des nombres entiers qui balayent conjointement toutes les valeurs comprises dans la plage qui s'étend entre 1 et le nombre n ou n' des arcs de cercle (i' = i).

2. Procédé selon la revendication 1, **caractérisé en ce que** le rayon extérieur ra du profil hélicoïdal à former est égal au rayon extérieur ra' du profil hélicoïdal formé et **en ce que** le rayon d'âme ri du profil hélicoïdal à former est égal au rayon d'âme ri' du profil hélicoïdal formé.

3. Procédé selon la revendication 2, **caractérisé en ce qu'**un nombre de pas z est sélectionné, z étant un nombre entier supérieur ou égal à 1,
**en ce que** le nombre n des arcs de cercle du profil hélicoïdal à former est sélectionné de telle sorte qu'il soit un multiple entier p de 4*z,
**en ce que** le profil hélicoïdal à former est divisé en 2*z segments **caractérisés en ce que**
chaque segment est délimité par deux droites qui forment l'une par rapport à l'autre un angle de mesure angulaire de π/z et qui se coupent au centre de rotation du profil hélicoïdal à former, ces deux droites étant appelées limites de segment, n représentant le nombre caractéristique du cercle (π ≈ 3,14159),
chacun de ces 2*z segments est divisé en une première et une deuxième partie,
la première partie d'un segment est formée de p arcs de cercle qui sont numérotés en succession croissante ou décroissante,
les angles α_1, ..., α_p associés au p arcs de cercle sont sélectionnés de telle sorte que la somme de ces angles soit égale à π/(2*z), les angles α_1, ..., α_p étant en mesure angulaire supérieurs ou égaux à 0 et inférieurs ou égaux à π/(2*z),
la deuxième partie d'un segment est formée de p' arcs de cercle qui sont numérotés dans la succession inverse des arcs de cercle de la première partie d'un segment, p' étant un nombre entier égal à p,
les angles α_p', ..., α_1' associés aux p' arcs de cercle étant définis de telle sorte que l'angle α_j' de l'arc de cercle j' de la deuxième partie d'un segment soit égal à l'angle α_j de l'arc de cercle j de la première partie d'un segment, j et j' étant des nombres entiers qui balaient conjointement toutes les valeurs comprises dans la plage qui s'étend entre 1 et le nombre p ou p' des arcs de cercle (α_1' = α_1..., α_p' = α_p),
la somme du rayon r_j' de l'arc de cercle j' de la deuxième partie d'un segment et du rayon r_j de l'arc de cercle j de la première partie d'un segment est égale à la distance a par rapport à l'axe, j et j' étant des nombres entiers qui balaient conjointement toutes les valeurs comprises dans la plage qui s'étend entre 1 et le nombre p ou p' des arcs de cercle (r_1' + r_1 = a, ..., r_p' + r_p = a),
le point central associé à l'arc de cercle par lequel le profil hélicoïdal commence dans la première partie d'un segment et le point initial associé est placé conformément à l'agencement des arcs de cercle dans le sens des aiguilles d'une montre ou dans le sens contraire des aiguilles d'une montre sur l'une des limites de ce segment,
un point final associé à l'arc de cercle par lequel le profil hélicoïdal se termine dans la première partie d'un segment est tangent en un point à une droite FP, la droite FP étant perpendiculaire à la bissectrice des deux limites de ce segment et présentant en direction de ce segment une distance par rapport au point central du profil hélicoïdal à former qui est égale à la demi distance par rapport à l'axe, la bissectrice et les limites du segment conduisant au point central du profil hélicoïdal à former.

4. Procédé selon la revendication 3, **caractérisé en ce qu'**un segment de profil hélicoïdal est prédéterminé dans l'un des 2*z segments du profil hélicoïdal à former et **en ce que** les autres segments du profil hélicoïdal sont formés par symétrie progressive du segment prédéterminé de profil hélicoïdal sur les limites des segments.

5. Procédé selon les revendications 2 à 4, **caractérisé en ce que** des profils hélicoïdaux à un pas sont décalés le long d'une limite de segment.

6. Procédé selon les revendications 1 à 5, **caractérisé en ce que** les profilés hélicoïdaux sont disposés en position décentrée.

7. Procédé selon l'une des revendications 1 à 6, destiné à fabriquer des éléments hélicoïdaux.

8. Procédé selon la revendication 7, dans lequel les éléments hélicoïdaux sont configurés comme éléments de mélange ou éléments de transport, **caractérisé en ce qu'**ils présentent un pas droit ou gauche, **en ce que** le pas normalisé par rapport à la distance à l'axe est compris dans la plage de 0,1 à 10 et **en ce que** la longueur des éléments, normalisée par rapport à la distance à l'axe, est comprise dans la plage de 0,1 à 10.

9. Procédé selon la revendication 7, dans lequel les éléments hélicoïdaux sont configurés comme éléments de pétrissage, **caractérisé en ce que** l'agencement des disques de pétrissage est à pas droit, à pas gauche ou neutre et **en ce que** la longueur des disques de pétrissage, normalisée par rapport à la distance à l'axe, est comprise dans la plage de 0,05 à 10.

10. Procédé selon la revendication 7, **caractérisé en ce qu'**un élément de transition est formé par transition continue entre la taille et/ou la position d'un ou de plusieurs arcs de cercle d'un premier profil hélicoïdal à former ou d'un premier profil hélicoïdal formé et la taille et/ou la position d'un ou plusieurs arcs de cercle d'un deuxième profil hélicoïdal à former ou d'un deuxième profil hélicoïdal formé, **caractérisé en ce que** l'élément de transition est à pas droit ou à pas gauche et **en ce que** le pas normalisé par rapport à la distance à l'axe est compris dans la plage de 0,1 à 10 et **en ce que** la longueur des éléments, normalisée par rapport à la distance à l'axe, est comprise dans la plage de 0, 1 à 10.

11. Procédé selon l'une des revendications 7 à 10, **caractérisé en ce que** les éléments hélicoïdaux présentent un jeu, le jeu entre les hélices étant compris dans la plage de 0,002 fois à 0,1 fois la distance par rapport à l'axe et le jeu entre l'hélice et le boîtier étant compris dans la plage de 0,002 fois à 0,1 fois la distance par rapport à l'axe.

12. Procédé selon la revendication 11, **caractérisé en ce que** les éléments hélicoïdaux sont décalés excentriquement à l'intérieur du jeu.

13. Produit de programme informatique doté de moyens de code de programme qui sont conservés sur un support de données lisibles par ordinateur, en vue d'exécuter le procédé selon l'une des revendications 1 à 12 lorsque le produit de programme informatique est exécuté sur un ordinateur.

14. Produit de programme informatique selon la revendication 13, **caractérisé en ce que** les profils hélicoïdaux sont utilisés pour former au moins une grille de calcul par laquelle l'écoulement dans des extrudeuses à deux ou plusieurs arbres est calculé, la ou les grilles de calcul formant la représentation d'un élément de transport, d'un élément de mélange, d'un élément de pétrissage ou d'un élément de transition.
